# EUROPEAN PATENT APPLICATION

(11) **EP 4 708 804 A1**
(43) Date of publication of application: **11.03.2026**
(21) Application number: 24822817.3
(22) Date of filing: 14.06.2024
(51) Int. Cl.: H04L 45/00

(54) **INFORMATION NOTIFICATION METHOD AND APPARATUS**

(30) Priority: 16.06.2023 CN 202310726065; 16.06.2023 CN 202310725238; 30.06.2023 CN 202310801479; 30.06.2023 CN 202310802325
(71) Applicant: Huawei Technologies Co., Ltd., Shenzhen, Guangdong 518129 (CN)
(72) Inventor: SHENG, Cheng, Shenzhen, Guangdong 518129 (CN); ZHUANG, Shunwan, Shenzhen, Guangdong 518129 (CN); WANG, Haibo, Shenzhen, Guangdong 518129 (CN); TIAN, Tao, Shenzhen, Guangdong 518129 (CN); HU, Di, Shenzhen, Guangdong 518129 (CN); PANG, Donglei, Shenzhen, Guangdong 518129 (CN); YANG, Pingan, Shenzhen, Guangdong 518129 (CN)
(74) Representative: MERH-IP Matias Erny Reichl Hoffmann Patentanwälte PartG mbB
(86) International application number: PCT/CN2024/099335
(87) International publication number: WO 2024/255870

(57) **Abstract**

Embodiments of this application disclose an information advertisement method. The method may be applied to a first communication apparatus used as a first site edge. The first communication apparatus may receive a first route advertised by a second communication apparatus, and obtain a first binding relationship between a second site edge and a first backbone network egress device based on the first route, where the first route includes that the first backbone network egress device in a backbone network accesses the backbone network, and the first site edge accesses the backbone network via a first backbone network ingress device. It can be learned that according to the solutions in embodiments of this application, the first site edge can obtain the first binding relationship, to help subsequently orchestrate an end-to-end path from the first site edge to the second site edge based on the first binding relationship, so that an end-to-end path obtained through the orchestration better satisfies a service requirement. Accordingly, quality of service provided for service traffic transmitted through the end-to-end path can be improved.

## Description

This application claims priorities to the following patent applications, which are incorporated herein by reference in their entireties:
1. Chinese Patent Application No. 202310726065.3, filed with the China National Intellectual Property Administration on June 16, 2023 and entitled "INFORMATION ADVERTISEMENT METHOD AND APPARATUS";
2. Chinese Patent Application No. 202310725238.X, filed with the China National Intellectual Property Administration on June 16, 2023 and entitled "PACKET FORWARDING METHOD AND APPARATUS";
3. Chinese Patent Application No. 202310801479.8, filed with the China National Intellectual Property Administration on June 30, 2023 and entitled "INFORMATION ADVERTISEMENT METHOD AND APPARATUS"; and
4. Chinese Patent Application No. 202310802325.0, filed with the China National Intellectual Property Administration on June 30, 2023 and entitled "TRAFFIC FORWARDING METHOD AND APPARATUS".

### TECHNICAL FIELD

This application relates to the communication field, and in particular, to an information advertisement method and an apparatus.

### BACKGROUND

With development of communication technologies, in some scenarios, transmission of service traffic needs to be performed across a plurality of network domains in a network. For example, in scenarios such as enterprise migration to multi-cloud, enterprise branch interconnection, and user access to a related service, transmission of the service traffic needs to be performed across an edge access network and a backbone network.

Currently, in the scenario in which transmission of the service traffic needs to be performed across the plurality of network domains, quality of service provided by the network for the service traffic cannot satisfy a service requirement. Therefore, a solution is urgently needed to resolve the foregoing problem.

### SUMMARY

Embodiments of this application provide an information advertisement method and an apparatus, to improve quality of service provided for service traffic in a scenario in which transmission of the service traffic needs to be performed across a plurality of network domains.

According to a first aspect, an embodiment of this application provides an information advertisement method. The method may be applied to a first communication apparatus used as a first site edge (edge). The first communication apparatus may receive a first route advertised by a second communication apparatus, where the first route includes that a first backbone network egress device in a backbone network accesses the backbone network, and the first site edge accesses the backbone network via a first backbone network ingress device. After receiving the first route, the first site edge may obtain a first binding relationship between the second site edge and the first backbone network egress device based on the first route. The first site edge may orchestrate an end-to-end path from the first site edge to the second site edge by using the first binding relationship. It can be learned that according to the solution in this embodiment of this application, the first site edge can obtain the first binding relationship between the second site edge and the first backbone network egress device via which the second site edge accesses the backbone network, to help subsequently orchestrate the end-to-end path from the first site edge to the second site edge based on the first binding relationship, so that an end-to-end path obtained through the orchestration better satisfies a service requirement. Accordingly, quality of service provided for service traffic transmitted through the end-to-end path can be improved.

In a possible implementation, after obtaining the first binding relationship, the first site edge may determine a first end-to-end path from the first site edge to the second site edge based on the first binding relationship, where the determined first end-to-end path passes through the first backbone network ingress device and the first backbone network egress device. It can be learned that the first site edge can orchestrate, by using this solution, the end-to-end path based on information about a backbone network egress device bound to a peer site edge (the second site edge), so that the end-to-end path obtained through the orchestration better satisfies the service requirement. Accordingly, the quality of service provided for the service traffic transmitted through the end-to-end path can be improved.

In a possible implementation, the first information may include a first segment identifier (segment identifier, SID) allocated by the first backbone network egress device for an adjacency relationship between the first backbone network egress device and the second site edge, so that in a subsequent traffic forwarding stage, a packet can be encapsulated based on the first SID, to perform traffic forwarding based on the first SID.

In a possible implementation, the first information may include a second SID of the first backbone network egress device, so that in a subsequent traffic forwarding stage, a packet can be encapsulated based on the second SID, to perform traffic forwarding based on the second SID.

In a possible implementation, the first information may include a routing priority of the first backbone network egress device, so that the first site edge can orchestrate, according to the routing priority, the end-to-end path from the first site edge to the second site edge, or the first site edge can determine, according to the routing priority, an end-to-end path for transmission of the service traffic in the end-to-end path from the first site edge to the second site edge.

In a possible implementation, the first information may include a load balancing weight of the first backbone network egress device, so that the first site edge can determine, based on the load balancing weight, an end-to-end path for transmission of the service traffic in the end-to-end path from the first site edge to the second site edge.

In a possible implementation, if the first site edge supports forwarding performed by using a segment routing internet protocol version 6 (Segment Routing Internet Protocol Version 6, SRv6) technology, the first SID may be an SRv6 endpoint segment identifier with cross-connect to an array of layer-3 adjacency relationships (SRv6 END.X SID), and the second SID may be an SRv6 endpoint segment identifier (SRv6 END.SID).

In a possible implementation, if the first site edge supports forwarding performed by using a multiprotocol label switching (Multiprotocol Label Switching, MPLS) technology, the first SID may be an adjacency segment identifier (adjacency SID, adj-SID), and the second SID may be a node SID (node SID).

In a possible implementation, the second communication apparatus may be the second site edge. In this case, the first route may be a software-defined wide area network (software-defined wide area network, SD-WAN) gateway information advertisement route. The SD-WAN gateway information advertisement route may be a route advertised based on an SD-WAN address family or an SD-WAN subsequent address family. In an example, the SD-WAN gateway information advertisement route includes at least one type length value (type length value, TLV), and the at least one TLV carries the first information.

In a possible implementation, the at least one TLV included in the SD-WAN gateway information advertisement route may include a first TLV, and the first TLV is for carrying the first information. In a specific example, when the first information includes the first SID and/or the second SID, a value field in the first TLV is for carrying the first SID and/or the second SID in the first information. When the first information further includes the routing priority, the first TLV may further include a priority sub-TLV for carrying the routing priority. When the first information further includes the load balancing weight, the first TLV further includes a weight sub-TLV for carrying the load balancing weight.

In a possible implementation, the second communication apparatus is the second site edge, and the first route is a virtual private network (virtual private network, VPN) route. In this case, the second site edge may advertise the first information to the first site edge through VPN route, to advertise the first information while advertising the VPN route.

In a possible implementation, the first information may be carried by using a BGP path attribute in the VPN route. In a specific example, the first information may be carried by using a first metadata path attribute (Metadata Path Attribute) in the VPN route.

In a possible implementation, the first route may further include service intention information. The service intention indicates a service intention (or the service requirement). The second communication apparatus advertises the service intention information to the first site edge through the first route, so that in the traffic forwarding stage, a communication apparatus for forwarding the service traffic can perform forwarding based on the service intention information. In this way, the service intention can be satisfied.

In a possible implementation, the service intention information may include one or more types of information that can indicate the service intention. In an example, the service intention information may include a quality of service parameter, and the quality of service parameter includes but is not limited to one or more parameters in a delay, a packet loss, a jitter, bandwidth utilization, a bit error rate, and the like. In another example, the service intention parameter may include gateway constraint information that needs to be satisfied by the end-to-end path from the first site edge to the second site edge, and the gateway constraint information includes but is not limited to a gateway that needs to be included and/or a gateway that needs to be excluded.

In a possible implementation, the service intention information may be carried by using the BGP path attribute in the first route. In a specific example, the service intention information may be carried by using a second metadata path attribute in the first route. When the first route is the VPN route, the second metadata path attribute and the first metadata path attribute may be a same metadata path attribute. In this case, the first information and the service intention information may be carried by using one metadata path attribute. Certainly, the second metadata path attribute and the first metadata path attribute may alternatively be different metadata path attributes.

In a possible implementation, the second communication apparatus is the first backbone network egress device. In this case, the first backbone network egress device may advertise the first route to the first site edge via the first backbone network ingress device. Accordingly, the first site edge may receive, via the first backbone network ingress device, the first route advertised by the first backbone network egress device.

In a possible implementation, the first route advertised by the first backbone network egress device to the first site edge may be a first SD-WAN gateway auto-discovery route. The first SD-WAN gateway auto-discovery route may be a route advertised based on an SD-WAN address family or an SD-WAN subsequent address family.

In a possible implementation, when the second site edge is multi-homed to the first backbone network egress device and a second backbone network egress device, the first site edge may further receive a second route advertised by a third communication apparatus, where the second route includes second information about the second backbone network egress device in the backbone network and the identifier of the second site edge, and the second site edge accesses the backbone network via the second backbone network egress device. After receiving the second route, the first site edge may obtain a second binding relationship between the second site edge and the second backbone network egress device based on the second route, to help subsequently determine a second end-to-end path from the first site edge to the second site edge based on the second binding relationship.

In a possible implementation, the first site edge may further determine routing priorities respectively corresponding to the first backbone network egress device and the second backbone network egress device, to help subsequently determine a forwarding path of the service traffic based on the routing priorities respectively corresponding to the first backbone network egress device and the second backbone network egress device. In an example, the first site edge may determine the routing priority of the first backbone network egress device according to a routing policy configured for the first site edge or based on a load status of the first backbone network egress device. In another example, the first site edge may determine the routing priority of the second backbone network egress device according to a routing policy configured for the first site edge or based on a load status of the second backbone network egress device.

In a possible implementation, the first site edge may further determine load balancing weights respectively corresponding to the first backbone network egress device and the second backbone network egress device, to help subsequently determine a forwarding path of the service traffic based on the load balancing weights respectively corresponding to the first backbone network egress device and the second backbone network egress device. In an example, the first site edge may determine the load balancing weight of the first backbone network egress device according to a load balancing policy configured for the first site edge or based on a load status of the first backbone network egress device. In another example, the first site edge may determine the load balancing weight of the second backbone network egress device according to a load balancing policy configured for the first site edge or based on a load status of the second backbone network egress device.

In a possible implementation, after obtaining the second binding relationship, the first site edge may determine a second end-to-end path from the first site edge to the second site edge based on the second binding relationship, where the determined second end-to-end path passes through the first backbone network ingress device and the second backbone network egress device. It can be learned that the first site edge can orchestrate, by using this solution, the end-to-end path based on the information about the backbone network egress device bound to the peer site edge (the second site edge), so that the end-to-end path obtained through the orchestration better satisfies the service requirement. Accordingly, the quality of service provided for the service traffic transmitted through the end-to-end path can be improved.

In a possible implementation, the first site edge may further receive a third route sent by the first backbone network ingress device, where the third route is for advertising third information of the first backbone network ingress device. After receiving the third route, the first site edge may obtain a third binding relationship between the first site edge and the first backbone network ingress device based on the third route. It can be learned that the first site edge can determine, by using the received third route by using this solution, a gateway corresponding to the first site edge, and the gateway corresponding to the first site edge does not need to be configured on the first site edge in a manual configuration manner.

In a possible implementation, the third route is a second SD-WAN gateway auto-discovery route. In this case, the first site edge may determine, by using the second SD-WAN gateway auto-discovery route, third information of a gateway (namely, the first backbone network ingress device) via which the first site edge accesses the backbone network. The second SD-WAN gateway auto-discovery route may be a route advertised based on the SD-WAN address family or the SD-WAN subsequent address family.

In a possible implementation, the third route is a border gateway protocol link state (BGP link state, BGP-LS) route. In this case, the first site edge may determine, by using the BGP-LS route, third information of a gateway (namely, the first backbone network ingress device) via which the first site edge accesses the backbone network. The BGP-LS route may be a route advertised based on a BGP-LS address family.

In a possible implementation, the third information may include a third SID allocated by the first backbone network ingress device for an adjacency relationship between the first backbone network ingress device and the first site edge, so that in the subsequent traffic forwarding stage, the packet is encapsulated based on the third SID, to perform traffic forwarding by using the third SID.

In a possible implementation, the third information may include a fourth SID of the first backbone network ingress device, so that in the subsequent traffic forwarding stage, the packet is encapsulated based on the third SID, to perform traffic forwarding by using the third SID.

In a possible implementation, if the first site edge supports the forwarding performed by using the SRv6 technology, the third SID may be an SRv6 END.X SID, and the fourth SID may be an SRv6 END.SID.

In a possible implementation, if the first site edge supports the forwarding performed by using the MPLS technology, the third SID may be an adj-SID, and the fourth SID may be a node SID.

In a possible implementation, the third route further includes transit-gateway information, and the transit-gateway information indicates at least one transit gateway between the backbone network ingress device in the backbone network and an egress device in the backbone network, so that the first site edge performs path orchestration based on the transit gateway. In an example, the first site edge may determine, based on the service requirement and the transit gateway, a gateway constraint condition that needs to be followed by the end-to-end path. The gateway constraint condition mentioned herein includes the gateway that needs to be included and/or the gateway that needs to be excluded. In a specific example, when performing path orchestration based on the service requirement, the first site edge may determine, in the transit gateway, the gateway that needs to be included by the end-to-end path and/or the gateway that needs to be excluded by the end-to-end path, so that the determined end-to-end path satisfies the service requirement.

In a possible implementation, the first site edge may further receive a first service packet. After receiving the first service packet, the first site edge may encapsulate path information of the first end-to-end path at an outer layer of the first service packet, to obtain a second service packet, where an ingress endpoint of the first end-to-end path is the first site edge, an egress endpoint of the first end-to-end path is the second site edge, the path information of the first end-to-end path includes fourth information identifying the first backbone network ingress device in the backbone network and fifth information identifying the first backbone network egress device in the backbone network, the first site edge accesses the backbone network via the first backbone network ingress device, and the second site edge accesses the backbone network via the first backbone network egress device. After obtaining the second service packet, the first site edge may forward the second service packet through the first end-to-end path. It can be learned that the site edge can orchestrate, by using this solution, the first end-to-end path that crosses the backbone network, and a device in the backbone network does not need to determine a transmission path based on a service configuration, so that the backbone network does not need to sense a service. In this way, service traffic forwarding efficiency is improved. In addition, because the backbone network does not need to sense the service, service-related configuration does not need to be performed on the device in the backbone network, so that service provisioning efficiency is improved, and accordingly, scalability of the backbone network is improved.

In a possible implementation, the first end-to-end path may be pre-orchestrated by the first site edge. In a specific example, the first site edge may orchestrate the first end-to-end path before receiving the first service packet. In a specific example, the first service packet is for carrying a virtual private network (virtual private network, VPN) service. In this case, the first site edge may orchestrate the first end-to-end path from the first site edge to the second site edge by using the first backbone network ingress device and the first backbone network egress device on demand based on the VPN service. In an example, after receiving a VPN route that includes a destination prefix and that is advertised by the second site edge, the first site edge may orchestrate an end-to-end path for the VPN route. In a specific example, the first site edge may orchestrate the first end-to-end path for the VPN route based on a binding relationship between the first site edge and the first backbone network ingress device and the binding relationship between the second site edge and the first backbone network egress device.

In a possible implementation, the second service packet may further include service intention information. In this way, after the first site edge sends the second service packet, when a forwarding device that receives the second service packet further forwards the second service packet, a corresponding path can be selected based on the service intention information to perform forwarding, so that a service intention is satisfied, and accordingly, quality of service provided for the service is improved.

In a possible implementation, the second service packet may include a metadata (metadata) field, and the service intention information is carried in the metadata field. The forwarding device that receives the second service packet may parse the metadata field, to obtain the service intention information, so that the corresponding path can be further selected based on the service intention information to perform forwarding, so that the service intention is satisfied, and accordingly, the quality of service provided for the service is improved.

In a possible implementation, before encapsulating the first service packet by using the path information of the first end-to-end path, the first site edge may first determine the path information of the first end-to-end path. In a specific example, the first site edge may determine, based on a destination address in the first service packet, that a next hop for forwarding the first service packet is the second site edge, and further, iterate a first segment routing policy (segment routing policy, SR policy) based on an internet protocol (Internet Protocol, IP) address of the second site edge, to obtain the path information of the first end-to-end path.

In a possible implementation, the first SR policy may be a segment routing internet protocol version 6 (Segment Routing Internet Protocol Version 6, SRv6) policy. In this case, the first end-to-end path may be an SRv6 tunnel. Accordingly, the second service packet includes an IPv6 header and a segment routing header (segment routing header, SRH), and the fourth information and the fifth information may be carried by using the SRH. In addition, a destination address in the IPv6 header points to the first backbone network ingress device, so that the first site edge forwards the second service packet to the first backbone network ingress device based on the destination address in the IPv6 header.

In a possible implementation, when the first SR policy is the SRv6 policy, the fourth information may be a first endpoint segment identifier (endpoint segment identifier 1, END.SID 1) of the first backbone network ingress device, and the fifth information is a second end point segment identifier END.SID 2 of the first backbone network egress device. In addition, the SRH further includes an IPv6 address of the second site edge. In this case, the SRH may indicate a path from the first backbone network ingress device to the second site edge.

In a possible implementation, when the first SR policy is the SRv6 policy, the fourth information is an END.SID 1 of the first backbone network ingress device, and the fifth information is the endpoint segment identifier with cross-connect to an array of layer-3 adjacency relationships (END.X SID) allocated by the first backbone network egress device for the adjacency relationship between the first backbone network egress device and the second site edge. In this case, the SRH may also indicate a path from the first backbone network ingress device to the second site edge.

In a possible implementation, the END.SID 1 may indicate a new packet forwarding operation. In this case, the first backbone network ingress device only needs to determine, based on the END.SID 1, how to forward the second service packet, and does not need to determine, based on VPN information, how to forward the second service packet.

In a specific example, an operation associated with the END.SID 1 may be matching an overlay (overlay) SRv6 policy from the first backbone network ingress device to the first backbone network egress device based on a next-hop SID of the END.SID 1 in the SRH. In another specific example, when the second service packet includes the service intention information, an operation associated with the END.SID 1 may be matching an overlay SRv6 policy from the first backbone network ingress device to the first backbone network egress device based on a next-hop SID of the END.SID 1 in the SRH and the service intention information.

In a possible implementation, the first SR policy may be an MPLS segment routing traffic engineering (segment routing traffic engineering, SR-TE) policy. In this case, the first end-to-end path is in the MPLS SR-TE policy. Accordingly, the second service packet includes an MPLS label stack, and the fourth information and the fifth information are carried by using the MPLS label stack. In this case, the fourth information is a first node (node) SID of the first backbone network ingress device, and the fifth information includes a second node SID of the first backbone network egress device and the adjacency segment identifier (adjacency SID, adj-SID) allocated by the first backbone network egress device for the adjacency relationship between the first backbone network egress device and the second site edge.

In a possible implementation, the SID of the first node may indicate a new packet forwarding operation. In this case, the first backbone network ingress device only needs to determine, based on the first node SID, how to forward the second service packet, and does not need to determine, based on VPN information, how to forward the second service packet.

In a specific example, an operation associated with the first node SID may be matching an overlay (overlay) SR-MPLS TE policy from the first backbone network ingress device to the first backbone network egress device based on a next-hop SID of the first node SID in the MPLS label stack. In another specific example, when the second service packet includes the service intention information, an operation associated with the first node SID may be matching an overlay overlay SR-MPLS TE policy from the first backbone network ingress device to the first backbone network egress device based on a next-hop SID of the first node SID in the MPLS label stack and the service intention information.

In a possible implementation, the first end-to-end path is a tunnel encapsulated based on a generic network virtualization encapsulation (generic network virtualization encapsulation, GENEVE) protocol. In this case, when the first site edge encapsulates the path information of the first end-to-end path at the outer layer of the first service packet, GENEVE encapsulation may be used. In other words, the GENEVE encapsulation is used for the second service packet. When the first end-to-end path is the SRv6 tunnel, SRv6 in GENEVE encapsulation may be used for the second service packet. When the first end-to-end path is the MPLS SR-TE policy, MPLS in GENEVE encapsulation may be used for the second service packet.

In a possible implementation, the first end-to-end path is a tunnel encapsulated based on a generic routing encapsulation (generic routing encapsulation, GRE) protocol. In this case, when the first site edge encapsulates the path information of the first end-to-end path at the outer layer of the first service packet, GRE encapsulation may be used. In other words, the GRE encapsulation is used for the second service packet. When the first end-to-end path is the SRv6 tunnel, SRv6 over GRE encapsulation may be used for the second service packet. When the first end-to-end path is the MPLS SR-TE policy, MPLS over GRE encapsulation may be used for the second service packet.

In a possible implementation, if the SRv6 over GRE encapsulation is used for the second service packet, the second service packet includes an outer IP header, a user datagram protocol (User Datagram Protocol, UDP) header, outer GRE encapsulation, the IPv6 header, the SRH, inner GRE encapsulation, and a payload, where the payload includes the first service packet, and the inner GRE encapsulation includes a VPN identifier (VPN identifier, VNI) of the VPN service carried in the first service packet. The VPN identifier is carried in the inner GRE encapsulation. When transmission of the second service packet is performed in the backbone network, the device in the backbone network does not parse the VPN identifier. That is, the backbone network does not sense a VPN.

In a possible implementation, the first site edge may further receive a third service packet, and encapsulate path information of a third end-to-end path at an outer layer of the third service packet, to obtain a fourth service packet, where the path information of the third end-to-end path includes sixth information identifying a second backbone network ingress device in the backbone network and seventh information identifying a second backbone network egress device in the backbone network, an ingress endpoint of the third end-to-end path is the first site edge, an egress endpoint of the third end-to-end path is the second site edge, the third end-to-end path passes through the second backbone network ingress device and the second backbone network egress device, the first site edge is multi-homed to the first backbone network ingress device and the second backbone network ingress device, and the second site edge is multi-homed to the first backbone network egress device and the second backbone network egress device. The first site edge sends the fourth service packet through the third end-to-end path. It can be learned that the site edge can orchestrate, by using this solution, the third end-to-end path that crosses the backbone network, and the device in the backbone network does not need to determine the transmission path based on the service configuration, so that the backbone network does not need to sense the service. In this way, the service traffic forwarding efficiency is improved. In addition, because the backbone network does not need to sense the service, the service-related configuration does not need to be performed on the device in the backbone network, so that the service provisioning efficiency is improved, and accordingly, the scalability of the backbone network is improved.

In a possible implementation, the first site edge accesses the first backbone network ingress device through a software-defined wide area network (software-defined wide area network, SD-WAN) tunnel or the internet internet.

According to a second aspect, an embodiment of this application provides an information advertisement method that may be applied to a second communication apparatus. The second communication apparatus may obtain a first route, where the first route includes first information about a first backbone network egress device in a backbone network and an identifier of a second site edge, and the second site edge accesses the backbone network via the first backbone network egress device. After obtaining the first route, the second communication apparatus may advertise the first route to a first site edge, where the first site edge accesses the backbone network via a first backbone network ingress device. After the first route is advertised to the first site edge, the first site edge can obtain a first binding relationship between the second site edge and the first backbone network egress device via which the second site edge accesses the backbone network, to help subsequently orchestrate an end-to-end path from the first site edge to the second site edge based on the first binding relationship, so that an end-to-end path obtained through the orchestration better satisfies a service requirement. Accordingly, quality of service provided for service traffic transmitted through the end-to-end path can be improved.

In a possible implementation, the first information includes one or more of the following: a first segment identifier SID allocated by the first backbone network egress device for an adjacency relationship between the first backbone network egress device and the second site edge; a second SID of the first backbone network egress device; a routing priority of the first backbone network egress device; and a load balancing weight of the first backbone network egress device.

In a possible implementation, the first SID is a segment routing over internet protocol version 6 endpoint segment identifier with cross-connect to an array of layer-3 adjacency relationships SRv6 END.X SID, and the second SID is a segment routing over internet protocol version 6 endpoint segment identifier SRv6 END.SID; or the first SID is an adjacency segment identifier adj-SID, and the second SID is a node SID.

In a possible implementation, the second communication apparatus is the second site edge, the first route includes a software-defined wide area network SD-WAN gateway information advertisement route, the SD-WAN gateway information advertisement route includes at least one type length value TLV, and the at least one TLV carries the first information.

In a possible implementation, the SD-WAN gateway information advertisement route includes a first TLV, a value value field in the first TLV is for carrying the first SID and/or the second SID in the first information, the first TLV further includes a priority sub-TLV and/or a weight sub-TLV, the priority sub-TLV is for carrying the routing priority in the first information, and the weight sub-TLV is for carrying the load balancing weight in the first information.

In a possible implementation, the second communication apparatus is the second site edge, and the first route includes a virtual private network VPN route.

In a possible implementation, the VPN route includes a first metadata path attribute metadata path attribute, and the first metadata path attribute carries the first information.

In a possible implementation, the first route further includes service intention information.

In a possible implementation, the service intention information includes one or more of the following: a gateway that needs to be included for transmission of service traffic, a gateway that needs to be excluded for transmission of the service traffic, and a quality of service parameter that needs to be satisfied for transmission of the service traffic.

In a possible implementation, the first route includes a second metadata path attribute, and the second metadata path attribute includes the service intention information.

In a possible implementation, the second communication apparatus is the first backbone network egress device, and advertising the first route to the first site edge includes: advertising the first route to the first site edge via the first backbone network ingress device.

In a possible implementation, the first route includes a first SD-WAN gateway auto-discovery route.

In a possible implementation, the method further includes: advertising a second route to the first site edge, where the second route includes second information about a second backbone network egress device in the backbone network and the identifier of the second site edge, and the second site edge accesses the backbone network via the second backbone network egress device.

In a possible implementation, the second site edge may further receive a third route sent by the first backbone network egress device, where the third route is for advertising third information of the first backbone network egress device. After receiving the third route, the second site edge may obtain a first binding relationship between the second site edge and the first backbone network egress device based on the third route. It can be learned that the second site edge can determine, by using the received third route by using this solution, a gateway corresponding to the second site edge, and the gateway corresponding to the second site edge does not need to be configured on the first site edge in a manual configuration manner.

In a possible implementation, the third information includes a third SID allocated by the first backbone network egress device for the adjacency relationship between the first backbone network egress device and the second site edge and/or a fourth SID of the first backbone network egress device.

In a possible implementation, if the second site edge is multi-homed to the first backbone network egress device and a second backbone network egress device, the second site edge may further receive a fourth route sent by the second backbone network egress device, where the fourth route is for advertising fourth information of the second backbone network egress device; and obtain a second binding relationship between the second site edge and the second backbone network egress device based on the fourth route.

In a possible implementation, the second site edge may further determine routing priorities respectively corresponding to the first backbone network egress device and the second backbone network egress device; and/or determine load balancing weights respectively corresponding to the first backbone network egress device and the second backbone network egress device.

In a possible implementation, the third route is a second SD-WAN gateway auto-discovery route.

In a possible implementation, the third route is a BGP link state LS route, the BGP-LS route includes a second TLV, and the second TLV indicates that the third route is for advertising the third information of the first backbone network egress device.

In a possible implementation, the second TLV is a role advertisement TLV, and the role advertisement TLV indicates that a role of the first backbone network egress device is a gateway. The second site edge may parse the role TLV, to determine that a device for advertising the third route is a gateway of the second site edge, thereby obtaining the first binding relationship between the second site edge and the first backbone network egress device.

In a possible implementation, the third route further includes transit-gateway information, and the transit-gateway information indicates at least one transit gateway between a backbone network ingress device in the backbone network and the first backbone network egress device.

In a possible implementation, the third route includes a third metadata path attribute, and the third metadata path attribute carries the transit-gateway information.

In a possible implementation, after receiving the transit-gateway information, the second site edge may determine gateway constraint information in service intention information based on the transit-gateway information, where the gateway constraint information indicates to determine a gateway constraint condition that needs to be followed by a path to the second site edge. In an example, after determining the gateway constraint information, the second site edge may advertise the gateway constraint information to the first site edge, so that a forwarding device can forward, based on the gateway constraint information in a forwarding stage, service traffic transmitted from the first site edge to the second site edge.

In a possible implementation, the gateway constraint condition includes a gateway that needs to be included, and/or a gateway that needs to be excluded.

According to a third aspect, an embodiment of this application provides an information advertisement method. The method may be applied to a first backbone network ingress device in a backbone network. The first backbone network ingress device may receive a first route advertised by a first backbone network egress device in the backbone network, and advertise the first route to a first site edge, where the first route includes information about the first backbone network egress device and an identifier of a second site edge, the second site edge accesses the backbone network via the first backbone network egress device, and the first site edge accesses the backbone network via the first backbone network ingress device. After the first route is advertised to the first site edge, the first site edge can obtain a first binding relationship between the second site edge and the first backbone network egress device via which the second site edge accesses the backbone network, to help subsequently orchestrate an end-to-end path from the first site edge to the second site edge based on the first binding relationship, so that an end-to-end path obtained through the orchestration better satisfies a service requirement. Accordingly, quality of service provided for service traffic transmitted through the end-to-end path can be improved.

In a possible implementation, a first backbone network device may further receive a second service packet from the first site edge, where a payload in the second service packet includes a first service packet, path information of an end-to-end path between the first site edge and the second site edge is encapsulated at an outer layer of the first service packet, the path information of the end-to-end path includes first information identifying the first backbone network ingress device and second information identifying the first backbone network egress device in the backbone network, an ingress endpoint of the end-to-end path is the first site edge, an egress endpoint of the end-to-end path is the second site edge, the end-to-end path passes through the first backbone network ingress device and the first backbone network egress device, the first site edge accesses the backbone network via the first backbone network ingress device, and the second site edge accesses the backbone network via the first backbone network egress device. After receiving the second service packet, the first backbone network ingress device may process the second service packet based on the first information, to obtain a third service packet, and send the third service packet to the first backbone network egress device, to forward the service traffic. It can be learned that a first end-to-end path for service transmission is determined by the first site edge by using this solution, and the second service packet received by the first backbone network ingress device includes path information of the first end-to-end path. The first backbone network ingress device does not need to determine a transmission path based on a service configuration, so that the backbone network does not need to sense a service. In this way, service traffic forwarding efficiency is improved. In addition, because the backbone network does not need to sense the service, service-related configuration does not need to be performed on a device in the backbone network, so that service provisioning efficiency is improved, and accordingly, scalability of the backbone network is improved.

In a possible implementation, the second service packet further includes service intention information.

In a possible implementation, the service intention information is carried in a metadata metadata field in the second service packet.

In a possible implementation, the end-to-end path is an SRv6 tunnel, the second service packet includes an IPv6 header and a segment routing header SRH, a destination address in the IPv6 header points to the first backbone network ingress device, and the SRH includes the first information and the second information.

In a possible implementation, the first information is a first endpoint segment identifier END.SID 1 allocated by the first backbone network ingress device, the second information is a second endpoint segment identifier END.SID 2 allocated by the first backbone network egress device, and the SRH further includes an IPv6 address of the second site edge.

In a possible implementation, the first information is a first endpoint segment identifier END.SID 1 of the first backbone network ingress device, and the second information is an endpoint segment identifier with cross-connect to an array of layer-3 adjacency relationships END.X SID allocated by the first backbone network egress device for an adjacency relationship between the first backbone network egress device and the second site edge.

In a possible implementation, an operation associated with the first endpoint segment identifier END.SID 1 includes: matching an overlay overlay SRv6 policy from the first backbone network ingress device to the first backbone network egress device based on a next-hop SID of the END.SID 1 in the SRH.

In a possible implementation, when the second service packet includes the service intention information, an operation associated with the first endpoint segment identifier END.SID 1 includes: matching an overlay overlay SRv6 policy from the first backbone network ingress device to the first backbone network egress device based on a next-hop SID of the END.SID 1 in the SRH and the service intention information.

In a possible implementation, when the first information is the END.SID 1, during specific implementation of processing the second service packet based on the first information, the first backbone network ingress device 1 may match a first overlay SRv6 policy from the first backbone network ingress device to the first backbone network egress device based on the next-hop SID of the END.SID 1 in the SRH, and encapsulate the second service packet by using the first overlay SRv6 policy, to obtain the third service packet. Specifically, the first backbone network ingress device may insert a new SRH based on the second service packet, where the new SRH carries path information of the first overlay SRv6 policy.

In a possible implementation, when the first information is the END.SID 1, if the second service packet includes the service intention information, during specific implementation of processing the second service packet based on the first information, the first backbone network ingress device 1 may match a second overlay SRv6 policy from the first backbone network ingress device to the first backbone network egress device based on the next-hop SID of the END.SID 1 in the SRH and the service intention information, and encapsulate the second service packet by using the second overlay SRv6 policy, to obtain the third service packet. Specifically, the first backbone network ingress device may insert a new SRH based on the second service packet, where the new SRH carries path information of the second overlay SRv6 policy. In addition, the first backbone network ingress device may further strip the service intention information in the second service packet, to obtain the third service packet.

In a possible implementation, the end-to-end path is an SR-MPLS TE policy, the second service packet includes an MPLS label stack, the MPLS label stack includes the first information and the second information, the first information is a first node SID of the first backbone network ingress device, and the second information includes a second node SID of the first backbone network egress device and an adjacency segment identifier adj-SID allocated by the first backbone network egress device for an adjacency relationship between the first backbone network egress device and the second site edge.

In a possible implementation, an operation associated with the first node SID includes: matching an overlay overlay SR-MPLS TE policy from the first backbone network ingress device to the first backbone network egress device based on a next-hop SID of the first node SID in the label stack.

In a possible implementation, when the second service packet includes the service intention information, an operation associated with the first node SID includes: matching an overlay overlay SR-MPLS TE policy from the first backbone network ingress device to the first backbone network egress device based on a next-hop SID of the first node SID in the label stack and the service intention information.

In a possible implementation, when the first information is the first node SID, during specific implementation of processing the second service packet based on the first information, the first backbone network ingress device 1 may match a first overlay SR-MPLS TE policy from the first backbone network ingress device to the first backbone network egress device based on the next-hop SID of the first node SID in the MPLS label stack, and further encapsulate the second service packet by using the first overlay SR-MPLS TE policy, to obtain the third service packet. For example, the first backbone network ingress device may replace an SID 1 and an SID 2 in the MPLS label stack with the first overlay SR-MPLS TE policy, to obtain the third service packet.

In a possible implementation, when the first information is the first node SID, if the second service packet includes the service intention information, during specific implementation of processing the second service packet based on the first information, the first backbone network ingress device 1 may match a second overlay SR-MPLS TE policy from the first backbone network ingress device to the first backbone network egress device based on the next-hop SID of the first node SID in the MPLS label stack and the service intention information, and encapsulate the second service packet by using the second overlay SR-MPLS TE policy, to obtain the third service packet. For example, the first backbone network ingress device may replace an SID 1 and an SID 2 in the MPLS label stack with the second overlay SR-MPLS TE policy, to obtain the third service packet.

In a possible implementation, the end-to-end path is a tunnel encapsulated according to a generic network virtualization encapsulation GENEVE protocol, and SRv6 in GENEVE encapsulation is used for the second service packet.

In a possible implementation, the end-to-end path is a tunnel encapsulated according to a generic routing encapsulation GRE protocol, and SRv6 over GRE encapsulation is used for the second service packet.

In a possible implementation, the second service packet includes an outer IP header, a user datagram protocol UDP header, outer GRE encapsulation, the IPv6 header, the SRH, inner GRE encapsulation, and the payload, where the payload includes the first service packet, and the inner GRE encapsulation includes a VPN identifier of a VPN service carried in the first service packet.

In a possible implementation, the first site edge accesses the first backbone network ingress device through a software-defined wide area network SD-WAN tunnel or an internet.

According to a fourth aspect, an embodiment of this application provides a route advertisement method, applied to a site edge. The method includes: receiving a first route sent by a first backbone network edge device, where the first route is for advertising first information about the first backbone network edge device, and the site edge accesses a backbone network via the first backbone network edge device; and obtaining a first binding relationship between the site edge and the first backbone network edge device based on the first route. It can be learned that the site edge can determine, by using the received first route by using this solution, a gateway corresponding to the site edge, and the gateway corresponding to the site edge does not need to be configured on the site edge in a manual configuration manner. The first backbone network edge device mentioned herein may be a first backbone network egress device, or may be a first backbone network ingress device.

In a possible implementation, the first information includes a first SID allocated by the first backbone network edge device for an adjacency relationship between the first backbone network edge device and the site edge and/or a second SID of the first backbone network edge device.

In a possible implementation, the method further includes: receiving a second route sent by a second backbone network edge device, where the second route is for advertising second information about the second backbone network edge device, and the site edge accesses the backbone network via the second backbone network edge device; and obtaining a second binding relationship between the site edge and the second backbone network edge device based on the second route.

In a possible implementation, the method further includes: determining routing priorities respectively corresponding to the first backbone network edge device and the second backbone network edge device; and/or determining load balancing weights respectively corresponding to the first backbone network edge device and the second backbone network edge device.

In a possible implementation, the first route is an SD-WAN gateway auto-discovery route.

In a possible implementation, the first route is a BGP link state LS route, the BGP-LS route includes a TLV, and the TLV indicates that the first route is for advertising the first information about the first backbone network edge device.

In a possible implementation, the TLV is a role advertisement TLV, and the role advertisement TLV indicates that a role of the backbone network edge device is a gateway.

In a possible implementation, the first route further includes transit-gateway information, and the transit-gateway information indicates at least one transit gateway between a backbone network ingress device and a backbone network egress device in the backbone network.

In a possible implementation, the first route includes a metadata path attribute, and the metadata path attribute carries the transit-gateway information.

In a possible implementation, the method further includes: determining gateway constraint information in service intention information based on the transit-gateway information, where the gateway constraint information indicates to determine a gateway constraint condition that needs to be followed by a path to the site edge.

In a possible implementation, the gateway constraint condition includes a gateway that needs to be included, and/or a gateway that needs to be excluded.

According to a fifth aspect, an embodiment of this application provides a route advertisement method, applied to a backbone network edge device. The backbone network edge device mentioned herein may be a backbone network egress device, or may be a backbone network ingress device. The method includes: obtaining a route, where the route is for advertising information about the backbone network edge device; and sending the route to a site edge, where the site edge accesses a backbone network via the backbone network edge device. It can be learned that, by using this solution, the backbone network edge device can advertise the information about the backbone network edge device to the site edge through the route, the site edge can determine, by using the received route, a gateway corresponding to the site edge, and the gateway corresponding to the site edge does not need to be configured on the site edge in a manual configuration manner.

In a possible implementation, the information includes a first SID allocated by the backbone network edge device for an adjacency relationship between the backbone network edge device and the site edge and/or a second SID of the backbone network edge device.

In a possible implementation, the route is an SD-WAN gateway auto-discovery route.

In a possible implementation, the route is a BGP link state LS route, the BGP-LS route includes a TLV, and the TLV indicates that the route is for advertising the information about the backbone network edge device.

In a possible implementation, the TLV is a role advertisement TLV, and the role advertisement TLV indicates that a role of the backbone network edge device is a gateway.

In a possible implementation, the route further includes transit-gateway information, and the transit-gateway information indicates at least one transit gateway between a backbone network ingress device and a backbone network egress device in the backbone network.

In a possible implementation, the route includes a metadata path attribute, and the metadata path attribute carries the transit-gateway information.

According to a sixth aspect, an embodiment of this application provides a communication apparatus. The communication apparatus may include a transceiver unit and/or a processing unit. The transceiver unit is configured to perform a receiving operation and/or a sending operation, and the processing unit is configured to perform an operation other than the receiving operation and/or the sending operation. The transceiver unit includes a receiving unit and/or a sending unit, where the receiving unit is configured to perform the receiving operation, and the sending unit is configured to perform the sending operation.

In a specific example, the communication apparatus may include the receiving unit and the processing unit. In this case, the communication apparatus may be configured to perform the method according to the first aspect and any possible implementation of the first aspect, or perform the method according to the fourth aspect and any possible implementation of the fourth aspect.

When the communication apparatus may be configured to perform the method according to the first aspect and any possible implementation of the first aspect,
the receiving unit is configured to receive a first route advertised by a second communication apparatus, where the first route includes first information about a first backbone network egress device in a backbone network and an identifier of a second site edge, the second site edge accesses the backbone network via the first backbone network egress device, and the first site edge accesses the backbone network via a first backbone network ingress device; and the processing unit is configured to obtain a first binding relationship between the second site edge and the first backbone network egress device based on the first route.

In a possible implementation, the processing unit is further configured to determine a first end-to-end path from the first site edge to the second site edge based on the first binding relationship, where the first end-to-end path passes through the first backbone network ingress device and the first backbone network egress device.

In a possible implementation, the first information includes one or more of the following: a first segment identifier SID allocated by the first backbone network egress device for an adjacency relationship between the first backbone network egress device and the second site edge; a second SID of the first backbone network egress device; a routing priority of the first backbone network egress device; and a load balancing weight of the first backbone network egress device.

In a possible implementation, the first SID is a segment routing over internet protocol version 6 endpoint segment identifier with cross-connect to an array of layer-3 adjacency relationships SRv6 END.X SID, and the second SID is a segment routing over internet protocol version 6 endpoint segment identifier SRv6 END.SID; or the first SID is an adjacency segment identifier adj-SID, and the second SID is a node SID.

In a possible implementation, the second communication apparatus is the second site edge, the first route includes a software-defined wide area network SD-WAN gateway information advertisement route, the SD-WAN gateway information advertisement route includes at least one type length value TLV, and the at least one TLV carries the first information.

In a possible implementation, the SD-WAN gateway information advertisement route includes a first TLV, a value value field in the first TLV is for carrying the first SID and/or the second SID in the first information, the first TLV further includes a priority sub-TLV and/or a weight sub-TLV, the priority sub-TLV is for carrying the routing priority in the first information, and the weight sub-TLV is for carrying the load balancing weight in the first information.

In a possible implementation, the second communication apparatus is the second site edge, and the first route includes a virtual private network VPN route.

In a possible implementation, the VPN route includes a first metadata path attribute metadata path attribute, and the first metadata path attribute carries the first information.

In a possible implementation, the first route further includes service intention information.

In a possible implementation, the service intention information includes one or more of the following: a gateway that needs to be included by the first end-to-end path, a gateway that needs to be excluded by the first end-to-end path, and a quality of service parameter.

In a possible implementation, the first route includes a second metadata path attribute, and the second metadata path attribute includes the service intention information.

In a possible implementation, the second communication apparatus is the first backbone network egress device, and the receiving unit is configured to receive, via the first backbone network ingress device, the first route advertised by the first backbone network egress device.

In a possible implementation, the first route includes a first SD-WAN gateway auto-discovery route.

In a possible implementation, the receiving unit is further configured to receive a second route advertised by a third communication apparatus, where the second route includes second information about a second backbone network egress device in the backbone network and the identifier of the second site edge, and the second site edge accesses the backbone network via the second backbone network egress device; and the processing unit is further configured to obtain a second binding relationship between the second site edge and the second backbone network egress device based on the second route.

In a possible implementation, the processing unit is further configured to: determine routing priorities respectively corresponding to the first backbone network egress device and the second backbone network egress device; and/or determine load balancing weights respectively corresponding to the first backbone network egress device and the second backbone network egress device.

In a possible implementation, the processing unit is further configured to determine a second end-to-end path from the first site edge to the second site edge based on the second binding relationship, where the second end-to-end path passes through the first backbone network ingress device and the second backbone network egress device.

In a possible implementation, the receiving unit is further configured to receive a third route sent by the first backbone network ingress device, where the third route is for advertising third information of the first backbone network ingress device; and the processing unit is further configured to obtain a third binding relationship between the first site edge and the first backbone network ingress device based on the third route.

In a possible implementation, the third route is a second SD-WAN gateway auto-discovery route or a BGP link state LS route.

In a possible implementation, the third information includes a third SID allocated by the first backbone network ingress device for an adjacency relationship between the first backbone network ingress device and the first site edge and/or a fourth SID of the first backbone network ingress device.

In a possible implementation, the third route further includes transit-gateway information, and the transit-gateway information indicates at least one transit gateway between the first backbone network ingress device and an egress device in the backbone network.

In a possible implementation, the apparatus further includes the sending unit. In this case:

The receiving unit is further configured to receive a first service packet; the processing unit is further configured to encapsulate path information of the first end-to-end path at an outer layer of the first service packet, to obtain a second service packet, where the path information of the first end-to-end path includes fourth information identifying the first backbone network ingress device in the backbone network and fifth information identifying the first backbone network egress device in the backbone network, an ingress endpoint of the first end-to-end path is the first site edge, an egress endpoint of the first end-to-end path is the second site edge, the first end-to-end path passes through the first backbone network ingress device and the first backbone network egress device, the first site edge accesses the backbone network via the first backbone network ingress device, and the second site edge accesses the backbone network via the first backbone network egress device; and the sending unit is configured to send the second service packet through the first end-to-end path.

In a possible implementation, the first service packet is for carrying a virtual private network VPN service, and the processing unit is further configured to: before the first service packet is received, orchestrate the first end-to-end path from the first site edge to the second site edge by using the first backbone network ingress device and the first backbone network egress device on demand based on the VPN service.

In a possible implementation, the second service packet further includes service intention information.

In a possible implementation, the service intention information is carried in a metadata metadata field in the second service packet.

In a possible implementation, the processing unit is further configured to: before encapsulating the path information of the first end-to-end path, determine, based on a destination address in the first service packet, that a next hop for forwarding the first service packet is the second site edge, and iterating a first segment routing policy SR policy based on an internet protocol IP address of the second site edge, to obtain the path information of the first end-to-end path.

In a possible implementation, the first end-to-end path is an SRv6 tunnel, the second service packet includes an IPv6 header and a segment routing header SRH, a destination address in the IPv6 header points to the first backbone network ingress device, and the SRH includes the fourth information and the fifth information.

In a possible implementation, the fourth information is a first endpoint segment identifier END.SID 1 of the first backbone network ingress device, the fifth information is a second endpoint segment identifier END.SID 2 of the first backbone network egress device, and the SRH further includes an IPv6 address of the second site edge.

In a possible implementation, the fourth information is a first endpoint segment identifier END.SID 1 of the first backbone network ingress device, and the fifth information is the endpoint segment identifier with cross-connect to an array of layer-3 adjacency relationships END.X SID allocated by the first backbone network egress device for the adjacency relationship between the first backbone network egress device and the second site edge.

In a possible implementation, an operation associated with the first endpoint segment identifier END.SID 1 includes: matching an overlay overlay SRv6 policy from the first backbone network ingress device to the first backbone network egress device based on a next-hop SID of the END.SID 1.

In a possible implementation, when the second service packet includes the service intention information, an operation associated with the first endpoint segment identifier END.SID 1 includes: matching an overlay overlay SRv6 policy from the first backbone network ingress device to the first backbone network egress device based on a next-hop SID of the END.SID 1 and the service intention information.

In a possible implementation, the first end-to-end path is an SR-MPLS TE policy, the second service packet includes an MPLS label stack, the MPLS label stack includes the fourth information and the fifth information, the fourth information is a first node SID of the first backbone network ingress device, and the fifth information includes a second node SID of the first backbone network egress device and the adjacency segment identifier adj-SID allocated by the first backbone network egress device for the adjacency relationship between the first backbone network egress device and the second site edge.

In a possible implementation, an operation associated with the first node SID includes: matching an overlay overlay SR-MPLS TE policy from the first backbone network ingress device to the first backbone network egress device based on a next-hop SID of the first node SID in the label stack.

In a possible implementation, when the second service packet includes the service intention information, an operation associated with the first node SID includes: matching an overlay overlay SR-MPLS TE policy from the first backbone network ingress device to the first backbone network egress device based on a next-hop SID of the first node SID in the label stack and the service intention information.

In a possible implementation, the first end-to-end path is a tunnel encapsulated according to a generic network virtualization encapsulation GENEVE protocol, and SRv6 in GENEVE encapsulation is used for the second service packet.

In a possible implementation, the first end-to-end path is a tunnel encapsulated according to a generic routing encapsulation GRE protocol, and SRv6 over GRE encapsulation is used for the second service packet.

In a possible implementation, the second service packet includes an outer IP header, a user datagram protocol UDP header, outer GRE encapsulation, the IPv6 header, the SRH, inner GRE encapsulation, and a payload, where the payload includes the first service packet, and the inner GRE encapsulation includes a VPN identifier of the VPN service carried in the first service packet.

In a possible implementation, the receiving unit is further configured to receive a third service packet; the processing unit is further configured to encapsulate path information of a third end-to-end path at an outer layer of the third service packet, to obtain a fourth service packet, where the path information of the third end-to-end path includes sixth information identifying a second backbone network ingress device in the backbone network and seventh information identifying a second backbone network egress device in the backbone network, an ingress endpoint of the third end-to-end path is the first site edge, an egress endpoint of the third end-to-end path is the second site edge, the third end-to-end path passes through the second backbone network ingress device and the second backbone network egress device, the first site edge is multi-homed to the first backbone network ingress device and the second backbone network ingress device, and the second site edge is multi-homed to the first backbone network egress device and the second backbone network egress device; and the sending unit is further configured to send the fourth service packet through the third end-to-end path.

In a possible implementation, the first site edge accesses the first backbone network ingress device through a software-defined wide area network SD-WAN tunnel or the internet internet.

When the communication apparatus may be configured to perform the method according to the fourth aspect and any possible implementation of the fourth aspect,
the receiving unit is configured to receive a first route sent by a first backbone network edge device, where the first route is for advertising first information about the first backbone network edge device, and the site edge accesses a backbone network via the first backbone network edge device; and the processing unit is configured to obtain a first binding relationship between the site edge and the first backbone network edge device based on the first route.

In a possible implementation, the first information includes a first SID allocated by the first backbone network edge device for an adjacency relationship between the first backbone network edge device and the site edge and/or a second SID of the first backbone network edge device.

In a possible implementation, the receiving unit is further configured to receive a second route sent by a second backbone network edge device, where the second route is for advertising second information about the second backbone network edge device, and the site edge accesses the backbone network via the second backbone network edge device; and the processing unit is further configured to obtain a second binding relationship between the site edge and the second backbone network edge device based on the second route.

In a possible implementation, the processing unit is further configured to: determine routing priorities respectively corresponding to the first backbone network edge device and the second backbone network edge device; and/or determine load balancing weights respectively corresponding to the first backbone network edge device and the second backbone network edge device.

In a possible implementation, the first route is an SD-WAN gateway auto-discovery route.

In a possible implementation, the first route is a BGP link state LS route, the BGP-LS route includes a TLV, and the TLV indicates that the first route is for advertising the first information about the first backbone network edge device.

In a possible implementation, the TLV is a role advertisement TLV, and the role advertisement TLV indicates that a role of the backbone network edge device is a gateway.

In a possible implementation, the first route further includes transit-gateway information, and the transit-gateway information indicates at least one transit gateway between a backbone network ingress device and a backbone network egress device in the backbone network.

In a possible implementation, the first route includes a metadata path attribute, and the metadata path attribute carries the transit-gateway information.

In a possible implementation, the processing unit is further configured to determine gateway constraint information in service intention information based on the transit-gateway information, where the gateway constraint information indicates to determine a gateway constraint condition that needs to be followed by a path to the site edge.

In a possible implementation, the gateway constraint condition includes a gateway that needs to be included, and/or a gateway that needs to be excluded.

In another specific example, the communication apparatus may include the processing unit and the sending unit. In this case, the communication apparatus may be configured to perform the method according to the second aspect and any possible implementation of the second aspect, or perform the method according to the fifth aspect and any possible implementation of the fifth aspect.

When the communication apparatus may be configured to perform the method according to the second aspect and any possible implementation of the second aspect,
the processing unit is configured to obtain a first route, where the first route includes first information about a first backbone network egress device in a backbone network and an identifier of a second site edge, and the second site edge accesses the backbone network via the first backbone network egress device; and the sending unit is configured to advertise the first route to a first site edge, where the first site edge accesses the backbone network via a first backbone network ingress device.

In a possible implementation, the first information includes one or more of the following: a first segment identifier SID allocated by the first backbone network egress device for an adjacency relationship between the first backbone network egress device and the second site edge; a second SID of the first backbone network egress device; a routing priority of the first backbone network egress device; and a load balancing weight of the first backbone network egress device.

In a possible implementation, the first SID is a segment routing over internet protocol version 6 endpoint segment identifier with cross-connect to an array of layer-3 adjacency relationships SRv6 END.X SID, and the second SID is a segment routing over internet protocol version 6 endpoint segment identifier SRv6 END.SID; or the first SID is an adjacency segment identifier adj-SID, and the second SID is a node SID.

In a possible implementation, the second communication apparatus is the second site edge, the first route includes a software-defined wide area network SD-WAN gateway information advertisement route, the SD-WAN gateway information advertisement route includes at least one type length value TLV, and the at least one TLV carries the first information.

In a possible implementation, the SD-WAN gateway information advertisement route includes a first TLV, a value value field in the first TLV is for carrying the first SID and/or the second SID in the first information, the first TLV further includes a priority sub-TLV and/or a weight sub-TLV, the priority sub-TLV is for carrying the routing priority in the first information, and the weight sub-TLV is for carrying the load balancing weight in the first information.

In a possible implementation, the second communication apparatus is the second site edge, and the first route includes a virtual private network VPN route.

In a possible implementation, the VPN route includes a first metadata path attribute metadata path attribute, and the first metadata path attribute carries the first information.

In a possible implementation, the first route further includes service intention information.

**In** a possible implementation, the service intention information includes one or more of the following: a gateway that needs to be included for transmission of service traffic, a gateway that needs to be excluded for transmission of the service traffic, and a quality of service parameter that needs to be satisfied for transmission of the service traffic.

In a possible implementation, the first route includes a second metadata path attribute, and the second metadata path attribute includes the service intention information.

In a possible implementation, the second communication apparatus is the first backbone network egress device, and the sending unit is configured to advertise the first route to the first site edge via the first backbone network ingress device.

In a possible implementation, the first route includes a first SD-WAN gateway auto-discovery route.

In a possible implementation, the sending unit is further configured to advertise a second route to the first site edge, where the second route includes second information about a second backbone network egress device in the backbone network and the identifier of the second site edge, and the second site edge accesses the backbone network via the second backbone network egress device.

In a possible implementation, the apparatus further includes the receiving unit, configured to receive a third route sent by the first backbone network egress device, where the third route is for advertising third information of the first backbone network egress device; and the processing unit is further configured to obtain a first binding relationship between the second site edge and the first backbone network egress device based on the third route.

In a possible implementation, the third information includes a third SID allocated by the first backbone network egress device for the adjacency relationship between the first backbone network egress device and the second site edge and/or a fourth SID of the first backbone network egress device.

In a possible implementation, the receiving unit is further configured to receive a fourth route sent by a second backbone network egress device, where the fourth route is for advertising fourth information of the second backbone network egress device; and the processing unit is further configured to obtain a second binding relationship between the second site edge and the second backbone network egress device based on the fourth route.

In a possible implementation, the processing unit is further configured to: determine routing priorities respectively corresponding to the first backbone network egress device and the second backbone network egress device; and/or determine load balancing weights respectively corresponding to the first backbone network egress device and the second backbone network egress device.

In a possible implementation, the third route is a second SD-WAN gateway auto-discovery route.

In a possible implementation, the third route is a BGP link state LS route, the BGP-LS route includes a second TLV, and the second TLV indicates that the third route is for advertising the third information of the first backbone network egress device.

In a possible implementation, the second TLV is a role advertisement TLV, and the role advertisement TLV indicates that a role of the first backbone network egress device is a gateway.

In a possible implementation, the third route further includes transit-gateway information, and the transit-gateway information indicates at least one transit gateway between a backbone network ingress device in the backbone network and the first backbone network egress device.

In a possible implementation, the third route includes a third metadata path attribute, and the third metadata path attribute carries the transit-gateway information.

In a possible implementation, the processing unit is further configured to determine gateway constraint information in service intention information based on the transit-gateway information, where the gateway constraint information indicates to determine a gateway constraint condition that needs to be followed by a path to the second site edge.

In a possible implementation, the gateway constraint condition includes a gateway that needs to be included, and/or a gateway that needs to be excluded.

When the communication apparatus may be configured to perform the method according to the fifth aspect and any possible implementation of the fifth aspect,
the processing unit is configured to obtain a route, where the route is for advertising information about the backbone network edge device; and the sending unit is configured to send the route to a site edge, where the site edge accesses a backbone network via the backbone network edge device.

In a possible implementation, the information includes a first SID allocated by the backbone network edge device for an adjacency relationship between the backbone network edge device and the site edge and/or a second SID of the backbone network edge device.

In a possible implementation, the route is an SD-WAN gateway auto-discovery route.

In a possible implementation, the route is a BGP link state LS route, the BGP-LS route includes a TLV, and the TLV indicates that the route is for advertising the information about the backbone network edge device.

In a possible implementation, the TLV is a role advertisement TLV, and the role advertisement TLV indicates that a role of the backbone network edge device is a gateway.

In a possible implementation, the route further includes transit-gateway information, and the transit-gateway information indicates at least one transit gateway between a backbone network ingress device and a backbone network egress device in the backbone network.

In a possible implementation, the route includes a metadata path attribute, and the metadata path attribute carries the transit-gateway information.

In still another specific example, the communication apparatus may include the receiving unit and the sending unit. In this case, the communication apparatus may be configured to perform the method according to the third aspect and any possible implementation of the third aspect. In this case:
The receiving unit is configured to receive a first route advertised by a first backbone network egress device in a backbone network, where the first route includes information about the first backbone network egress device and an identifier of a second site edge, the second site edge accesses the backbone network via the first backbone network egress device, and a first site edge accesses the backbone network via the first backbone network ingress device; and the sending unit is configured to advertise the first route to the first site edge.

In a possible implementation, the communication apparatus further includes the processing unit. In this case:
The receiving unit is further configured to receive a second service packet from the first site edge, where a payload in the second service packet includes a first service packet, path information of an end-to-end path between the first site edge and the second site edge is encapsulated at an outer layer of the first service packet, the path information of the end-to-end path includes first information identifying the first backbone network ingress device and second information identifying the first backbone network egress device in the backbone network, an ingress endpoint of the end-to-end path is the first site edge, an egress endpoint of the end-to-end path is the second site edge, the end-to-end path passes through the first backbone network ingress device and the first backbone network egress device, the first site edge accesses the backbone network via the first backbone network ingress device, and the second site edge accesses the backbone network via the first backbone network egress device; the processing unit is configured to process the second service packet based on the first information, to obtain a third service packet; and the sending unit is further configured to send the third service packet to the first backbone network egress device.

In a possible implementation, the second service packet further includes service intention information.

In a possible implementation, the service intention information is carried in a metadata metadata field in the second service packet.

In a possible implementation, the end-to-end path is an SRv6 tunnel, the second service packet includes an IPv6 header and a segment routing header SRH, a destination address in the IPv6 header points to the first backbone network ingress device, and the SRH includes the first information and the second information.

In a possible implementation, the first information is a first endpoint segment identifier END.SID 1 allocated by the first backbone network ingress device, the second information is a second endpoint segment identifier END.SID 2 allocated by the first backbone network egress device, and the SRH further includes an IPv6 address of the second site edge.

In a possible implementation, the first information is a first endpoint segment identifier END.SID 1 of the first backbone network ingress device, and the second information is an endpoint segment identifier with cross-connect to an array of layer-3 adjacency relationships END.X SID allocated by the first backbone network egress device for an adjacency relationship between the first backbone network egress device and the second site edge.

In a possible implementation, an operation associated with the first endpoint segment identifier END.SID 1 includes: matching an overlay overlay SRv6 policy from the first backbone network ingress device to the first backbone network egress device based on a next-hop SID of the END.SID 1 in the SRH.

In a possible implementation, when the second service packet includes the service intention information, an operation associated with the first endpoint segment identifier END.SID 1 includes: matching an overlay overlay SRv6 policy from the first backbone network ingress device to the first backbone network egress device based on a next-hop SID of the END.SID 1 in the SRH and the service intention information.

In a possible implementation, the processing unit is configured to: match a first overlay SRv6 policy from the first backbone network ingress device to the first backbone network egress device based on the next-hop SID of the END.SID 1 in the SRH; and encapsulate the second service packet by using the first overlay SRv6 policy, to obtain the third service packet.

In a possible implementation, the processing unit is configured to: match a second overlay SRv6 policy from the first backbone network ingress device to the first backbone network egress device based on the next-hop SID of the END.SID 1 in the SRH and the service intention information; and encapsulate the second service packet by using the second overlay SRv6 policy, to obtain the third service packet.

In a possible implementation, the end-to-end path is an SR-MPLS TE policy, the second service packet includes an MPLS label stack, the MPLS label stack includes the first information and the second information, the first information is a first node SID of the first backbone network ingress device, and the second information includes a second node SID of the first backbone network egress device and an adjacency segment identifier adj-SID allocated by the first backbone network egress device for an adjacency relationship between the first backbone network egress device and the second site edge.

In a possible implementation, an operation associated with the first node SID includes: matching an overlay overlay SR-MPLS TE policy from the first backbone network ingress device to the first backbone network egress device based on a next-hop SID of the first node SID in the label stack.

In a possible implementation, when the second service packet includes the service intention information, an operation associated with the first node SID includes: matching an overlay overlay SR-MPLS TE policy from the first backbone network ingress device to the first backbone network egress device based on a next-hop SID of the first node SID in the label stack and the service intention information.

In a possible implementation, the processing unit is configured to: match a first overlay SR-MPLS TE policy from the first backbone network ingress device to the first backbone network egress device based on the next-hop SID of the first node SID in the label stack; and encapsulate the second service packet by using the first overlay SR-MPLS TE policy, to obtain the third service packet.

In a possible implementation, the processing unit is configured to: match a second overlay SR-MPLS TE policy from the first backbone network ingress device to the first backbone network egress device based on the next-hop SID of the first node SID in the label stack and the service intention information; and encapsulate the second service packet by using the second overlay SR-MPLS TE policy, to obtain the third service packet.

In a possible implementation, the end-to-end path is a tunnel encapsulated according to a generic network virtualization encapsulation GENEVE protocol, and SRv6 in GENEVE encapsulation is used for the second service packet.

In a possible implementation, the end-to-end path is a tunnel encapsulated according to a generic routing encapsulation GRE protocol, and SRv6 over GRE encapsulation is used for the second service packet.

In a possible implementation, the second service packet includes an outer IP header, a user datagram protocol UDP header, outer GRE encapsulation, the IPv6 header, the SRH, inner GRE encapsulation, and the payload, where the payload includes the first service packet, and the inner GRE encapsulation includes a VPN identifier of a VPN service carried in the first service packet.

In a possible implementation, the first site edge accesses the first backbone network ingress device through a software-defined wide area network SD-WAN tunnel or an internet.

According to a seventh aspect, an embodiment of this application provides a communication apparatus, including a processor and a memory.

The memory is configured to store instructions. The processor is configured to execute the instructions, so that the communication apparatus performs the method according to the first aspect and any possible implementation of the first aspect, the communication apparatus performs the method according to the second aspect and any possible implementation of the second aspect, the communication apparatus performs the method according to the third aspect and any possible implementation of the third aspect, the communication apparatus performs the method according to the fourth aspect and any possible implementation of the fourth aspect, or the communication apparatus performs the method according to the fifth aspect and any possible implementation of the fifth aspect.

According to an eighth aspect, an embodiment of this application provides a computer-readable storage medium, including instructions or a computer program. When the instructions or the computer program is run on a processor, the method according to the first aspect and any possible implementation of the first aspect is implemented, the method according to the second aspect and any possible implementation of the second aspect is implemented, the method according to the third aspect and any possible implementation of the third aspect is implemented, the method according to the fourth aspect and any possible implementation of the fourth aspect is implemented, or the method according to the fifth aspect and any possible implementation of the fifth aspect is implemented.

According to a ninth aspect, an embodiment of this application provides a computer program product, including the computer program product. When the computer program product runs on a processor, the method according to the first aspect and any possible implementation of the first aspect is implemented, the method according to the second aspect and any possible implementation of the second aspect is implemented, the method according to the third aspect and any possible implementation of the third aspect is implemented, the method according to the fourth aspect and any possible implementation of the fourth aspect is implemented, or the method according to the fifth aspect and any possible implementation of the fifth aspect is implemented.

According to a tenth aspect, an embodiment of this application provides a communication system, where the communication system includes:
the first communication apparatus for performing the method according to the first aspect and any possible implementation of the first aspect and the second communication apparatus for performing the method according to the second aspect and any possible implementation of the second aspect; or
the site edge for performing the method according to the fourth aspect and any possible implementation of the fourth aspect and the backbone network edge device for performing the method according to the fifth aspect and any possible implementation of the fifth aspect

According to an eleventh aspect, an embodiment of this application provides a traffic forwarding method. The method may be applied to a first site edge (edge). The first site edge may receive a first service packet. After receiving the first service packet, the first site edge may encapsulate path information of a first end-to-end path at an outer layer of the first service packet, to obtain a second service packet, where an ingress endpoint of the first end-to-end path is the first site edge, an egress endpoint of the first end-to-end path is a second site edge, the path information of the first end-to-end path includes first information identifying a first backbone network ingress device in a backbone network and second information identifying a first backbone network egress device in the backbone network, the first site edge accesses the backbone network via the first backbone network ingress device, and the second site edge accesses the backbone network via the first backbone network egress device. After obtaining the second service packet, the first site edge may forward the second service packet through the first end-to-end path. It can be learned that the site edge can orchestrate, by using this solution, the first end-to-end path that crosses the backbone network, and a device in the backbone network does not need to determine a transmission path based on a service configuration, so that the backbone network does not need to sense a service. In this way, service traffic forwarding efficiency is improved. In addition, because the backbone network does not need to sense the service, service-related configuration does not need to be performed on the device in the backbone network, so that service provisioning efficiency is improved, and accordingly, scalability of the backbone network is improved.

In a possible implementation, the first end-to-end path may be pre-orchestrated by the first site edge. In a specific example, the first site edge may orchestrate the first end-to-end path before receiving the first service packet. In a specific example, the first service packet is for carrying a virtual private network (virtual private network, VPN) service. In this case, the first site edge may orchestrate the first end-to-end path from the first site edge to the second site edge by using the first backbone network ingress device and the first backbone network egress device on demand based on the VPN service. In an example, after receiving a VPN route that includes a destination prefix and that is advertised by the second site edge, the first site edge may orchestrate an end-to-end path for the VPN route. In a specific example, the first site edge may orchestrate the first end-to-end path for the VPN route based on a binding relationship between the first site edge and the first backbone network ingress device and a binding relationship between the second site edge and the first backbone network egress device.

In a possible implementation, the second service packet may further include service intention information. In this way, after the first site edge sends the second service packet, when a forwarding device that receives the second service packet further forwards the second service packet, a corresponding path can be selected based on the service intention information to perform forwarding, so that a service intention is satisfied, and accordingly, quality of service provided for the service is improved.

In a possible implementation, the second service packet may include a metadata (metadata) field, and the service intention information is carried in the metadata field. The forwarding device that receives the second service packet may parse the metadata field, to obtain the service intention information, so that the corresponding path can be further selected based on the service intention information to perform forwarding, so that the service intention is satisfied, and accordingly, the quality of service provided for the service is improved.

In a possible implementation, before encapsulating the first service packet by using the path information of the first end-to-end path, the first site edge may first determine the path information of the first end-to-end path. In a specific example, the first site edge may determine, based on a destination address in the first service packet, that a next hop for forwarding the first service packet is the second site edge, and further, iterate a first segment routing policy (segment routing policy, SR policy) based on an internet protocol (Internet Protocol, IP) address of the second site edge, to obtain the path information of the first end-to-end path.

In a possible implementation, the first SR policy may be a segment routing internet protocol version 6 (Segment Routing Internet Protocol Version 6, SRv6) policy. In this case, the first end-to-end path may be an SRv6 tunnel. Accordingly, the second service packet includes an IPv6 header and a segment routing header (segment routing header, SRH), and the first information and the second information may be carried by using the SRH. In addition, a destination address in the IPv6 header points to the first backbone network ingress device, so that the first site edge forwards the second service packet to the first backbone network ingress device based on the destination address in the IPv6 header.

In a possible implementation, when the first SR policy is the SRv6 policy, the first information may be a first endpoint segment identifier (endpoint segment identifier 1, END.SID 1) of the first backbone network ingress device, and the second information is a second end point segment identifier END.SID 2 of the first backbone network egress device. In addition, the SRH further includes an IPv6 address of the second site edge. In this case, the SRH may indicate a path from the first backbone network ingress device to the second site edge.

In a possible implementation, when the first SR policy is the SRv6 policy, the first information is an END.SID 1 of the first backbone network ingress device, and the second information is an endpoint segment identifier with cross-connect to an array of layer-3 adjacency relationships (END.X SID) allocated by the first backbone network egress device for an adjacency relationship between the first backbone network egress device and the second site edge. In this case, the SRH may also indicate a path from the first backbone network ingress device to the second site edge.

In a possible implementation, the END.SID 1 may indicate a new packet forwarding operation. In this case, the first backbone network ingress device only needs to determine, based on the END.SID 1, how to forward the second service packet, and does not need to determine, based on VPN information, how to forward the second service packet.

In a specific example, an operation associated with the END.SID 1 may be matching an overlay (overlay) SRv6 policy from the first backbone network ingress device to the first backbone network egress device based on a next-hop SID of the END.SID 1 in the SRH. In another specific example, when the second service packet includes the service intention information, an operation associated with the END.SID 1 may be matching an overlay SRv6 policy from the first backbone network ingress device to the first backbone network egress device based on a next-hop SID of the END.SID 1 in the SRH and the service intention information.

In a possible implementation, the first SR policy may be an MPLS segment routing traffic engineering (segment routing traffic engineering, SR-TE) policy. In this case, the first end-to-end path is in the MPLS SR-TE policy. Accordingly, the second service packet includes an MPLS label stack, and the first information and the second information are carried by using the MPLS label stack. In this case, the first information is a first node (node) SID of the first backbone network ingress device, and the second information includes a second node SID of the first backbone network egress device and an adjacency segment identifier (adjacency SID, adj-SID) allocated by the first backbone network egress device for an adjacency relationship between the first backbone network egress device and the second site edge.

In a possible implementation, the SID of the first node may indicate a new packet forwarding operation. In this case, the first backbone network ingress device only needs to determine, based on the first node SID, how to forward the second service packet, and does not need to determine, based on VPN information, how to forward the second service packet.

In a specific example, an operation associated with the first node SID may be matching an overlay (overlay) SR-MPLS TE policy from the first backbone network ingress device to the first backbone network egress device based on a next-hop SID of the first node SID in the MPLS label stack. In another specific example, when the second service packet includes the service intention information, an operation associated with the first node SID may be matching an overlay overlay SR-MPLS TE policy from the first backbone network ingress device to the first backbone network egress device based on a next-hop SID of the first node SID in the MPLS label stack and the service intention information.

In a possible implementation, the first end-to-end path is a tunnel encapsulated based on a generic network virtualization encapsulation (generic network virtualization encapsulation, GENEVE) protocol. In this case, when the first site edge encapsulates the path information of the first end-to-end path at the outer layer of the first service packet, GENEVE encapsulation may be used. In other words, the GENEVE encapsulation is used for the second service packet. When the first end-to-end path is the SRv6 tunnel, SRv6 in GENEVE encapsulation may be used for the second service packet. When the first end-to-end path is the MPLS SR-TE policy, MPLS in GENEVE encapsulation may be used for the second service packet.

In a possible implementation, the first end-to-end path is a tunnel encapsulated based on a generic routing encapsulation (generic routing encapsulation, GRE) protocol. In this case, when the first site edge encapsulates the path information of the first end-to-end path at the outer layer of the first service packet, GRE encapsulation may be used. In other words, the GRE encapsulation is used for the second service packet. When the first end-to-end path is the SRv6 tunnel, SRv6 over GRE encapsulation may be used for the second service packet. When the first end-to-end path is the MPLS SR-TE policy, MPLS over GRE encapsulation may be used for the second service packet.

In a possible implementation, if the SRv6 over GRE encapsulation is used for the second service packet, the second service packet includes an outer IP header, a user datagram protocol (User Datagram Protocol, UDP) header, outer GRE encapsulation, the IPv6 header, the SRH, inner GRE encapsulation, and a payload, where the payload includes the first service packet, and the inner GRE encapsulation includes a VPN identifier (VPN identifier, VNI) of the VPN service carried in the first service packet. The VPN identifier is carried in the inner GRE encapsulation. When transmission of the second service packet is performed in the backbone network, the device in the backbone network does not parse the VPN identifier. That is, the backbone network does not sense a VPN.

In a possible implementation, the first site edge may further receive a third service packet, and encapsulate path information of a second end-to-end path at an outer layer of the third service packet, to obtain a fourth service packet, where the path information of the second end-to-end path includes third information identifying a second backbone network ingress device in the backbone network and fourth information identifying a second backbone network egress device in the backbone network, an ingress endpoint of the second end-to-end path is the first site edge, an egress endpoint of the second end-to-end path is the second site edge, the second end-to-end path passes through the second backbone network ingress device and the second backbone network egress device, the first site edge is multi-homed to the first backbone network ingress device and the second backbone network ingress device, and the second site edge is multi-homed to the first backbone network egress device and the second backbone network egress device. The first site edge sends the fourth service packet through the second end-to-end path. It can be learned that the site edge can orchestrate, by using this solution, the second end-to-end path that crosses the backbone network, and the device in the backbone network does not need to determine the transmission path based on the service configuration, so that the backbone network does not need to sense the service. In this way, the service traffic forwarding efficiency is improved. In addition, because the backbone network does not need to sense the service, the service-related configuration does not need to be performed on the device in the backbone network, so that the service provisioning efficiency is improved, and accordingly, the scalability of the backbone network is improved.

In a possible implementation, the first site edge accesses the first backbone network ingress device through a software-defined wide area network (software-defined wide area network, SD-WAN) tunnel or the internet internet.

According to a twelfth aspect, an embodiment of this application provides a traffic forwarding method. The method may be applied to a first backbone network ingress device in a backbone network. A first backbone network device may receive a second service packet from a first site edge, where a payload in the second service packet includes a first service packet, path information of an end-to-end path between the first site edge and a second site edge is encapsulated at an outer layer of the first service packet, the path information of the end-to-end path includes first information identifying the first backbone network ingress device and second information identifying a first backbone network egress device in the backbone network, an ingress endpoint of the end-to-end path is the first site edge, an egress endpoint of the end-to-end path is the second site edge, the end-to-end path passes through the first backbone network ingress device and the first backbone network egress device, the first site edge accesses the backbone network via the first backbone network ingress device, and the second site edge accesses the backbone network via the first backbone network egress device. After receiving the second service packet, the first backbone network ingress device may process the second service packet based on the first information, to obtain a third service packet, and send the third service packet to the first backbone network egress device, to forward service traffic. It can be learned that a first end-to-end path for service transmission is determined by the first site edge by using this solution, and the second service packet received by the first backbone network ingress device includes path information of the first end-to-end path. The first backbone network ingress device does not need to determine a transmission path based on a service configuration, so that the backbone network does not need to sense a service. In this way, service traffic forwarding efficiency is improved. In addition, because the backbone network does not need to sense the service, service-related configuration does not need to be performed on the device in the backbone network, so that service provisioning efficiency is improved, and accordingly, scalability of the backbone network is improved.

In a possible implementation, the second service packet further includes service intention information.

In a possible implementation, the service intention information is carried in a metadata metadata field in the second service packet.

In a possible implementation, the end-to-end path is an SRv6 tunnel, the second service packet includes an IPv6 header and a segment routing header SRH, a destination address in the IPv6 header points to the first backbone network ingress device, and the SRH includes the first information and the second information.

In a possible implementation, the first information is a first endpoint segment identifier END.SID 1 allocated by the first backbone network ingress device, the second information is a second endpoint segment identifier END.SID 2 allocated by the first backbone network egress device, and the SRH further includes an IPv6 address of the second site edge.

In a possible implementation, the first information is a first endpoint segment identifier END.SID 1 of the first backbone network ingress device, and the second information is an endpoint segment identifier with cross-connect to an array of layer-3 adjacency relationships END.X SID allocated by the first backbone network egress device for an adjacency relationship between the first backbone network egress device and the second site edge.

In a possible implementation, an operation associated with the first endpoint segment identifier END.SID 1 includes: matching an overlay overlay SRv6 policy from the first backbone network ingress device to the first backbone network egress device based on a next-hop SID of the END.SID 1 in the SRH.

In a possible implementation, when the second service packet includes the service intention information, an operation associated with the first endpoint segment identifier END.SID 1 includes: matching an overlay overlay SRv6 policy from the first backbone network ingress device to the first backbone network egress device based on a next-hop SID of the END.SID 1 in the SRH and the service intention information.

In a possible implementation, when the first information is the END.SID 1, during specific implementation of processing the second service packet based on the first information, the first backbone network ingress device 1 may match a first overlay SRv6 policy from the first backbone network ingress device to the first backbone network egress device based on the next-hop SID of the END.SID 1 in the SRH, and encapsulate the second service packet by using the first overlay SRv6 policy, to obtain the third service packet. Specifically, the first backbone network ingress device may insert a new SRH based on the second service packet, where the new SRH carries path information of the first overlay SRv6 policy.

In a possible implementation, when the first information is the END.SID 1, if the second service packet includes the service intention information, during specific implementation of processing the second service packet based on the first information, the first backbone network ingress device 1 may match a second overlay SRv6 policy from the first backbone network ingress device to the first backbone network egress device based on the next-hop SID of the END.SID 1 in the SRH and the service intention information, and encapsulate the second service packet by using the second overlay SRv6 policy, to obtain the third service packet. Specifically, the first backbone network ingress device may insert a new SRH based on the second service packet, where the new SRH carries path information of the second overlay SRv6 policy. In addition, the first backbone network ingress device may further strip the service intention information in the second service packet, to obtain the third service packet.

In a possible implementation, the end-to-end path is an SR-MPLS TE policy, the second service packet includes an MPLS label stack, the MPLS label stack includes the first information and the second information, the first information is a first node SID of the first backbone network ingress device, and the second information includes a second node SID of the first backbone network egress device and an adjacency segment identifier adj-SID allocated by the first backbone network egress device for an adjacency relationship between the first backbone network egress device and the second site edge.

In a possible implementation, an operation associated with the first node SID includes: matching an overlay overlay SR-MPLS TE policy from the first backbone network ingress device to the first backbone network egress device based on a next-hop SID of the first node SID in the label stack.

In a possible implementation, when the second service packet includes the service intention information, an operation associated with the first node SID includes: matching an overlay overlay SR-MPLS TE policy from the first backbone network ingress device to the first backbone network egress device based on a next-hop SID of the first node SID in the label stack and the service intention information.

In a possible implementation, when the first information is the first node SID, during specific implementation of processing the second service packet based on the first information, the first backbone network ingress device 1 may match a first overlay SR-MPLS TE policy from the first backbone network ingress device to the first backbone network egress device based on the next-hop SID of the first node SID in the MPLS label stack, and further encapsulate the second service packet by using the first overlay SR-MPLS TE policy, to obtain the third service packet. For example, the first backbone network ingress device may replace an SID 1 and an SID 2 in the MPLS label stack with the first overlay SR-MPLS TE policy, to obtain the third service packet.

In a possible implementation, when the first information is the first node SID, if the second service packet includes the service intention information, during specific implementation of processing the second service packet based on the first information, the first backbone network ingress device 1 may match a second overlay SR-MPLS TE policy from the first backbone network ingress device to the first backbone network egress device based on the next-hop SID of the first node SID in the MPLS label stack and the service intention information, and encapsulate the second service packet by using the second overlay SR-MPLS TE policy, to obtain the third service packet. For example, the first backbone network ingress device may replace an SID 1 and an SID 2 in the MPLS label stack with the second overlay SR-MPLS TE policy, to obtain the third service packet.

In a possible implementation, the end-to-end path is a tunnel encapsulated according to a generic network virtualization encapsulation GENEVE protocol, and SRv6 in GENEVE encapsulation is used for the second service packet.

In a possible implementation, the end-to-end path is a tunnel encapsulated according to a generic routing encapsulation GRE protocol, and SRv6 over GRE encapsulation is used for the second service packet.

In a possible implementation, the second service packet includes an outer IP header, a user datagram protocol UDP header, outer GRE encapsulation, the IPv6 header, the SRH, inner GRE encapsulation, and the payload, where the payload includes the first service packet, and the inner GRE encapsulation includes a VPN identifier of a VPN service carried in the first service packet.

In a possible implementation, the first site edge accesses the first backbone network ingress device through a software-defined wide area network SD-WAN tunnel or an internet.

According to a thirteenth aspect, an embodiment of this application provides a traffic forwarding apparatus. The apparatus may include a transceiver unit and a processing unit. The transceiver unit is configured to perform the receiving operation and/or the sending operation performed by the first site edge according to the eleventh aspect, and the processing unit is configured to perform the operation other than the receiving operation and/or the sending operation performed by the first site edge according to the eleventh aspect.

In a specific example, the apparatus includes a receiving unit, the processing unit, and a sending unit. The receiving unit is configured to receive a first service packet; the processing unit is configured to encapsulate path information of a first end-to-end path at an outer layer of the first service packet, to obtain a second service packet, where the path information of the first end-to-end path includes first information identifying a first backbone network ingress device in a backbone network and second information identifying a first backbone network egress device in the backbone network, an ingress endpoint of the first end-to-end path is the first site edge, an egress endpoint of the first end-to-end path is a second site edge, the first end-to-end path passes through the first backbone network ingress device and the first backbone network egress device, the first site edge accesses the backbone network via the first backbone network ingress device, and the second site edge accesses the backbone network via the first backbone network egress device; and the sending unit is configured to send the second service packet through the first end-to-end path.

In a possible implementation, the first service packet is for carrying a virtual private network VPN service, and the processing unit is further configured to: before the first service packet is received, orchestrate the first end-to-end path from the first site edge to the second site edge by using the first backbone network ingress device and the first backbone network egress device on demand based on the VPN service.

In a possible implementation, the second service packet further includes service intention information.

In a possible implementation, the service intention information is carried in a metadata metadata field in the second service packet.

In a possible implementation, the processing unit is further configured to: before encapsulating the path information of the first end-to-end path, determine, based on a destination address in the first service packet, that a next hop for forwarding the first service packet is the second site edge, and iterating a first segment routing policy SR policy based on an internet protocol IP address of the second site edge, to obtain the path information of the first end-to-end path.

In a possible implementation, the first end-to-end path is an SRv6 tunnel, the second service packet includes an IPv6 header and a segment routing header SRH, a destination address in the IPv6 header points to the first backbone network ingress device, and the SRH includes the first information and the second information.

In a possible implementation, the first information is a first endpoint segment identifier END.SID 1 of the first backbone network ingress device, the second information is a second endpoint segment identifier END.SID 2 of the first backbone network egress device, and the SRH further includes an IPv6 address of the second site edge.

In a possible implementation, the first information is a first endpoint segment identifier END.SID 1 of the first backbone network ingress device, and the second information is an endpoint segment identifier with cross-connect to an array of layer-3 adjacency relationships END.X SID allocated by the first backbone network egress device for an adjacency relationship between the first backbone network egress device and the second site edge.

In a possible implementation, an operation associated with the first endpoint segment identifier END.SID 1 includes: matching an overlay overlay SRv6 policy from the first backbone network ingress device to the first backbone network egress device based on a next-hop SID of the END.SID 1.

In a possible implementation, when the second service packet includes the service intention information, an operation associated with the first endpoint segment identifier END.SID 1 includes: matching an overlay overlay SRv6 policy from the first backbone network ingress device to the first backbone network egress device based on a next-hop SID of the END.SID 1 and the service intention information.

In a possible implementation, the first end-to-end path is an SR-MPLS TE policy, the second service packet includes an MPLS label stack, the MPLS label stack includes the first information and the second information, the first information is a first node SID of the first backbone network ingress device, and the second information includes a second node SID of the first backbone network egress device and an adjacency segment identifier adj-SID allocated by the first backbone network egress device for an adjacency relationship between the first backbone network egress device and the second site edge.

In a possible implementation, an operation associated with the first node SID includes: matching an overlay overlay SR-MPLS TE policy from the first backbone network ingress device to the first backbone network egress device based on a next-hop SID of the first node SID in the label stack.

In a possible implementation, when the second service packet includes the service intention information, an operation associated with the first node SID includes: matching an overlay overlay SR-MPLS TE policy from the first backbone network ingress device to the first backbone network egress device based on a next-hop SID of the first node SID in the label stack and the service intention information.

In a possible implementation, the first end-to-end path is a tunnel encapsulated according to a generic network virtualization encapsulation GENEVE protocol, and SRv6 in GENEVE encapsulation is used for the second service packet.

**In** a possible implementation, the first end-to-end path is a tunnel encapsulated according to a generic routing encapsulation GRE protocol, and SRv6 over GRE encapsulation is used for the second service packet.

In a possible implementation, the second service packet includes an outer IP header, a user datagram protocol UDP header, outer GRE encapsulation, the IPv6 header, the SRH, inner GRE encapsulation, and a payload, where the payload includes the first service packet, and the inner GRE encapsulation includes a VPN identifier of the VPN service carried in the first service packet.

In a possible implementation, the receiving unit is further configured to receive a third service packet; the processing unit is further configured to encapsulate path information of a second end-to-end path at an outer layer of the third service packet, to obtain a fourth service packet, where the path information of the second end-to-end path includes third information identifying a second backbone network ingress device in the backbone network and fourth information identifying a second backbone network egress device in the backbone network, an ingress endpoint of the second end-to-end path is the first site edge, an egress endpoint of the second end-to-end path is the second site edge, the second end-to-end path passes through the second backbone network ingress device and the second backbone network egress device, the first site edge is multi-homed to the first backbone network ingress device and the second backbone network ingress device, and the second site edge is multi-homed to the first backbone network egress device and the second backbone network egress device; and the sending unit is further configured to send the fourth service packet through the second end-to-end path.

In a possible implementation, the first site edge accesses the first backbone network ingress device through a software-defined wide area network SD-WAN tunnel or the internet internet.

According to a fourteenth aspect, an embodiment of this application provides a traffic forwarding apparatus. The apparatus may include a transceiver unit and a processing unit. The transceiver unit is configured to perform the receiving operation and/or the sending operation performed by the first backbone network ingress device according to the twelfth aspect, and the processing unit is configured to perform the operation other than the receiving operation and/or the sending operation performed by the first backbone network ingress device according to the twelfth aspect.

In a specific example, the apparatus includes a receiving unit, the processing unit, and a sending unit. The receiving unit is configured to receive a second service packet from a first site edge, where a payload in the second service packet includes a first service packet, path information of an end-to-end path between the first site edge and a second site edge is encapsulated at an outer layer of the first service packet, the path information of the end-to-end path includes first information identifying the first backbone network ingress device and second information identifying a first backbone network egress device in a backbone network, an ingress endpoint of the end-to-end path is the first site edge, an egress endpoint of the end-to-end path is the second site edge, the end-to-end path passes through the first backbone network ingress device and the first backbone network egress device, the first site edge accesses the backbone network via the first backbone network ingress device, and the second site edge accesses the backbone network via the first backbone network egress device; the processing unit is configured to process the second service packet based on the first information, to obtain a third service packet; and the sending unit is configured to send the third service packet to the first backbone network egress device.

In a possible implementation, the second service packet further includes service intention information.

In a possible implementation, the service intention information is carried in a metadata metadata field in the second service packet.

In a possible implementation, the end-to-end path is an SRv6 tunnel, the second service packet includes an IPv6 header and a segment routing header SRH, a destination address in the IPv6 header points to the first backbone network ingress device, and the SRH includes the first information and the second information.

In a possible implementation, the first information is a first endpoint segment identifier END.SID 1 allocated by the first backbone network ingress device, the second information is a second endpoint segment identifier END.SID 2 allocated by the first backbone network egress device, and the SRH further includes an IPv6 address of the second site edge.

In a possible implementation, the first information is a first endpoint segment identifier END.SID 1 of the first backbone network ingress device, and the second information is an endpoint segment identifier with cross-connect to an array of layer-3 adjacency relationships END.X SID allocated by the first backbone network egress device for an adjacency relationship between the first backbone network egress device and the second site edge.

In a possible implementation, an operation associated with the first endpoint segment identifier END.SID 1 includes: matching an overlay overlay SRv6 policy from the first backbone network ingress device to the first backbone network egress device based on a next-hop SID of the END.SID 1 in the SRH.

In a possible implementation, when the second service packet includes the service intention information, an operation associated with the first endpoint segment identifier END.SID 1 includes: matching an overlay overlay SRv6 policy from the first backbone network ingress device to the first backbone network egress device based on a next-hop SID of the END.SID 1 in the SRH and the service intention information.

In a possible implementation, the processing unit is configured to: match a first overlay SRv6 policy from the first backbone network ingress device to the first backbone network egress device based on the next-hop SID of the END.SID 1 in the SRH; and encapsulate the second service packet by using the first overlay SRv6 policy, to obtain the third service packet.

In a possible implementation, the processing unit is configured to: match a second overlay SRv6 policy from the first backbone network ingress device to the first backbone network egress device based on the next-hop SID of the END.SID 1 in the SRH and the service intention information; and encapsulate the second service packet by using the second overlay SRv6 policy, to obtain the third service packet.

In a possible implementation, the end-to-end path is an SR-MPLS TE policy, the second service packet includes an MPLS label stack, the MPLS label stack includes the first information and the second information, the first information is a first node SID of the first backbone network ingress device, and the second information includes a second node SID of the first backbone network egress device and an adjacency segment identifier adj-SID allocated by the first backbone network egress device for an adjacency relationship between the first backbone network egress device and the second site edge.

In a possible implementation, an operation associated with the first node SID includes: matching an overlay overlay SR-MPLS TE policy from the first backbone network ingress device to the first backbone network egress device based on a next-hop SID of the first node SID in the label stack.

In a possible implementation, when the second service packet includes the service intention information, an operation associated with the first node SID includes: matching an overlay overlay SR-MPLS TE policy from the first backbone network ingress device to the first backbone network egress device based on a next-hop SID of the first node SID in the label stack and the service intention information.

In a possible implementation, the processing unit is configured to: match a first overlay SR-MPLS TE policy from the first backbone network ingress device to the first backbone network egress device based on the next-hop SID of the first node SID in the label stack; and encapsulate the second service packet by using the first overlay SR-MPLS TE policy, to obtain the third service packet.

In a possible implementation, the processing unit is configured to: match a second overlay SR-MPLS TE policy from the first backbone network ingress device to the first backbone network egress device based on the next-hop SID of the first node SID in the label stack and the service intention information; and encapsulate the second service packet by using the second overlay SR-MPLS TE policy, to obtain the third service packet.

In a possible implementation, the end-to-end path is a tunnel encapsulated according to a generic network virtualization encapsulation GENEVE protocol, and SRv6 in GENEVE encapsulation is used for the second service packet.

In a possible implementation, the end-to-end path is a tunnel encapsulated according to a generic routing encapsulation GRE protocol, and SRv6 over GRE encapsulation is used for the second service packet.

In a possible implementation, the second service packet includes an outer IP header, a user datagram protocol UDP header, outer GRE encapsulation, the IPv6 header, the SRH, inner GRE encapsulation, and the payload, where the payload includes the first service packet, and the inner GRE encapsulation includes a VPN identifier of a VPN service carried in the first service packet.

In a possible implementation, the first site edge accesses the first backbone network ingress device through a software-defined wide area network SD-WAN tunnel or an internet.

According to a fifteenth aspect, an embodiment of this application provides a communication apparatus, including a processor and a memory.

The memory is configured to store instructions. The processor is configured to execute the instructions, so that the communication apparatus performs the method according to the eleventh aspect and any possible implementation of the eleventh aspect, or the communication apparatus performs the method according to the twelfth aspect and any possible implementation of the twelfth aspect.

According to a sixteenth aspect, an embodiment of this application provides a computer-readable storage medium, including instructions or a computer program. When the instructions or the computer program is run on a processor, the method according to the eleventh aspect and any possible implementation of the eleventh aspect is implemented, or the method according to the twelfth aspect and any possible implementation of the twelfth aspect is implemented.

According to a seventeenth aspect, an embodiment of this application provides a computer program product, including the computer program product. When the computer program product runs on a processor, the method according to the eleventh aspect and any possible implementation of the eleventh aspect is implemented, or the method according to the twelfth aspect and any possible implementation of the twelfth aspect is implemented.

According to an eighteenth aspect, an embodiment of this application provides a communication system. The communication system includes the first site edge for performing the method according to the eleventh aspect and any possible implementation of the eleventh aspect and the first backbone network ingress device for performing the method according to the twelfth aspect and any possible implementation of the twelfth aspect.

### BRIEF DESCRIPTION OF DRAWINGS

To describe the technical solutions in embodiments of this application or the conventional technology more clearly, the following briefly describes the accompanying drawings for describing embodiments or the conventional technology. It is clear that, the accompanying drawings in the following descriptions show only some embodiments recorded in this application, and persons of ordinary skill in the art may still derive other drawings from these accompanying drawings without creative efforts.
FIG. 1a is a diagram of an example application scenario according to an embodiment of this application;
FIG. 1b is a diagram of another example application scenario according to an embodiment of this application;
FIG. 1c is a diagram of still another example application scenario according to an embodiment of this application;
FIG. 2a is a diagram of a structure of a type of MP_REACH_NLRI according to an embodiment of this application;
FIG. 2b is a diagram of a structure of link-state NLRI;
FIG. 3 is a signaling interaction diagram of an information advertisement method according to an embodiment of this application;
FIG. 4a is a diagram of a structure of a type of MP_REACH_NLRI according to an embodiment of this application;
FIG. 4b is a diagram of a structure of a routing priority sub-TLV according to an embodiment of this application;
FIG. 4c is a diagram of a structure of a weight sub-TLV according to an embodiment of this application;
FIG. 4d is a diagram of a structure of a sub-TLV according to an embodiment of this application;
FIG. 4e is a diagram of a structure of another sub-TLV according to an embodiment of this application;
FIG. 4f is a diagram of a structure of still another sub-TLV according to an embodiment of this application;
FIG. 5 is a signaling interaction diagram of an information advertisement method according to an embodiment of this application;
FIG. 6 is a diagram of a structure of a sub-TLV 1 included in a metadata path attribute 2 according to an embodiment of this application;
FIG. 7 is a signaling interaction diagram of an information advertisement method according to an embodiment of this application;
FIG. 8 is a diagram of a structure of another type of MP_REACH_NLRI according to an embodiment of this application;
FIG. 9 is a signaling interaction diagram of a route advertisement method according to an embodiment of this application;
FIG. 10 is a diagram of a structure of a transit-gateway sub-TLV according to an embodiment of this application;
FIG. 11 is a signaling interaction diagram of another route advertisement method according to an embodiment of this application;
FIG. 12a is a diagram of a structure of a role advertisement TLV according to an embodiment of this application;
FIG. 12b is a diagram of a structure of an adjacency relationship SID TLV according to an embodiment of this application;
FIG. 12c is a diagram of a structure of a node SID TLV according to an embodiment of this application;
FIG. 13 is a signaling interaction diagram of a traffic forwarding method according to an embodiment of this application;
FIG. 14a is a diagram of a structure of SRv6 over GRE encapsulation according to an embodiment of this application;
FIG. 14b is a diagram of a structure of MPLS over GRE encapsulation according to an embodiment of this application;
FIG. 14c is a diagram of a structure of SRv6 in GENEVE encapsulation according to an embodiment of this application;
FIG. 14d is a diagram of a structure of SRv6 over GENEVE encapsulation according to an embodiment of this application;
FIG. 14e is a diagram of a structure of MPLS in GENEVE encapsulation according to an embodiment of this application;
FIG. 15a is a diagram of a scenario of a traffic forwarding method according to an embodiment of this application;
FIG. 15b is a diagram of a scenario of another traffic forwarding method according to an embodiment of this application;
FIG. 15c is a diagram of a scenario of another traffic forwarding method according to an embodiment of this application;
FIG. 15d is a diagram of a scenario of a traffic forwarding method according to an embodiment of this application;
FIG. 15e is a diagram of a scenario of another traffic forwarding method according to an embodiment of this application;
FIG. 16 is a schematic flowchart of an information advertisement method according to an embodiment of this application;
FIG. 17 is a schematic flowchart of another information advertisement method according to an embodiment of this application;
FIG. 18 is a schematic flowchart of an information advertisement method according to an embodiment of this application;
FIG. 19 is a schematic flowchart of another information advertisement method according to an embodiment of this application;
FIG. 20 is a schematic flowchart of still another information advertisement method according to an embodiment of this application;
FIG. 21 is a schematic flowchart of a traffic forwarding method according to an embodiment of this application;
FIG. 22 is a schematic flowchart of another traffic forwarding method according to an embodiment of this application;
FIG. 23a is a diagram of a structure of a communication apparatus according to an embodiment of this application;
FIG. 23b is a diagram of a structure of another communication apparatus according to an embodiment of this application;
FIG. 23c is a diagram of a structure of another communication apparatus according to an embodiment of this application;
FIG. 23d is a diagram of a structure of another communication apparatus according to an embodiment of this application;
FIG. 24 is a diagram of a structure of still another communication apparatus according to an embodiment of this application; and
FIG. 25 is a diagram of a structure of another communication apparatus according to an embodiment of this application.

### DESCRIPTION OF EMBODIMENTS

Embodiments of this application provide an information advertisement method and an apparatus, to improve quality of service provided for service traffic in a scenario in which transmission of the service traffic needs to be performed across a plurality of network domains.

For ease of understanding, possible application scenarios of embodiments of this application are first described.

Currently, in a wide area network, to implement end-to-end fast delivery and flexible scheduling, an SD-WAN technology is usually used to establish an SD-WAN tunnel and build an SD-WAN-based overlay (Overlay) network based on different layers of (Underlay) networks such as an internet and a private line network, to decouple a wide area network service from an underlay network, and improve an end-to-end delivery capability

After an SD-WAN is deployed, SD-WAN tunnels are established between points of presence (points of presence, POPs) and between a customer-premises equipment (customer-premises equipment, CPE) and an edge point of presence (edge point of presence, EPOP) in the SD-WAN overlay network in the wide area network based on an original underlay network. Service traffic passes through a transit device through a tunnel, so that the transit device does not sense the service. In the overlay network, each CPE or POP is represented as a hop for a service route. End-to-end forwarding is performed on the service traffic in a form like hop by hop, through the tunnel, or by using a label in POP networking.

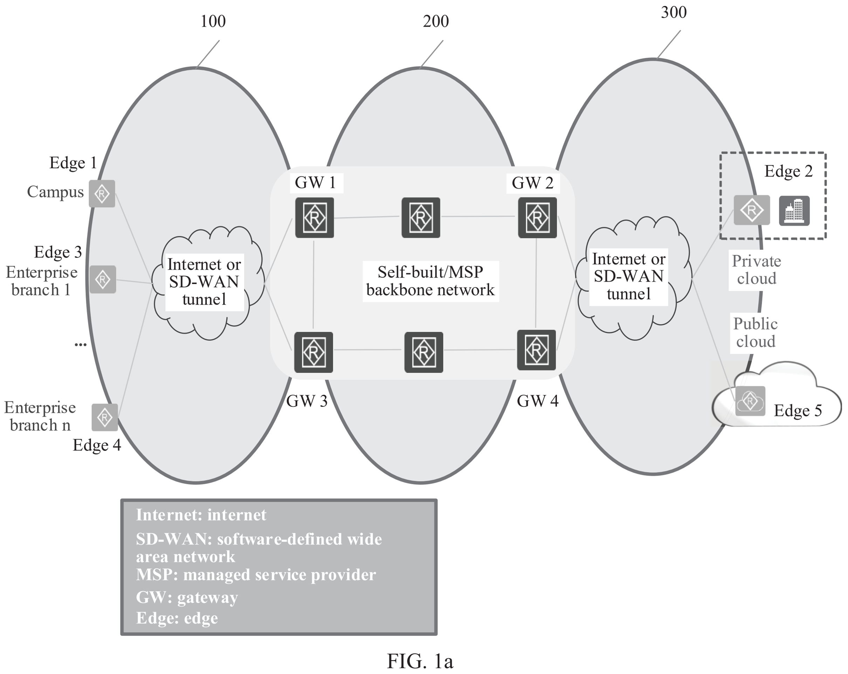

FIG. 1a is a diagram of an example application scenario according to an embodiment of this application. As shown in FIG. 1a, transmission of service traffic needs to be performed across an edge access area 100, a backbone network 200, and an edge access area 300.

The edge access network 100 includes a site edge 1, a site edge 3, and a site edge 4.

The backbone network 200 includes at least one network device. For example, when the backbone network 200 is a POP backbone network, the backbone network 200 includes at least one POP. In the POP backbone network, a POP connected to a site edge is referred to as an EPOP, and a POP not connected to the site edge is referred to as a backbone point of presence (backbone point of presence, BPOP). In an example, the site edge may be a CPE.

The edge access network 300 includes a site edge 2 and a site edge 5.

The site edges in the edge access networks 100 and 300 may access the backbone network via EPOPs in the backbone network, and the EPOPs in the backbone network and used by the site edges to access the backbone network may be considered as gateways corresponding to the site edges. For example, as shown in FIG. 1a, the site edge 1 is dual-homed to a gateway (gateway, GW) 1 and a gateway 3, and the site edge 1 may access the backbone network 200 via the gateway 1 and the gateway 3. For another example, the site edge 2 is dual-homed to a gateway 2 and a gateway 4, and the site edge 2 may access the backbone network 200 via the gateway 2 and the gateway 4.

A site edge may access, through an SD-WAN tunnel or an internet, a gateway corresponding to the site edge.

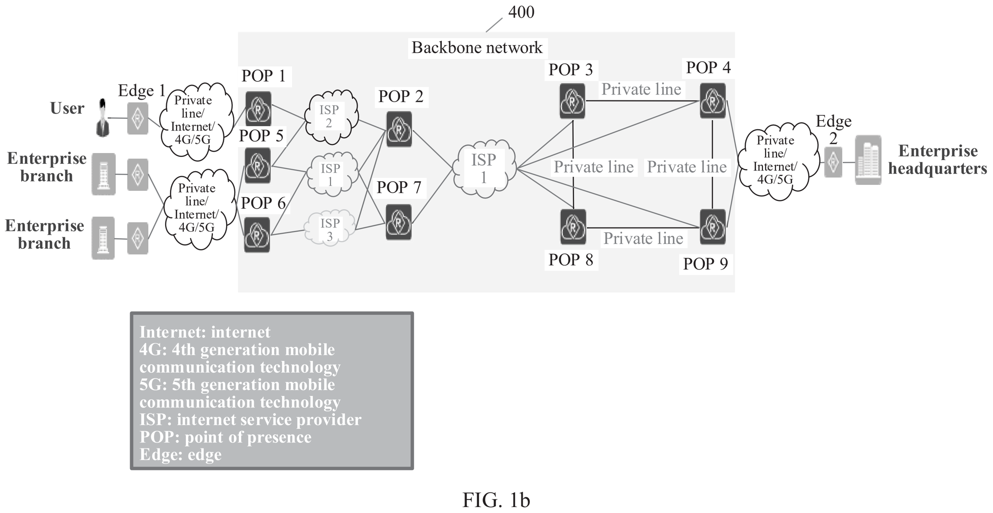

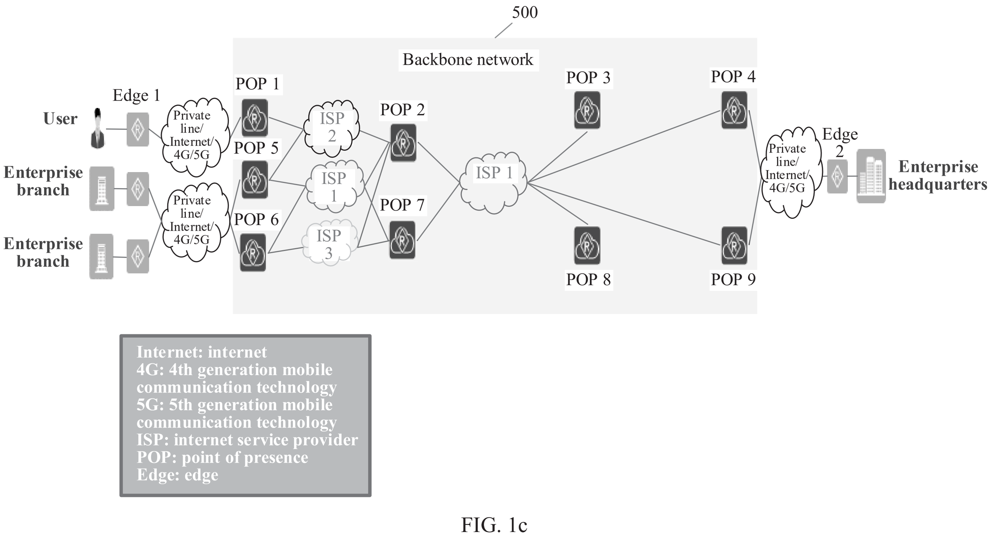

In embodiments of this application, a backbone network may be a hybrid network including at least one network domain. The at least one network domain includes but is not limited to a self-built backbone network and/or a managed service provider (managed service provider, MSP) backbone network. The MSP backbone network may include a single operator network, may include a hybrid operator network, or may include a self-built private line network. This is not specifically limited in embodiments of this application. Refer to FIG. 1b and FIG. 1c for understanding. FIG. 1b and FIG. 1c are diagrams of another two example application scenarios according to embodiments of this application.

As shown in FIG. 1b, a backbone network 400 includes an internet service provider (internet service provider, ISP) network 1 (ISP 1 for short), an ISP 2, an ISP 3, and a self-built private line network. For a manner of connection between network devices in a network architecture shown in FIG. 1b, details are not described herein. A difference between the scenarios shown in FIG. 1c and FIG. 1b lies in that a backbone network 500 shown in FIG. 1c does not include a self-built private line network.

Currently, when transmission of service traffic needs to be performed across a plurality of network domains, quality of service provided by a network for the service traffic cannot satisfy a requirement. A specific reason is that when orchestrating a forwarding path for a service, a site edge cannot flexibly select a backbone network POP used by a remote site edge to access a backbone network, and cannot select an egress link for the backbone network POP to connect to the remote site edge. The scenario shown in FIG. 1b is used as an example for description.

Currently, quality of service obtained when transmission of service traffic sent by a site edge 1 to a site edge 2 is performed in a network cannot satisfy a requirement, because currently, when orchestrating a transmission path for the service traffic, the edge 1 cannot flexibly choose to transmit the service traffic to the site edge 2 via a POP 4 connected to the site edge 2 or transmit the service traffic to the site edge 2 via a POP 9 connected to the site edge 2.

When orchestrating the forwarding path for the service, the site edge cannot flexibly select the backbone network POP used by the remote site edge to access the backbone network, because the site edge does not learn of information about the backbone network POP used by the remote site edge to access the backbone network.

In view of this, embodiments of this application provide an information advertisement method and an apparatus, so that a site edge can obtain a binding relationship between a remote site edge and a backbone network POP used by the remote site edge to access a backbone network. In this way, when orchestrating a forwarding path for a service, the site edge can flexibly select the backbone network POP used by the remote site edge to access the backbone network, to improve quality of service provided for the service.

With reference to the accompanying drawings, the following describes the information advertisement method provided in embodiments of this application.

Before the information advertisement method provided in embodiments of this application is described, a route advertisement method for network devices is first described.

In an example, route advertisement may be performed between two communication apparatuses through multiprotocol extensions for BGP (Multiprotocol Extensions for BGP, MP-BGP). For example, as shown in FIG. 1a, the edge 2 advertises a route to the edge 1. The edge 2 sends a BGP message 1 to the edge 1. The BGP message 1 includes MP_REACH_NLRI, and the MP_REACH_NLRI is for carrying information about the route advertised by the edge 2 to the edge 1.

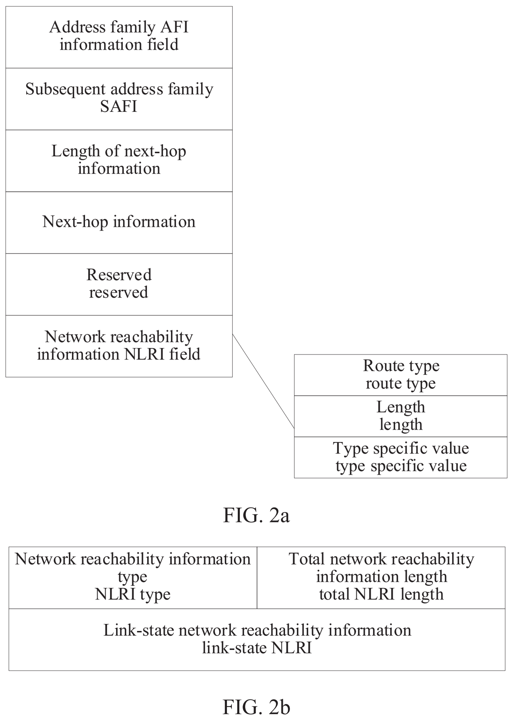

In an example, a structure of the MP_REACH_NLRI is shown in FIG. 2a. FIG. 2a is a diagram of a structure of a type of MP_REACH_NLRI according to an embodiment of this application As shown in FIG. 2a, the MP_REACH_NLRI includes an address family identifier (address family identifier, AFI) field, a subsequent address family (subsequent address family identifier, SAFI) field, a length of next-hop information field, a next-hop information field, and a network reachability information field.

In an example, the AFI field may identify a network layer protocol. For example, a value of the AFI field is 1, identifying an IPv4; or a value of the AFI field is 2, identifying an IPv6. For the value of the AFI field, refer to the related description part about the address family number (Address Family Number) in the request for comments (request for comments, RFC) 1700. Details are not described herein. The SAFI field identifies a type of a subsequent address family. For example, a value of the SAFI field is 1, identifying unicast; a value of the SAFI field is 2, identifying multicast; a value of the SAFI field is 74, identifying an SD-WAN; or a value of the SAFI field is 128, identifying a virtual private network (virtual private network, VPN).

In an example, a next-hop network address may be a network address of a next device on a path to a destination device.

In an example, the NLRI field may include one or more pieces of NLRI, each piece of NLRI includes a length field and an NLRI value field, and specific content of the NLRI value field may be determined based on a combination of the AFI field and the SAFI field. For example,
when a value of the AFI field is 1, and a value of the SAFI field is 1, the NLRI field in the MP_REACH_NLRI carries an internet protocol version 4 (Internet Protocol Version 4, IPv4) unicast route;
when a value of the AFI field is 1, and a value of the SAFI field is 128, the NLRI field in the MP_REACH_NLRI carries a VPNv4 route;
when a value of the AFI field is 1, and a value of the SAFI field is 4, the NLRI field in the MP_REACH_NLRI carries a BGP labeled route;
when a value of the AFI field is 1, and a value of the SAFI field is 74, the NLRI field in the MP_REACH_NLRI carries IPv4 SD-WAN address family information; or
when a value of the AFI field is 2, and a value of the SAFI field is 74, the NLRI field in the MP_REACH_NLRI carries IPv6 SD-WAN address family information.

The NLRI field includes a route type field, a length field, and a type specific value (type specific value) field. The route type field indicates a route type, the length field indicates a length of the type specific value field, and the type specific value field is for carrying a related value of a type corresponding to the route type field.

In an example, when the NLRI field in the MP_REACH_NLRI carries the IPv4 SD-WAN address family information or the IPv6 SD-WAN address family information, if a value of the type field is 1, the NLRI field may be for carrying information about an SD-WAN transport network port (transport network port, TNP) route. For the information about the TNP route, details are not described herein.

In an example, the route type field in the NLRI field may alternatively be an NLRI type field. In a specific example, if the NLRI field is for carrying one type of routing information, the NLRI field may include the NLRI type field; or if the NLRI field is for carrying a plurality of types of routing information, the NLRI field may include the route type field.

In another example, route advertisement may be performed between two communication apparatuses through multiprotocol extensions for BGP-LS. In the BGP-LS, a series of new NLRI is introduced based on an original BGP, to carry information about a link, a node, and an IPv4 prefix or an IPv6 prefix. Such new NLRI is referred to as link-state (link-state) NLRI. In an example, an MP_REACH_NLRI attribute is used as a container of the link-state NLRI in the BGP-LS. That is, the link-state NLRI is carried in a BGP update message as the MP_REACH_NLRI attribute. FIG. 2b is a diagram of a structure of link-state NLRI. As shown in FIG. 2b, the link-state NLRI includes an NLRI type field, a total NLRI length (total NLRI length) field, and a link-state NLRI field.

The NLRI type field indicates an NLRI type.

The total NLRI length field indicates a length of entire NLRI.

The link-state NLRI field is for carrying specific content, and the content of the link-state NLRI field is determined based on a value of the NLRI type field. Specifically, the content of the link-state NLRI field may be understood with reference to Table 1 below.

**Table 1**

| Value of an NLRI type | Content carried by link-state NLRI |
|---|---|
| 1 | Node (node) NLRI |
| 2 | Link (link) NLRI |
| 3 | IPv4 topology prefix (Topology Prefix) NLRI |
| 4 | IPv6 topology prefix (Topology Prefix) NLRI |

With reference to the accompanying drawings, the following describes the information advertisement method provided in embodiments of this application.

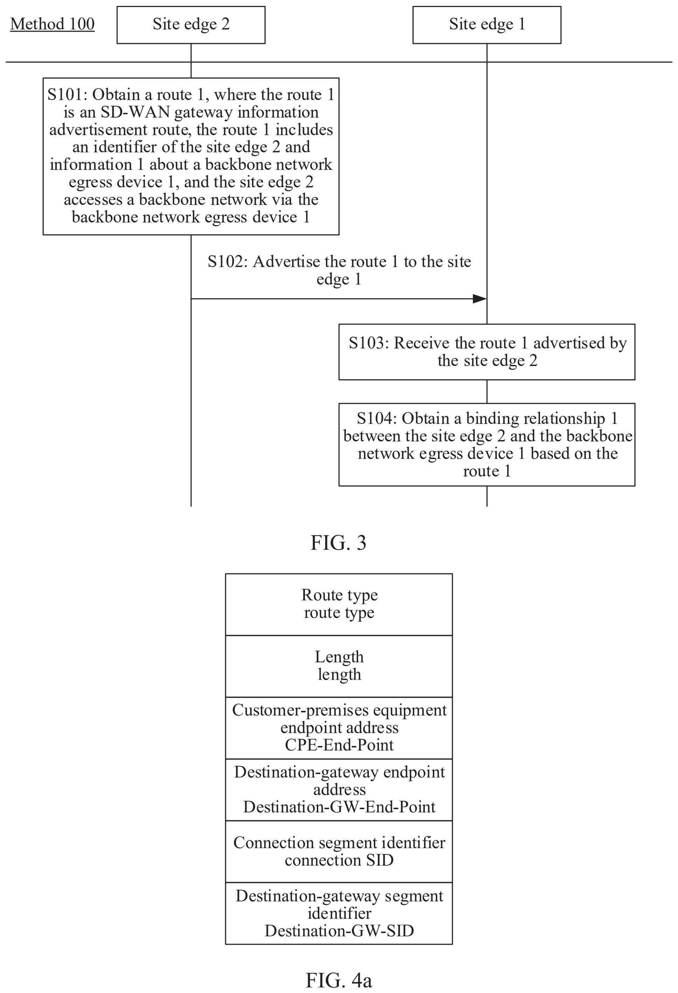

FIG. 3 is a signaling interaction diagram of an information advertisement method according to an embodiment of this application.

The information advertisement method 100 shown in FIG. 3 may be applied to the application scenario shown in FIG. 1a or FIG. 1b. When the method 100 is applied to the application scenario shown in FIG. 1a, a backbone network egress device 1 in the method 100 may correspond to the GW 2 shown in FIG. 1a, and a backbone network egress device 2 in the method 100 may correspond to the GW 4 shown in FIG. 1a. When the method 100 is applied to the application scenario shown in FIG. 1b, a backbone network egress device 1 in the method 100 may correspond to the POP 4 shown in FIG. 1b, and a backbone network egress device 2 in the method 100 may correspond to the POP 9 shown in FIG. 1b. The method 100 may include, for example, S101 to S104 below.

S101: A site edge 2 obtains a route 1, where the route 1 is an SD-WAN gateway information advertisement route, the route 1 includes an identifier of the site edge 2 and information 1 about the backbone network egress device 1, and the site edge 2 accesses a backbone network via the backbone network egress device 1.

In this embodiment of this application, the site edge 2 may generate the route 1 based on the identifier of the site edge 2 and the information 1 about the backbone network egress device 1.

In this embodiment of this application, the identifier of the site edge 2 may be an IP address of the site edge 2.

In this embodiment of this application, the information 1 about the backbone network egress device 1 includes at least an identifier of the backbone network egress device 1, and the identifier of the backbone network egress device 1 may be an IP address of the backbone network egress device 1.

In an example, the information 1 may further include an SID 1 allocated by the backbone network egress device 1 for an adjacency relationship between the backbone network egress device 1 and the site edge 2, so that in a subsequent traffic forwarding stage, a packet can be encapsulated based on the SID 1, to perform traffic forwarding based on the SID 1. The SID 1 may be an SRv6 END.X SID, or may be an adj-SID. For example, in a network scenario in which an SRv6 technology is applied to forwarding, the SID 1 may be the SRv6 END.X SID; or in a network scenario in which an MPLS technology is applied to forwarding, the SID 1 may be the adj-SID.

In another example, the information 1 may further include an SID 2 of the backbone network egress device 1, so that in a subsequent traffic forwarding stage, a packet can be encapsulated based on the SID 2, to perform traffic forwarding based on the SID 2. The SID 2 may be an SRv6 END.SID, or may be a node SID. For example, in a network scenario in which an SRv6 technology is applied to forwarding, the SID 2 may be the SRv6 END.SID; or in a network scenario in which an MPLS technology is applied to forwarding, the SID 2 may be the node SID.

In still another example, the information 1 may further include a routing priority of the backbone network egress device 1, so that a communication apparatus (for example, an edge 1) that receives the route 1 orchestrates an end-to-end path from the edge 1 to the edge 2 according to the routing priority.

In another example, the information 1 may further include a load balancing weight of the backbone network egress device 1, so that a communication apparatus (for example, an edge 1) that receives the route 1 determines, based on the load balancing weight, an end-to-end path for forwarding service traffic.

The route 1 may be carried by using a BGP message 1. Specifically, the route 1 may be carried by using MP_REACH_NLRI in the BGP message 1. The MP_REACH_NLRI for carrying the route 1 is described below by using an example in which the route 1 includes the identifier of the site edge 2, the identifier of the backbone network egress device 1, the SID 1, and the SID 2.

FIG. 4a is a diagram of a structure of a type of MP_REACH_NLRI according to an embodiment of this application. As shown in FIG. 4a, the MP_REACH_NLRI includes a route type field, a length field, a CPE endpoint address (CPE-End-Point) field, a destination-gateway endpoint address (Destination-GW-End-Point) field, a connection (connection) SID field, and a destination-gateway SID (Destination-GW-SID) field.
route type: a route type. A value of the route type field indicates that the route 1 is the SD-WAN gateway information advertisement route. In an example, the value of the route type field may be 3.
length: a length. A value of the length field indicates a total length value of fields after the length field.
CPE-End-Point: carries a CPE endpoint address, for example, the IP address of the site edge 2.
Destination-GW-End-Point: carries a destination-gateway endpoint address, for example, the IP address of the backbone network egress device 1.
connection SID: is for carrying the SID 1.
Destination-GW-SID: is for carrying the SID 2.

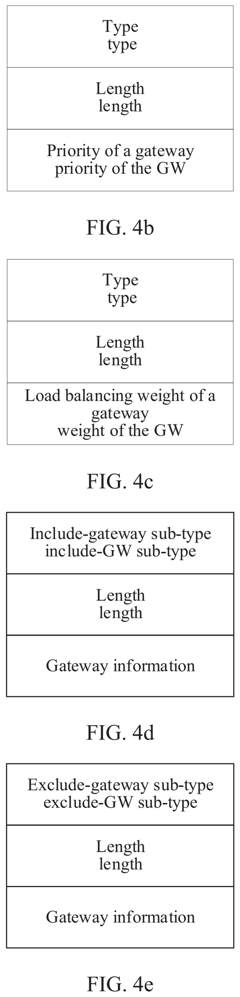

In an example, if the information 1 further includes the routing priority of the backbone network egress device 1, in an example, the MP_REACH_NLRI may further include a routing priority field, where the routing priority field is for carrying the routing priority of the backbone network egress device 1; and in another example, the BGP message 1 may carry a BGP path attribute 1, and a routing priority sub-TLV is newly added to the BGP path attribute 1 to carry the routing priority. FIG. 4b is a diagram of a structure of a routing priority sub-TLV according to an embodiment of this application. The routing priority sub-TLV shown in FIG. 4b may include a type field, a length field, and a priority of a gateway (priority of the GW) field, and the priority of a gateway field is for carrying the routing priority of the backbone network egress device 1.

In another example, if the information 1 further includes the load balancing weight of the backbone network egress device 1, in an example, the MP_REACH_NLRI may further include a weight field, where the weight field is for carrying the load balancing weight of the backbone network egress device 1; and in another example, the BGP message 1 may carry a BGP path attribute 1, and a weight sub-TLV is newly added to the BGP path attribute 1 to carry the load balancing weight. FIG. 4c is a diagram of a structure of a weight sub-TLV according to an embodiment of this application. The weight sub-TLV shown in FIG. 4c may include a type field, a length field, and a load balancing weight of a gateway (weight of the GW) field, and the load balancing weight of a gateway field is for carrying the load balancing weight of the backbone network egress device 1.

S102: The site edge 2 advertises the route 1 to the site edge 1.

S103: The site edge 1 receives the route 1 advertised by the site edge 2.

S104: The site edge 1 obtains a binding relationship 1 between the site edge 2 and the backbone network egress device 1 based on the route 1.

After obtaining the route 1, the site edge 2 may advertise the route 1 to the site edge 1. Accordingly, the site edge 1 may receive the route 1 advertised by the site edge 2. After receiving the route 1 advertised by the site edge 2, the site edge 1 may parse the route 1, to obtain the binding relationship 1 between the site edge 2 and the backbone network egress device 1. After obtaining the binding relationship 1, the site edge 1 may store the binding relationship 1, to help subsequently determine the end-to-end path from the site edge 1 to the site edge 2 based on the binding relationship 1.

In an example, the binding relationship 1 may include the identifier of the site edge 2 and the information 1 about the backbone network egress device 1. In an example, the binding relationship 1 may be shown in Table 2 below.

**Table 2**

| CPE IP | GW IP | Connection SID | Gateway SID | Routing priority | Load balancing weight |
|---|---|---|---|---|---|
| IP address of a site edge 2 | IP address of a backbone network egress device 1 | SID 1 | SID 2 | Routing priority (for example, a priority 1) of the backbone network egress device 1 | Load balancing weight (for example, 0.4) of the backbone network egress device 1 |

In an example, if the route 1 does not include the routing priority of the backbone network egress device 1, the site edge 1 may determine the routing priority of the backbone network egress device 1. For example, the site edge 1 may determine the routing priority of the backbone network egress device 1 according to a routing policy configured for the site edge 1 or based on a load status of the backbone network egress device 1.

In another example, if the route 1 does not include the load balancing weight of the backbone network egress device 1, the site edge 1 may determine the load balancing weight of the backbone network egress device 1. For example, the site edge 1 may determine the load balancing weight of the backbone network egress device 1 according to a load balancing policy configured for the site edge 1 or based on a load status of the backbone network egress device 1.

In an example, the route 1 may further include service intention information, and the service intention indicates a service intention. The site edge 2 advertises the service intention information to the site edge 1 through the route 1, so that in the traffic forwarding stage, a communication apparatus for forwarding the service traffic can perform forwarding based on the service intention information. In this way, the service intention can be satisfied.

The service intention information in this embodiment of this application may include one or more types of information indicating the service intention. In an example, the service intention information may include a quality of service parameter, and the quality of service parameter includes but is not limited to one or more parameters in a delay, a packet loss, a jitter, bandwidth utilization, a bit error rate, and the like. In another example, the service intention parameter may include gateway constraint information that needs to be satisfied by the end-to-end path from the site edge 1 to the site edge 2, and the gateway constraint information includes but is not limited to a gateway that needs to be included and/or a gateway that needs to be excluded.

In this embodiment of this application, the route 1 may include the BGP path attribute 1, and the BGP path attribute 1 is for carrying the service intention information. The BGP path attribute 1 mentioned herein may be a metadata path attribute 1.

In an example, if the service intention information includes the gateway that needs to be included, the metadata path attribute 1 may include a sub-TLV 1, where the sub-TLV 1 is for carrying the gateway that needs to be included.

Refer to FIG. 4d for understanding. FIG. 4d is a diagram of a structure of a sub-TLV 1 included in a metadata path attribute 1 according to an embodiment of this application. As shown in FIG. 4d, the sub-TLV 1 includes an include-gateway sub-type (include-GW sub-type) field, a length field, and a gateway information field.

The include-gateway sub-type field indicates that the sub-TLV is for carrying information about the gateway that needs to be included.

The length field indicates a length of the gateway information field.

The gateway information field may carry gateway information. In an example, the gateway information includes a gateway address. In another example, the gateway information may further include a gateway SID. The gateway SID mentioned herein may be an SRv6 END.SID, or may be a node SID.

In another example, if the service intention information includes the gateway that needs to be excluded, the metadata path attribute 1 may include a sub-TLV 2, where the sub-TLV 2 is for carrying the gateway that needs to be excluded.

Refer to FIG. 4e for understanding. FIG. 4e is a diagram of a structure of a sub-TLV 2 included in a metadata path attribute 1 according to an embodiment of this application. As shown in FIG. 4e, the sub-TLV 2 includes an exclude-gateway sub-type (exclude-GW sub-type) field, a length field, and a gateway information field.

The exclude-gateway sub-type field indicates that the sub-TLV is for carrying information about the gateway that needs to be excluded.

The length field indicates a length of the gateway information field.

The gateway information field may carry gateway information. For the gateway information, refer to the related description part of FIG. 4d. Repetitive descriptions are not provided herein.

In still another example, if the service intention information includes the quality of service parameter, the metadata path attribute 1 may include a sub-TLV 3, where the sub-TLV 3 is for carrying the quality of service parameter.

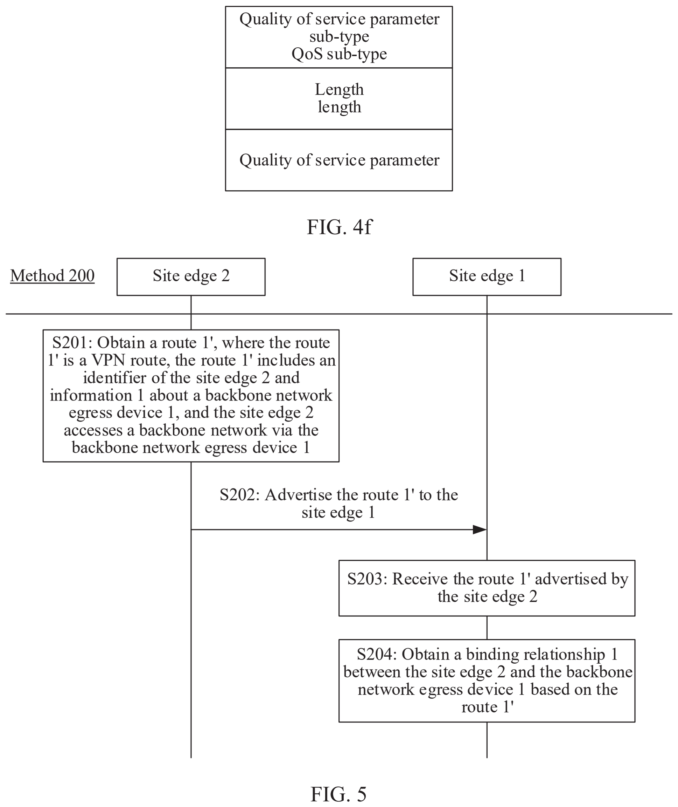

Refer to FIG. 4f for understanding. FIG. 4f is a diagram of a structure of a sub-TLV 3 included in a metadata path attribute 1 according to an embodiment of this application. As shown in FIG. 4f, the sub-TLV 3 includes a quality of service parameter sub-type (QoS sub-type) field, a length field, and a quality of service parameter field.

The quality of service parameter sub-type field indicates that the sub-TLV is for carrying the quality of service parameter.

The length field indicates a length of the quality of service parameter field.

The quality of service parameter field may carry a specific quality of service parameter, for example, one or more parameters in the delay, the packet loss, the bit error rate, and the like.

In this embodiment of this application, when the site edge 2 is multi-homed to the backbone network egress device 1 and the backbone network egress device 2 in the backbone network, the site edge 2 may correspond to a plurality of gateways. That is, in addition to the backbone network egress device 1, the backbone network egress device 2 is also a gateway of the site edge 2. In this case, the site edge 2 may further obtain a route 2, and advertise the route 2 to the site edge 1. The route 2 is an SD-WAN gateway information advertisement route, the route 2 includes the identifier of the site edge 2 and information 2 about the backbone network egress device 2, and the site edge 2 accesses the backbone network via the backbone network egress device 2. Accordingly, the site edge 1 may receive the route 2 advertised by the site edge 2, and obtain a binding relationship 2 between the site edge 2 and the backbone network egress device 2 based on the route 2.

For specific implementation of advertising the route 2 to the site edge 1 by the site edge 2 and obtaining the binding relationship 2 by the site edge 1, an implementation principle thereof is the same as that in the method 100. Therefore, for related implementation, refer to the description part of the method 100. Details are not described herein.

In an example, after the site edge 1 receives the route 2, the binding relationships locally stored by the site edge 1 may be shown in Table 3 below.

**Table 3**

| CPE IP | GW IP | Connection SID | Gateway SID | Routing priority | Load balancing weight |
|---|---|---|---|---|---|
| IP address of a site edge 2 | IP address of a backbone network egress device 1 | SID 1 | SID 2 | Routing priority (for example, a priority 1) of the backbone network egress device 1 | Load balancing weight (for example, 0.4) of the backbone network egress device 1 |
| IP address of the site edge 2 | IP address of a backbone network egress device 2 | SID 1' | SID 2' | Routing priority (for example, a priority 2) of the backbone network egress device 2 | Load balancing weight (for example, 0.6) of the backbone network egress device 2 |

FIG. 5 is a signaling interaction diagram of an information advertisement method according to an embodiment of this application.

The information advertisement method 200 shown in FIG. 5 may be applied to the application scenario shown in FIG. 1a or FIG. 1b. When the method 200 is applied to the application scenario shown in FIG. 1a, a backbone network egress device 1 in the method 200 may correspond to the GW 2 shown in FIG. 1a, and a backbone network egress device 2 in the method 200 may correspond to the GW 4 shown in FIG. 1a. When the method 200 is applied to the application scenario shown in FIG. 1b, a backbone network egress device 1 in the method 200 may correspond to the POP 4 shown in FIG. 1b, and a backbone network egress device 2 in the method 200 may correspond to the POP 9 shown in FIG. 1b.

The method 200 may include, for example, S201 to S204 below.

S201: A site edge 2 obtains a route 1', where the route 1' is a VPN route, the route 1' includes an identifier of the site edge 2 and information 1 about the backbone network egress device 1, and the site edge 2 accesses a backbone network via the backbone network egress device 1.

In this embodiment of this application, the site edge 2 may generate the route 1' based on the identifier of the site edge 2 and the information 1 about the backbone network egress device 1. In an example, the VPN route may include a destination prefix. For example, in the scenario shown in FIG. 1b, the destination prefix may be a network prefix corresponding to enterprise headquarters.

For the identifier of the site edge 2 and the information 1 about the backbone network egress device 1, refer to the related description part of the method 100. Repetitive descriptions are not provided herein.

In an example, the VPN route may include a BGP path attribute 2, and the BGP path attribute 2 is for carrying the identifier of the site edge 2 and the information 1. In a specific example, the BGP path attribute 2 may be a metadata path attribute 2. The metadata path attribute 2 may include a sub-TLV 1, and the sub-TLV 1 is for carrying the identifier of the site edge 2 and the information 1.

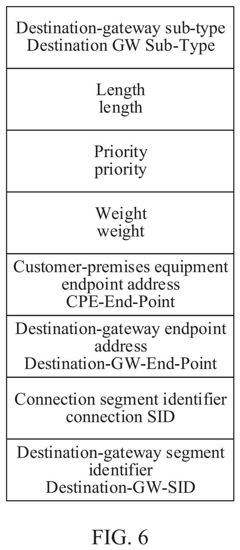

Refer to FIG. 6 for understanding. FIG. 6 is a diagram of a structure of a sub-TLV 1 included in a metadata path attribute 2 according to an embodiment of this application. As shown in FIG. 6, the sub-TLV 1 includes a Destination GW Sub-Type field, a length field, a priority (priority) field, a weight (weight) field, a CPE-End-Point field, a Destination-GW-End-Point field, a connection SID field, and a Destination-GW-SID field.
Destination GW Sub-Type: the destination-gateway sub-type field, identifying that the sub-TLV carries information about a destination gateway.
length: a length. A value of the length field indicates a total length value of fields after the length field.
priority: the priority field, carrying a routing priority of the backbone network egress device 1. In an example, a smaller value of the priority field indicates a higher priority.
weight: a load balancing weight field, carrying a load balancing weight of the backbone network egress device 1.
CPE-End-Point: carries a CPE endpoint address, for example, an IP address of the site edge 2.
Destination-GW-End-Point: carries a destination-gateway endpoint address, for example, an IP address of the backbone network egress device 1.
connection SID: is for carrying an SID 1.
Destination-GW-SID: is for carrying an SID 2.
S202: The site edge 2 advertises the route 1' to a site edge 1.
S203: The site edge 1 receives the route 1' advertised by the site edge 2.
S204: The site edge 1 obtains a binding relationship 1 between the site edge 2 and the backbone network egress device 1 based on the route 1'.

After obtaining the route 1', the site edge 2 may advertise the route 1' to the site edge 1. Accordingly, the site edge 1 may receive the route 1' advertised by the site edge 2. After receiving the route 1' advertised by the site edge 2, the site edge 1 may parse the route 1', to obtain the binding relationship 1 between the site edge 2 and the backbone network egress device 1. After obtaining the binding relationship 1, the site edge 1 may store the binding relationship 1, to help subsequently determine an end-to-end path from the site edge 1 to the site edge 2 based on the binding relationship 1. For the binding relationship 1, refer to Table 2 in the method 100 for understanding. Repetitive descriptions are not provided herein.

In an example, if the route 1' does not include the routing priority of the backbone network egress device 1, the site edge 1 may determine the routing priority of the backbone network egress device 1. For example, the site edge 1 may determine the routing priority of the backbone network egress device 1 according to a routing policy configured for the site edge 1 or based on a load status of the backbone network egress device 1.

In another example, if the route 1' does not include the load balancing weight of the backbone network egress device 1, the site edge 1 may determine the load balancing weight of the backbone network egress device 1. For example, the site edge 1 may determine the load balancing weight of the backbone network egress device 1 according to a load balancing policy configured for the site edge 1 or based on a load status of the backbone network egress device 1.

In an example, the route 1' may further include service intention information, and the service intention indicates a service intention. The site edge 2 advertises the service intention information to the site edge 1 through the route 1, so that in a traffic forwarding stage, a communication apparatus for forwarding service traffic can perform forwarding based on the service intention information. In this way, the service intention can be satisfied. For content specifically included in the service intention information, refer to the related description part of the method 100. Repetitive descriptions are not provided herein.

In this embodiment of this application, the service intention information may be carried by using the BGP path attribute included in the route 1'. In an example, the service intention information and the information 1 may be carried by using a same BGP path attribute, or may be carried by using different BGP path attributes. This is not specifically limited in this embodiment of this application.

In a specific example, both the service intention information and the information 1 may be carried by using the metadata path attribute 2. In this case, both the information 1 and the service intention information may be carried by using one metadata path attribute.

For a specific implementation in which the metadata path attribute 2 carries the service intention information, refer to the description part of carrying the service intention information by the metadata path attribute 1 in the method 100. Repetitive descriptions are not provided herein.

In this embodiment of this application, when the site edge 2 is multi-homed to the backbone network egress device 1 and the backbone network egress device 2 in the backbone network, the site edge 2 may correspond to a plurality of gateways. That is, in addition to the backbone network egress device 1, the backbone network egress device 2 is also a gateway of the site edge 2. In this case, the VPN route may carry a plurality of sub-TLVs 1, and one sub-TLV 1 is for carrying information about one gateway. In this case, the site edge 1 may parse the plurality of sub-TLVs 1, to obtain information about the plurality of gateways bound to the site edge 2. In this case, after the site edge 1 receives the VPN route, for binding relationships locally stored by the site edge 1, refer to Table 3 in the method 100. Repetitive descriptions are not provided herein.

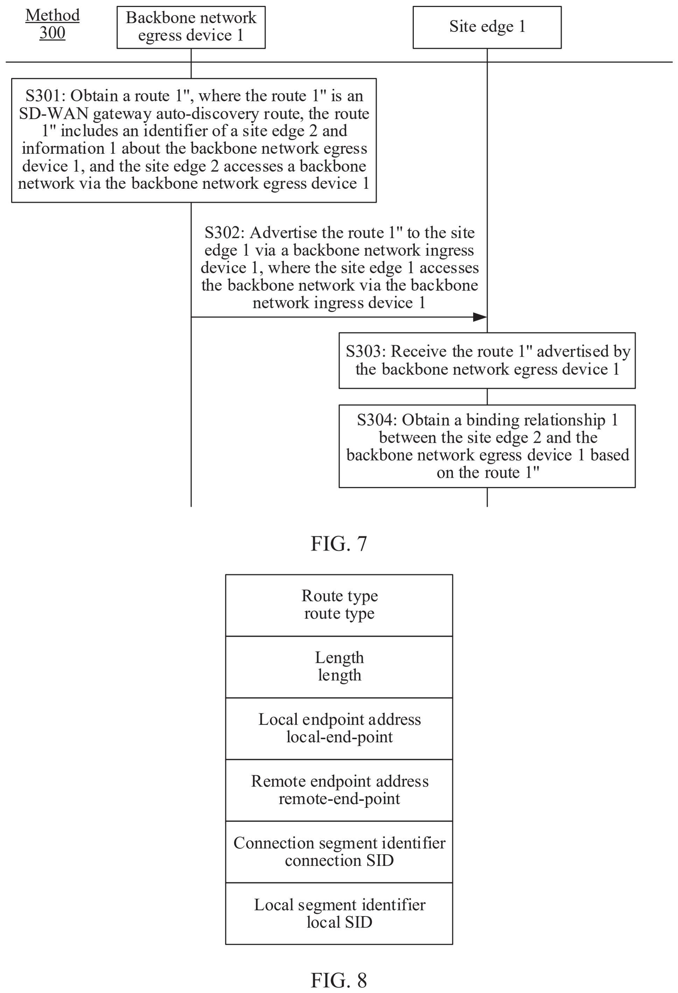

FIG. 7 is a signaling interaction diagram of an information advertisement method according to an embodiment of this application.

The information advertisement method 300 shown in FIG. 7 may be applied to the application scenario shown in FIG. 1a or FIG. 1b.

When the method 300 is applied to the application scenario shown in FIG. 1a, a backbone network egress device 1 in the method 300 may correspond to the GW 2 shown in FIG. 1a, a backbone network egress device 2 in the method 300 may correspond to the GW 4 shown in FIG. 1a, and a backbone network ingress device 1 in the method 300 may correspond to the GW 1 or the GW 3 shown in FIG. 1a.

When the method 300 is applied to the application scenario shown in FIG. 1b, a backbone network egress device 1 in the method 300 may correspond to the POP 4 shown in FIG. 1b, a backbone network egress device 2 in the method 300 may correspond to the POP 9 shown in FIG. 1b, and a backbone network ingress device 1 in the method 300 may correspond to a POP 1 shown in FIG. 1b.

The method 300 may include, for example, S301 to S304 below.

S301: The backbone network egress device 1 obtains a route 1", where the route 1" is an SD-WAN gateway auto-discovery route, the route 1" includes an identifier of a site edge 2 and information 1 about the backbone network egress device 1, and the site edge 2 accesses a backbone network via the backbone network egress device 1.

In this embodiment of this application, the backbone network egress device 1 may generate the route 1" based on the identifier of the site edge 2 and the information 1 about the backbone network egress device 1.

For the identifier of the site edge 2 and the information 1 about the backbone network egress device 1, refer to the related description part of the method 100. Repetitive descriptions are not provided herein.

The route 1" may be carried by using a BGP message 2. Specifically, the route 1" may be carried by using MP_REACH_NLRI in the BGP message 2. The MP_REACH_NLRI for carrying the route 1" is described below by using an example in which the route 1" includes the identifier of the site edge 2, an identifier of the backbone network egress device 1, an SID 1, and an SID 2.

FIG. 8 is a diagram of a structure of another type of MP_REACH_NLRI according to an embodiment of this application. As shown in FIG. 8, the MP_REACH_NLRI includes a route type field, a length field, a local endpoint address (local-end-point) field, a remote endpoint address (remote-end-point) field, a connection SID field, and a local SID field.
route type: a route type. A value of the route type field indicates that the route 1" is the SD-WAN gateway auto-discovery route. In an example, the value of the route type field may be 2.
length: a length. A value of the length field indicates a total length value of fields after the length field.
local-end-point field: carries a local address, and carries an IP address of the backbone network egress device 1 in this application.
remote-end-point: carries a CPE endpoint address, for example, an IP address of the site edge 2.
connection SID: is for carrying the SID 1.
local SID field: is for carrying a local SID, and carrying the SID 2 in this application.

In an example, before S301 is performed, the backbone network egress device 1 and a site edge 1 may advertise a TNP route to each other, and then an SD-WAN tunnel is established between the site edge 2 and the backbone network egress device 1. After the SD-WAN tunnel is established, the backbone network egress device 1 is used as a GW to allocate the connection SID (namely, the SID 1) for the tunnel, to help subsequently obtain the route 1" that includes the SID 1.

In an example, the backbone network egress device 1 may locally configure a role of the backbone network egress device 1 as the gateway. The backbone network device 1 detects that the role of the backbone network device 1 is the gateway. Therefore, after the SD-WAN tunnel is established, the backbone network egress device 1 is used as the GW to allocate the connection SID for the tunnel.

S302: The backbone network egress device 1 advertises the route 1" to the site edge 1 via the backbone network ingress device 1, where the site edge 1 accesses the backbone network via the backbone network ingress device 1.

In this embodiment of this application, a BGP peer relationship may be established between the backbone network egress device 1 and the backbone network ingress device 1, and the backbone network egress device 1 may advertise the route 1" to the backbone network ingress device 1. After receiving the route 1", the backbone network ingress device 1 may further advertise the route 1" to the site edge 1.

S303: The site edge 1 receives the route 1" advertised by the backbone network egress device 1.

S304: The site edge 1 obtains a binding relationship 1 between the site edge 2 and the backbone network egress device 1 based on the route 1".

After receiving the route 1", the site edge 1 may parse the route 1", to obtain the binding relationship 1 between the site edge 2 and the backbone network egress device 1. After obtaining the binding relationship 1, the site edge 1 may store the binding relationship 1, to help subsequently determine an end-to-end path from the site edge 1 to the site edge 2 based on the binding relationship 1. For the binding relationship 1, refer to Table 2 in the method 100 for understanding. Repetitive descriptions are not provided herein.

In an example, after receiving the route 1", the site edge 1 may determine a routing priority of the backbone network egress device 1. For example, the site edge 1 may determine the routing priority of the backbone network egress device 1 according to a routing policy configured for the site edge 1 or based on a load status of the backbone network egress device 1.

In another example, after receiving the route 1", the site edge 1 may determine a load balancing weight of the backbone network egress device 1. For example, the site edge 1 may determine the load balancing weight of the backbone network egress device 1 according to a load balancing policy configured for the site edge 1 or based on a load status of the backbone network egress device 1.

In this embodiment of this application, when the site edge 2 is multi-homed to the backbone network egress device 1 and the backbone network egress device 2 in the backbone network, the site edge 2 may correspond to a plurality of gateways. That is, in addition to the backbone network egress device 1, the backbone network egress device 2 is also a gateway of the site edge 2. In this case, the backbone network egress device 2 may also advertise the SD-WAN gateway auto-discovery route to the site edge 1 via the backbone network ingress device 1, so that the site edge 1 obtains a binding relationship 2 between the site edge 2 and the backbone network egress device 2. For specific implementation of "the backbone network egress device 2 advertises the SD-WAN gateway auto-discovery route to the site edge 1 via the backbone network ingress device 1", an implementation principle thereof is the same as a principle of "the backbone network egress device 1 advertises the SD-WAN gateway auto-discovery route to the site edge 1 via the backbone network ingress device 1". Therefore, for specific implementation of "the backbone network egress device 2 advertises the SD-WAN gateway auto-discovery route to the site edge 1 via the backbone network ingress device 1", refer to the description part of the method 300. Repetitive descriptions are not provided herein. In this case, after the site edge 1 receives an SD-WAN Ethernet auto-discovery route advertised by the backbone network egress device 2, for locally stored binding relationships, refer to Table 3 in the method 100. Repetitive descriptions are not provided herein.

In a conventional technology, a binding relationship between a site edge and a corresponding gateway of the site edge may be manually configured. For example, in the scenario shown in FIG. 1a, in a manual configuration manner, gateways of the site edge 1 may be configured as the GW 1 and the GW 3 on the site edge 1, and gateways of the site edge 2 may be configured as the GW 2 and the GW 4 on the site edge 2. For another example, in the scenario shown in FIG. 1b, in a manual configuration manner, a gateway of the site edge 1 may be configured as the POP 1 on the site edge 1, and gateways of the site edge 2 may be configured as the POP 4 and the POP 9 on the site edge 2. The manual configuration manner is inefficient. In view of this, embodiments of this application further provide corresponding route advertisement methods 400 and 500, so that a site edge can determine, through a received route, a gateway corresponding to the site edge, and the gateway corresponding to the site edge does not need to be configured on the site edge in a manual configuration manner.

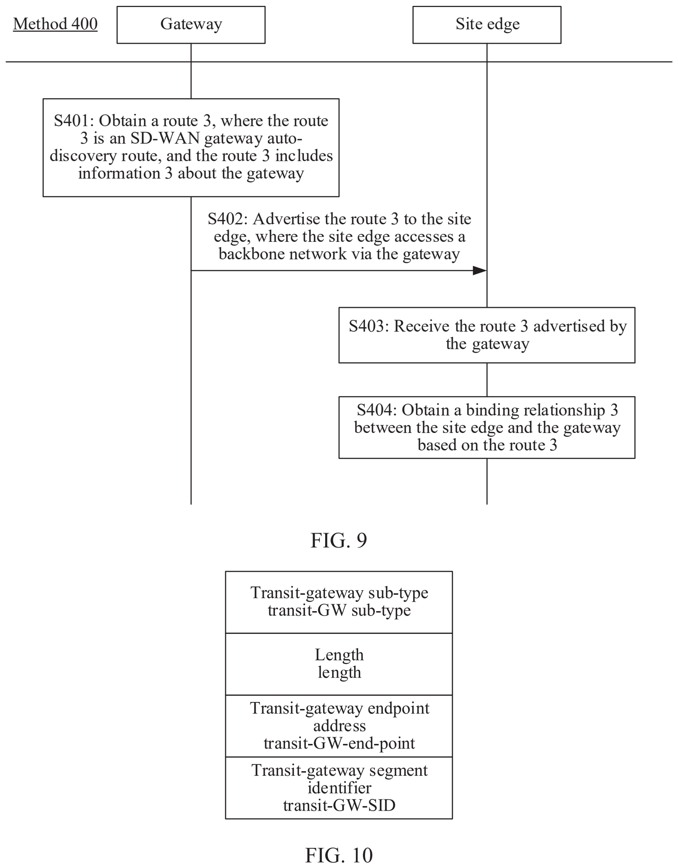

FIG. 9 is a signaling interaction diagram of a route advertisement method according to an embodiment of this application. The method 400 shown in FIG. 9 may be applied to the application scenario shown in FIG. 1a or the application scenario shown in FIG. 1b.

When the method 400 is applied to the application scenario shown in FIG. 1a:

In an example, a site edge in the method 400 may be the site edge 1 shown in FIG. 1a. Accordingly, a gateway in the method 400 may be the GW 1 or the GW 3 shown in FIG. 1a.

In another example, a site edge in the method 400 may be the site edge 2 shown in FIG. 1a. Accordingly, a gateway in the method 400 may be the GW 2 or the GW 4 shown in FIG. 1a.

When the method 400 is applied to the application scenario shown in FIG. 1b:

In an example, a site edge in the method 400 may be the site edge 1 shown in FIG. 1b. Accordingly, a gateway in the method 400 may be the POP 1 shown in FIG. 1b.

In another example, a site edge in the method 400 may be the site edge 2 shown in FIG. 1b. Accordingly, a gateway in the method 400 may be the POP 4 or the POP 9 shown in FIG. 1b.

The method 400 shown in FIG. 9 may include S401 to S404 below.

S401: The gateway obtains a route 3, where the route 3 is an SD-WAN gateway auto-discovery route, and the route 3 includes information 3 about the gateway.

In this embodiment of this application, the gateway may generate the route 3 based on the information 3 about the gateway.

In an example, before S401 is performed, the gateway and the site edge may advertise a TNP route to each other, and then an SD-WAN tunnel is established between the site edge and the gateway. After the SD-WAN tunnel is established, the gateway allocates a connection SID (namely, an SID 3) for the tunnel, to help subsequently obtain the route 3 that includes the SID 3.

In an example, the gateway may locally configure a role of the gateway as a gateway. The gateway detects that the role of the gateway is the gateway. Therefore, after the SD-WAN tunnel is established, the gateway allocates the connection SID for the tunnel. In an example, the information 3 may include an IP address of the gateway and an IP address of the site edge.

In an example, the information 3 may include the SID 3 allocated by the gateway for an adjacency relationship between the gateway and the site edge, so that in a subsequent traffic forwarding stage, a packet can be encapsulated based on the SID 3, to perform traffic forwarding based on the SID 3. The SID 3 may be an SRv6 END.X SID, or may be an adj-SID. For example, in a network scenario in which an SRv6 technology is applied to forwarding, the SID 3 may be the SRv6 END.X SID; or in a network scenario in which an MPLS technology is applied to forwarding, the SID 3 may be the adj-SID.

In another example, the information 3 may include an SID 4 of the gateway, so that in a subsequent traffic forwarding stage, a packet can be encapsulated based on the SID 4, to perform traffic forwarding based on the SID 4. The SID 4 may be an SRv6 END.SID, or may be a node SID. For example, in a network scenario in which an SRv6 technology is applied to forwarding, the SID 4 may be the SRv6 END.SID; or in a network scenario in which an MPLS technology is applied to forwarding, the SID 4 may be the node SID.

The route 3 may be carried by using a BGP message 3. Specifically, the route 3 may be carried by using MP_REACH_NLRI in the BGP message 3. For a possible structure of the MP_REACH_NLRI for carrying the route 3, refer to FIG. 8. Repetitive descriptions are not provided herein.

S402: The gateway advertises the route 3 to the site edge, where the site edge accesses a backbone network via the gateway.

S403: The site edge receives the route 3 advertised by the gateway.

S404: The site edge obtains a binding relationship 3 between the site edge and the gateway based on the route 3.

After obtaining the route 3, the gateway may advertise the route 3 to the site edge. Accordingly, the site edge may receive the route 3 advertised by the gateway. After receiving the route 3, the site edge may parse the route 3, to obtain the binding relationship 3 between the site edge and the gateway, to help subsequently determine an end-to-end path based on the binding relationship 3.

In an example, after receiving the route 3, the site edge may further determine a routing priority of the gateway. For example, the site edge may determine the routing priority of the gateway according to a routing policy configured for the site edge or based on a load status of the gateway.

In another example, after receiving the route 3, the site edge may further determine a load balancing weight of the gateway. For example, the site edge may determine the load balancing weight of the gateway according to a load balancing policy configured for the site edge or based on a load status of the gateway.

In an example, the route 3 may further include transit-gateway information, and the transit-gateway information indicates at least one transit gateway between a backbone network ingress device and a backbone network egress device in the backbone network, so that the site edge performs path orchestration based on the transit gateway. In an example, the site edge may determine, based on a service requirement and the transit gateway, a gateway constraint condition that needs to be followed by the end-to-end path. The gateway constraint condition mentioned herein includes a gateway that needs to be included and/or a gateway that needs to be excluded. In a specific example, when performing path orchestration based on the service requirement, the site edge may determine, in the transit gateway, the gateway that needs to be included by the end-to-end path and/or the gateway that needs to be excluded by the end-to-end path, so that the determined end-to-end path satisfies the service requirement.

In an example, the transit-gateway information may be carried by using a BGP path attribute. In a specific example, the transit-gateway information may be carried by using a metadata path attribute 3. For example, the metadata path attribute 3 may include at least one transit-gateway sub-TLV, where the transit-gateway sub-TLV is for carrying information about the transit gateway, and one transit-gateway sub-TLV is for carrying information about one transit gateway.

In this embodiment of this application, for a transit gateway, information about the transit gateway includes at least an endpoint address (for example, an IP address) of the transit gateway. Optionally, the information about the transit gateway may further include an SID of the transit gateway. The SID of the transit gateway may be an SRv6 END.SID, or may be a node SID.

The transit-gateway sub-TLV may be understood with reference to FIG. 10. FIG. 10 is a diagram of a structure of a transit-gateway sub-TLV according to an embodiment of this application. As shown in FIG. 10, the transit-gateway sub-TLV includes a transit-gateway sub-type (transit-GW sub-type) field, a length field, a transit-gateway endpoint address (transit-GW-end-point) field, and a transit-gateway SID (transit-GW-SID) field.
transit-GW sub-type field: identifies that the sub-TLV carries the gateway information of the transit gateway.
length field: indicates a total length value of fields after the length field.
transit-GW-end-point field: indicates the endpoint address of the transit gateway.
transit-GW-SID field: indicates the SID corresponding to the transit gateway.

In some examples, a site edge may correspond to a plurality of gateways. In this case, each gateway may send an SD-WAN gateway auto-discovery route to the site edge, so that the site edge obtains a binding relationship between the site edge and the gateway. For example, in the scenario shown in FIG. 1a, the site edge 1 is multi-homed to the GW 1 and the GW 3. In this case, the GW 1 may send, to the site edge 1, an SD-WAN gateway auto-discovery route that carries information about the GW 1, and the GW 3 may send, to the site edge 1, an SD-WAN gateway auto-discovery route that carries information about the GW 3. For another example, in the scenario shown in FIG. 1b, the site edge 2 is dual-homed to the POP 4 and the POP 9. In this case, the POP 4 may send, to the site edge 2, an SD-WAN gateway auto-discovery route that carries information about the POP 4, and the POP 9 may send, to the site edge 2, an SD-WAN gateway auto-discovery route that carries information about the POP 9.

The site edge 1 shown in FIG. 1a is used as an example. After both the GW 1 and the GW 3 send the SD-WAN gateway auto-discovery routes to the site edge 1, the site edge 1 may obtain binding relationships shown in Table 4 below.

**Table 4**

| CPE IP | GW IP | Connection SID | Gateway SID | Routing priority | Load balancing weight |
|---|---|---|---|---|---|
| IP address of a site edge 1 | IP address of a GW 1 | SID 3 | SID 4 | Routing priority of the GW 1 | Load balancing weight of the GW 1 |
| IP address of the site edge 1 | IP address of a GW 3 | SID 3' | SID 4' | Routing priority of the GW 3 | Load balancing weight of the GW 3 |

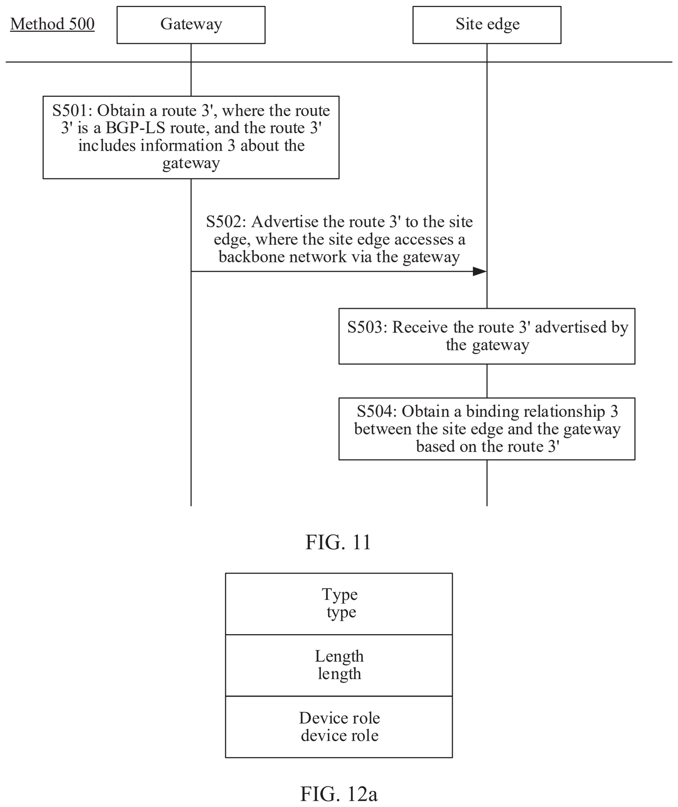

FIG. 11 is a signaling interaction diagram of another route advertisement method according to an embodiment of this application. The method 500 shown in FIG. 11 may be applied to the application scenario shown in FIG. 1a or the application scenario shown in FIG. 1b.

For a site edge and a gateway in the method 500, refer to the description part of the site edge and the gateway in the method 400. Repetitive descriptions are not provided herein.

The method 500 shown in FIG. 11 may include S501 to S504 below.

S501: The gateway obtains a route 3', where the route 3' is a BGP-LS route, and the route 3' includes information 3 about the gateway.

In this embodiment of this application, the gateway may generate the route 3' based on the information 3 about the gateway.

In an example, before S501 is performed, a GRE tunnel may be established between the gateway and the site edge, then a BGP session is established between the site edge and the gateway by using a GRE tunnel address, and a BGP-LS address family is enabled between the site edge and the gateway. In addition, the gateway enables a BGP egress peer engineering (egress peer engineering, EPE) function. In this case, the gateway may allocate an SID 3 for an adjacency relationship (the BGP session) between the gateway and the site. The SID 3 may be an SRv6 END.X SID, or may be an adj-SID.

For BGP EPE, it should be noted that the BGP EPE may be for allocating a BGP peer (peer) SID for an inter-domain path, and the peer SID may be directly transferred to a network controller through BGP-LS extension. A forwarding device that does not establish a BGP-LS peer with the controller may first transfer peer-SID information to a BGP peer by using a BGP-LS, and then the BGP peer transfers the peer-SID information to the network controller by using the BGP-LS. The BGP EPE can be for allocating a peer-node SID and a peer-adj SID to peers.

The peer-node SID indicates a peer node. The peer-node SID is allocated for each BGP session. An external border gateway protocol (External Border Gateway Protocol, EBGP) peer established based on a loopback (loopback) interface may correspond to a plurality of physical links. Therefore, a peer-node SID for the peer corresponds to a plurality of egress interfaces.

The peer-adj SID indicates an adjacency to a peer. The EBGP peer established based on the loopback interface may correspond to a plurality of physical links. One peer-adj SID is allocated to each adjacency, and forwarding is performed by using a specified link (corresponding to a specified egress interface).

In an example, the route 3' may include a TLV 1, and the TLV 1 indicates that the route 3' is for advertising the information about the gateway. In a specific example, the TLV 1 may be a role advertisement TLV, and the role advertisement TLV indicates that a device role that advertises the route 3' is the gateway. In another specific example, the TLV 1 may be a gateway information indication TLV, and a type field in the TLV indicates that a device that advertises the route 3' is the gateway.

The role advertisement TLV may be understood with reference to FIG. 12a. FIG. 12a is a diagram of a structure of a role advertisement TLV according to an embodiment of this application. As shown in FIG. 12a, the role advertisement TLV includes a type field, a length field, and a device role (device role) field.

The type field indicates that the TLV is the role advertisement TLV.

The length field indicates a length of the device role field.

The device role field carries a device role. For example, when a value of the device role field is 1, the device role field identifies that the device role is the gateway.

It can be learned from the foregoing descriptions of the SID 3 that, in an example, the information 3 may include the SID 3 and/or an SID 4. In this case, the route 3' may include a TLV 2 and a TLV 3, where the TLV 2 is for carrying the SID 3, and the TLV 3 is for carrying the SID 4.

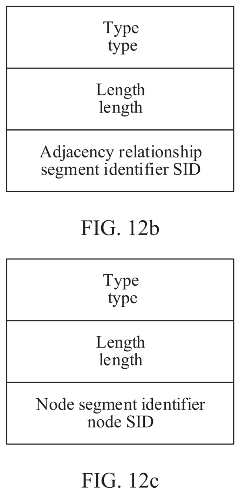

In an example, the TLV 2 may be an adjacency relationship SID TLV. A structure of the adjacency relationship SID TLV may be understood with reference to FIG. 12b. FIG. 12b is a diagram of a structure of an adjacency relationship SID TLV according to an embodiment of this application. As shown in FIG. 12b, the adjacency relationship SID TLV includes a type field, a length field, and an adjacency relationship SID field.

The type field indicates that the TLV is the adjacency relationship SID TLV.

The length field indicates a length of the adjacency relationship SID field.

The adjacency relationship SID field carries the SID allocated by the gateway for the adjacency relationship between the gateway and the site edge. In this embodiment of this application, the adjacency relationship SID field may be for carrying the SID 3.

In another example, when the SID 3 is an SRv6 End.X SID, the TLV 2 may be an SRv6 End.X SID TLV.

In an example, the TLV 3 may be a node (node) SID TLV. A structure of the node SID TLV may be understood with reference to FIG. 12c. FIG. 12c is a diagram of a structure of a node SID TLV according to an embodiment of this application. As shown in FIG. 12c, the node SID TLV includes a type field, a length field, and a node SID field.

The type field indicates that the TLV is the node SID TLV.

The length field indicates a length of the node SID field.

The node SID field carries a gateway SID. In this embodiment of this application, the node SID field may be for carrying the SID 4.

S502: The gateway advertises the route 3' to the site edge, where the site edge accesses a backbone network via the gateway.

S503: The site edge receives the route 3' advertised by the gateway.

S504: The site edge obtains a binding relationship 3 between the site edge and the gateway based on the route 3'.

After obtaining the route 3', the gateway may advertise the route 3' to the site edge. Accordingly, the site edge may receive the route 3' advertised by the gateway. After receiving the route 3', the site edge may parse the route 3', to obtain the binding relationship 3 between the site edge and the gateway, to help subsequently determine an end-to-end path based on the binding relationship 3.

In an example, after receiving the route 3', the site edge may further determine a routing priority of the gateway. For example, the site edge may determine the routing priority of the gateway according to a routing policy configured for the site edge or based on a load status of the gateway.

In another example, after receiving the route 3', the site edge may further determine a load balancing weight of the gateway. For example, the site edge may determine the load balancing weight of the gateway according to a load balancing policy configured for the site edge or based on a load status of the gateway.

In an example, the route 3' may further include transit-gateway information, and the transit-gateway information indicates at least one transit gateway between a backbone network ingress device and a backbone network egress device in the backbone network, so that the site edge performs path orchestration based on the transit gateway. In an example, the site edge may determine, based on a service requirement and the transit gateway, a gateway constraint condition that needs to be followed by the end-to-end path. The gateway constraint condition mentioned herein includes a gateway that needs to be included and/or a gateway that needs to be excluded. In a specific example, when performing path orchestration based on the service requirement, the site edge may determine, in the transit gateway, the gateway that needs to be included by the end-to-end path and/or the gateway that needs to be excluded by the end-to-end path, so that the determined end-to-end path satisfies the service requirement.

In an example, the transit-gateway information may be carried by using a BGP path attribute. In a specific example, the transit-gateway information may be carried by using a metadata path attribute 4. For example, the metadata path attribute 4 may include at least one transit-gateway sub-TLV, where the transit-gateway sub-TLV is for carrying information about the transit gateway, and one transit-gateway sub-TLV is for carrying information about one transit gateway.

In this embodiment of this application, for a transit gateway, information about the transit gateway includes at least an endpoint address (for example, an IP address) of the transit gateway. Optionally, the information about the transit gateway may further include an SID of the transit gateway. The SID of the transit gateway may be an SRv6 END.SID, or may be a node SID.

For the transit-gateway sub-TLV, refer to the description part of FIG. 10. Repetitive descriptions are not provided herein.

In some examples, a site edge may correspond to a plurality of gateways. In this case, each gateway may send a BGP-LS route to the site edge, so that the site edge obtains a binding relationship between the site edge and the gateway. For example, in the scenario shown in FIG. 1a, the site edge 1 is multi-homed to the GW 1 and the GW 3. In this case, the GW 1 may send, to the site edge 1, a BGP-LS route that carries information about the GW 1, and the GW 3 may send, to the site edge 1, a BGP-LS route that carries information about the GW 3. For another example, in the scenario shown in FIG. 1b, the site edge 2 is dual-homed to the POP 4 and the POP 9. In this case, the POP 4 may send, to the site edge 2, a BGP-LS route that carries information about the POP 4, and the POP 9 may send, to the site edge 2, a BGP-LS route that carries information about the POP 9.

The site edge 1 shown in FIG. 1a is used as an example. After both the GW 1 and the GW 3 send the BGP-LS routes to the site edge 1, the site edge 1 may obtain the binding relationships shown in Table 4 above.

By using the method 500, the gateway and the site edge do not need to enable an SD-WAN address family, and only need to enable the BGP-LS address family.

After one of the foregoing methods 100 to 300 and one of the foregoing methods 400 and 500 are performed, the site edge 1 may orchestrate the end-to-end path based on the locally stored binding relationships between the site edge and the gateway.

The following describes, by using a specific example, a specific implementation in which the site edge 1 orchestrates the end-to-end path.

The scenario shown in FIG. 1b is used as an example. Binding relationships that are between the site edge and the gateway and that are locally stored by the site edge 1 may be shown in Table 5 below.

**Table 5**

| Number | CPE IP | GW IP | Connection SID | Gateway SID | Routing priority | Load balancing weight |
|---|---|---|---|---|---|---|
| 1 | Edge 2-IP | POP 4-IP | Edge 2-POP 4-SID | POP 4-SID | POP 4-priority | POP 4-weight |
| 2 | Edge 2-IP | POP 9-IP | Edge 2-POP 9-SID | POP 9-SID | POP 9-priority | POP 9-weight |
| 3 | Edge 1-IP | POP 1-IP | Edge 1-POP 1-SID | POP 1-SID | POP 1-priority | POP 1-weight |

In Table 5:
"*-IP" indicates an IP address of "*". For example, edge 2-IP indicates the IP address of the site edge 2.
"a-b-SID" indicates an SID of an adjacency relationship between a and b. For example, edge 2-POP 4-SID indicates an SID of an adjacency relationship between the edge 2 and the POP 4.
"*-SID" indicates an SID of "*". For example, POP 4-SID indicates an SID of the POP 4.
"*-priority" indicates a routing priority of "*". For example, POP 4-priority indicates a routing priority of the POP 4.
"*-weight" indicates a load balancing weight of "*". For example, POP 4-weight indicates a load balancing weight of the POP 4.

In an example, after receiving a service route (for example, the VPN route) advertised by the site edge 1, the site edge 2 may orchestrate an end-to-end path for the service route.

In a specific example, the site edge 2 may determine an end-to-end path 1 from the site edge 1 to the edge 2 based on the binding relationship shown in a 1^{st} row and the binding relationship shown in a 3^{rd} row in Table 5. The end-to-end path 1 includes the POP 1 and the POP 4. That is, the end-to-end path 1 may be edge 1-POP 1-POP 4-edge 2.

In another specific example, the site edge 2 may determine an end-to-end path 2 from the site edge 1 to the edge 2 based on the binding relationship shown in a 2^{nd} row and the binding relationship shown in a 3^{rd} row in Table 5. The end-to-end path 2 includes the POP 1 and the POP 9. That is, the end-to-end path 2 may be edge 1-POP 1-POP 9-edge 2.

In an example, after obtaining the end-to-end path 1 and the end-to-end path 2 through the orchestration, the site edge 1 may select one path from the two end-to-end paths as an actual path for forwarding the service traffic. In an example, the site edge 1 may determine, based on the routing priority of the POP 4 and a routing priority of the POP 9, an end-to-end path corresponding to a POP with a higher routing priority as the actual path for forwarding the service traffic. For example, if the routing priority of the POP 4 is higher than the routing priority of the POP 9, the end-to-end path 1 may be determined as the actual path for forwarding the service traffic.

In another example, after obtaining the end-to-end path 1 and the end-to-end path 2 through the orchestration, the site edge 1 may set the two end-to-end paths to active and standby paths. In an example, based on the routing priority of the POP 4 and a routing priority of the POP 9, the site edge 1 may determine an end-to-end path corresponding to a POP with a higher routing priority as the active path, and determine an end-to-end path corresponding to a POP with a lower routing priority as the standby path. For example, if the routing priority of the POP 4 is higher than the routing priority of the POP 9, the end-to-end path 1 may be determined as the active path, and the end-to-end path 2 may be determined as the standby path.

In still another example, after obtaining the end-to-end path 1 and the end-to-end path 2 through the orchestration, the site edge 1 may set the two end-to-end paths to load balancing paths. The end-to-end path 1 and the end-to-end path 2 may be set to equal-cost load balancing paths, or may be set to unequal-cost load balancing paths. This is not specifically limited in this embodiment of this application.

In an example, a load balancing weight of the end-to-end path 1 may be determined based on the load balancing weight of the POP 4, and a load balancing weight of the end-to-end path 2 may be determined based on a load balancing weight of the POP 9. For example, the load balancing weight of the end-to-end path 1 may be equal to the load balancing weight of the POP 4, and the load balancing weight of the end-to-end path 2 may be equal to the load balancing weight of the POP 9. In this case, when the load balancing weight of the POP 4 is equal to the load balancing weight of the POP 9, equal-cost load balancing may be implemented on the end-to-end path 1 and the end-to-end path 2; or when the load balancing weight of the POP 4 is unequal to the load balancing weight of the POP 9, unequal-cost load balancing may be implemented on the end-to-end path 1 and the end-to-end path 2.

In another example, load balancing weights of the end-to-end path 1 and the end-to-end path 2 may alternatively be set by the edge 1, and do not depend on load balancing weights of the POP 4 and the POP 9. This is not specifically limited in this embodiment of this application.

Similarly, in the scenario shown in FIG. 1a, the site edge 1 may obtain four end-to-end paths through the orchestration based on the locally stored binding relationships between the site edge and the gateway:
End-to-end path: site edge 1-GW 1-GW 2-edge 2.
End-to-end path: site edge 1-GW 1-GW 4-edge 2.
End-to-end path: site edge 1-GW 3-GW 2-edge 2.
End-to-end path: site edge 1-GW 3-GW 4-edge 2.

For a principle of a specific implementation of obtaining the four end-to-end paths through the orchestration based on the locally stored binding relationships between the site edge and the gateway in FIG. 1a, refer to the description part of obtaining the end-to-end path 1 and the end-to-end path 2 by the site edge 1 through the orchestration. Repetitive descriptions are not provided herein.

Currently, when transmission of the service traffic needs to be performed across the backbone network, service-related configuration needs to be performed in the backbone network. For example, VPN configuration needs to be performed in the backbone network. Configuration efficiency is low, resulting in low service provisioning efficiency. Especially when the backbone network includes a plurality of heterogeneous network domains, a service VPN instance needs to be planned at all border interconnection locations of a transit heterogeneous network, to perform service re-addressing, forwarding, and isolation. In addition, because the backbone network needs to sense a service, scalability of the backbone network is also affected.

Accordingly, in the service traffic forwarding stage, a network device in the backbone network also needs to perform traffic forwarding based on the VPN configuration. Consequently, service traffic forwarding efficiency is also low. The scenario shown in FIG. 1b is used as an example. When the service traffic reaches the POP 1, the POP 1 needs to determine a forwarding path of the service traffic based on the VPN instance, and further performs forwarding. When the service traffic is forwarded to a POP 2, a POP 3, and the POP 4, the POP 2, the POP 3, and the POP 4 also need to further determine the forwarding path of the service traffic based on the VPN configuration, to further forward the service traffic.

To resolve the foregoing problem, embodiments of this application provide a traffic forwarding method. The following describes the traffic forwarding method with reference to the accompanying drawings.

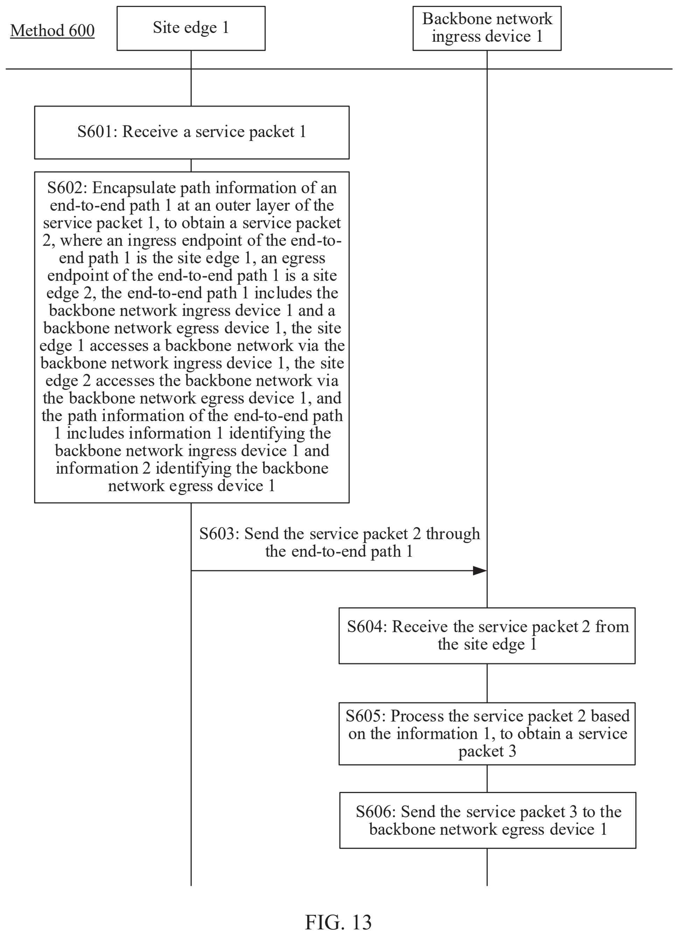

FIG. 13 is a signaling interaction diagram of a traffic forwarding method according to an embodiment of this application. The method 600 shown in FIG. 13 may be applied to the application scenario shown in FIG. 1a, may be applied to the application scenario shown in FIG. 1b, or may be applied to the application scenario shown in FIG. 1c.

When the method 600 is applied to the application scenario shown in FIG. 1a, a site edge 1 in the method 600 may correspond to the site edge 1 shown in FIG. 1a, a site edge 2 in the method 600 may correspond to the site edge 2 shown in FIG. 1a, a backbone network ingress device 1 in the method 600 may correspond to the GW 1 shown in FIG. 1a, and a backbone network egress device 1 in the method 600 may correspond to the GW 2 or the GW 4 shown in FIG. 1a.

When the method 600 is applied to the application scenario shown in FIG. 1b, a site edge 1 in the method 600 may correspond to the site edge 1 shown in FIG. 1b, a site edge 2 in the method 600 may correspond to the site edge 2 shown in FIG. 1b, a backbone network ingress device 1 in the method 600 may correspond to a POP 1 shown in FIG. 1a, and a backbone network egress device 1 in the method 600 may correspond to the POP 4 or the POP 9 shown in FIG. 1b.

When the method 600 is applied to the application scenario shown in FIG. 1c, a site edge 1 in the method 600 may correspond to a site edge 1 shown in FIG. 1c, a site edge 2 in the method 600 may correspond to a site edge 2 shown in FIG. 1c, a backbone network ingress device 1 in the method 600 may correspond to a POP 1 shown in FIG. 1c, and a backbone network egress device 1 in the method 600 may correspond to a POP 4 or a POP 9 shown in FIG. 1c.

The method 600 may include, for example, S601 to S606 below.

S601: The site edge 1 receives a service packet 1.

In an example, the site edge may receive the service packet 1 from a user equipment. The user equipment may be a terminal device, or may be a server. This is not specifically limited in this embodiment of this application. In an example, the service packet 1 may include a source address, a destination address, and a payload.

S602: The site edge 1 encapsulates path information of an end-to-end path 1 at an outer layer of the service packet 1, to obtain a service packet 2, where an ingress endpoint of the end-to-end path 1 is the site edge 1, an egress endpoint of the end-to-end path 1 is the site edge 2, the end-to-end path 1 includes the backbone network ingress device 1 and the backbone network egress device 1, the site edge 1 accesses a backbone network via the backbone network ingress device 1, the site edge 2 accesses the backbone network via the backbone network egress device 1, and the path information of the end-to-end path 1 includes information 1 identifying the backbone network ingress device 1 and information 2 identifying the backbone network egress device 1.

In this embodiment of this application, the site edge 1 accesses the backbone network via the backbone network ingress device 1, and the site edge 2 accesses the backbone network via the backbone network egress device 1. In an example, the site edge 1 may access the backbone network ingress device 1 through an internet. In another example, the site edge 1 may access the backbone network ingress device 1 through an SD-WAN tunnel. Similarly, in an example, the site edge 2 may access the backbone network egress device 1 through the internet. In another example, the site edge 2 may access the backbone network egress device 1 through the SD-WAN tunnel.

In an example, after receiving the service packet 1, the site edge 1 may encapsulate the path information of the end-to-end path 1 at the outer layer of the service packet 1, to obtain the service packet 2. After the path information is encapsulated at the outer layer of the service packet 1, the service packet 1 belongs to a payload in the service packet 2.

In another example, when the service packet 1 is encapsulated, in addition to the path information, service intention information may be further encapsulated at the outer layer of the service packet 1, to obtain a service packet 2 that includes the path information and the service intention information. In this way, after the service packet 2 is forwarded, when a forwarding device that receives the service packet 2 further forwards the service packet 2, a corresponding path can be selected based on the service intention information to perform forwarding, so that a service intention is satisfied, and accordingly, quality of service provided for a service is improved.

The service intention information in this embodiment of this application may include one or more types of information indicating the service intention. In an example, the service intention information may include a quality of service parameter, and the quality of service parameter includes but is not limited to one or more parameters in a delay, a packet loss, a jitter, bandwidth utilization, a bit error rate, and the like. In another example, the service intention parameter may include gateway constraint information that needs to be satisfied by the end-to-end path from the site edge 1 to the site edge 2, and the gateway constraint information includes but is not limited to a gateway that needs to be included and/or a gateway that needs to be excluded.

In a specific example, a metadata field may be encapsulated at the outer layer of the service packet 1, and the metadata field is for carrying the service intention information. The metadata field may be, for example, carried by using an extension header. In another specific example, the service intention information may be carried by using an available field in outer encapsulation of the service packet 2.

In an example, before encapsulating the path information at the outer layer of the service packet 1, the site edge 1 may determine, based on the service packet 1, the path information of the end-to-end path 1 for transferring the service packet 1. In an example, the site edge may determine the path information of the end-to-end path 1 based on the destination address in the service packet 1.

In a specific example, the site edge 1 may pre-store a mapping relationship between the destination address in the service packet 1 and the path information, and the site edge 1 may match the mapping relationship based on the destination address in the service packet 1, to obtain the path information.

In another specific example, the site edge 1 may determine, based on the destination address in the service packet 1, a next hop for forwarding the service packet. Specifically, the site edge 1 may query a service entry based on the destination address in the service packet 1, to determine that the next hop for forwarding the service packet 1 is the site edge 2. Further, an SR policy 1 is iterated by using an IP address of the site edge 2, to obtain the path information of the end-to-end path. In an example, the IP address of the site edge 2 may match destination addresses in a plurality of SR policies. When the IP address of the site edge 2 successfully matches a destination address in the SR policy 1, it is determined that the SR policy 1 is iterated by using the IP address of the site edge 2. Accordingly, path information indicated by the SR policy 1 may be determined as the path information of the end-to-end path 1.

In an example, the SR policy 1 may be an SRv6 policy. In this case, the end-to-end path 1 may be an SRv6 tunnel.

In another example, the SR policy 1 may be an MPLS SR policy. In this case, the end-to-end path 1 may be an SR-MPLS TE policy.

In an example, the end-to-end path 1 may be pre-orchestrated by the site edge 1. In this case, before receiving the service packet 1, the site edge 1 may further orchestrate the end-to-end path 1. In a specific example, the service packet 1 is for carrying a VPN service, and the site edge 1 may orchestrate the end-to-end path 1 from the site edge 1 to the site edge 2 by using the backbone network ingress device 1 and the backbone network egress device 1 on demand based on the VPN service. In an example, after receiving a VPN route that includes a destination prefix and that is advertised by the site edge 2, the site edge 1 may orchestrate an end-to-end path for the VPN route. In a specific example, the site edge 1 may orchestrate the end-to-end path 1 for the VPN route based on a binding relationship 1 between the site edge 1 and the backbone network ingress device 1 and a binding relationship 2 between the site edge 2 and the backbone network egress device 1. When the method 600 is applied to the application scenario shown in FIG. 1b or FIG. 1c, the destination prefix may be, for example, a network prefix corresponding to enterprise headquarters.

In an example, if the end-to-end path is the SRv6 tunnel, the service packet 2 may include an IPv6 header and an SRH, the information 1 and the information 2 may be carried in the SRH, and a destination address in the IPv6 header points to the backbone network ingress device 1, so that the site edge 1 forwards the service packet 2 to the backbone network ingress device 1 based on the destination address in the IPv6 header. In an example, the destination address in the IPv6 header may be an END.SID 1 of the backbone network ingress device.

In an example, when the end-to-end path is the SRv6 tunnel, the information 1 may be the END.SID 1 of the backbone network ingress device, and the information 2 may be an END.SID 2 of the backbone network egress device 1. In this case, the information 1 further includes an IPv6 address of the site edge 2, and accordingly, the SRH may further include the IPv6 address of the site edge 2. In this case, the SRH may indicate a path from the backbone network ingress device 1 to the site edge 2.

In another example, when the end-to-end path is the SRv6 tunnel, the information 1 may be the END.SID 1 of the backbone network ingress device, and the information 2 may be an END.X SID allocated by the backbone network egress device 1 for an adjacency relationship between the backbone network egress device 1 and the site edge 2. In this case, the SRH may also indicate a path from the backbone network ingress device 1 to the site edge 2.

In an example, the END.SID 1 may indicate a new packet forwarding operation. In this case, the backbone network ingress device 1 only needs to determine, based on the END.SID 1, how to forward the service packet 2, and does not need to determine, based on VPN information, how to forward the service packet 2. In a specific example, the operation associated with the END.SID 1 includes: matching an overlay SRv6 policy from the backbone network ingress device 1 to the backbone network egress device 1 based on a next-hop SID of the END.SID 1. It can be learned from the foregoing descriptions of the path information that, in an example, the next-hop SID of the END.SID 1 may be the END.SID 2. In this case, the operation associated with the END.SID 1 includes: matching the overlay SRv6 policy from the backbone network ingress device 1 to the backbone network egress device 1 based on the END.SID 2. In another example, the next-hop SID of the END.SID 1 may be the END.X SID. In this case, the operation associated with the END.SID 1 includes: matching the overlay SRv6 policy from the backbone network ingress device 1 to the backbone network egress device 1 based on the END.X SID.

In another specific example, if the service packet 2 includes the service intention information, the operation associated with the END.SID 1 includes: matching an overlay SRv6 policy from the backbone network ingress device 1 to the backbone network egress device 1 based on a next-hop SID of the END.SID 1 and the service intention information. In this case, when forwarding the service packet 2, the backbone network ingress device 1 may further determine the corresponding overlay SRv6 policy based on the service intention information, so that the determined overlay SRv6 policy satisfies the service intention as much as possible, to improve the quality of service provided for the service as much as possible. When the next-hop SID of the END.SID 1 is the END.SID 2, the operation associated with the END.SID 1 includes: matching the overlay SRv6 policy from the backbone network ingress device 1 to the backbone network egress device 1 based on the END.SID 2 and the service intention information. When the next-hop SID of the END.SID 1 is the END.X SID, the operation associated with the END.SID 1 includes: matching the overlay SRv6 policy from the backbone network ingress device 1 to the backbone network egress device 1 based on the END.X SID and the service intention information.

In an example, when the end-to-end path is in the SR-MPLS TE policy, the service packet 2 may include an MPLS label stack, and the information 1 and the information 2 may be carried in the MPLS label stack. In this scenario, the information 1 may be a node SID 1 of the backbone network ingress device, and the information 2 may be a node SID 2 of the backbone network egress device 1. In this case, the path information further includes an adj-SID allocated by the backbone network egress device 1 for an adjacency relationship between the backbone network egress device 1 and the site edge 2, and accordingly, the MPLS label stack further includes the adj-SID. In this case, the node SID 1, the node SID 2, and the adj-SID in the MPLS label stack may indicate a path from the backbone network ingress device 1 to the site edge 2.

In an example, the node SID 1 may indicate a new packet forwarding operation. In this case, the backbone network ingress device 1 only needs to determine, based on the node SID 1, how to forward the service packet 2, and does not need to determine, based on VPN information, how to forward the service packet 2. In a specific example, the operation associated with the node SID 1 includes: matching an overlay SR-MPLS TE policy from the backbone network ingress device 1 to the backbone network egress device 1 based on a next-hop SID of the node SID 1. It can be learned from the foregoing descriptions of the path information that the next-hop SID of the node SID 1 may be the node SID 2. In this case, the operation associated with the node SID 1 includes: matching the overlay SR-MPLS TE policy from the backbone network ingress device 1 to the backbone network egress device 1 based on the node SID 2.

In another specific example, if the service packet 2 includes the service intention information, the operation associated with the node SID 1 includes: matching the overlay SR-MPLS TE policy from the backbone network ingress device 1 to the backbone network egress device 1 based on a next-hop SID of the node SID 1 and the service intention information. In this case, when forwarding the service packet 2, the backbone network ingress device 1 may further determine the corresponding overlay SR-MPLS TE policy based on the service intention information, so that the determined overlay SR-MPLS TE policy satisfies the service intention as much as possible, to improve the quality of service provided for the service as much as possible. When the next-hop SID of the node SID 1 is the node SID 2, the operation associated with the node SID 1 includes: matching the overlay SR-MPLS TE policy from the backbone network ingress device 1 to the backbone network egress device 1 based on the node SID 2 and the service intention information.

In an example, the end-to-end path 1 may be a tunnel encapsulated based on a GRE protocol. In this case, GRE encapsulation may be used for the service packet.

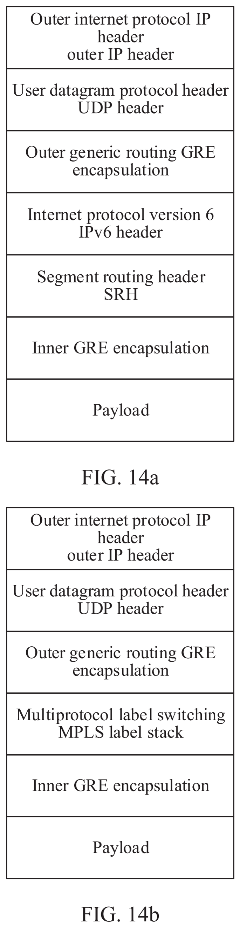

In a specific example, if the end-to-end path 1 is the SRv6 tunnel, SRv6 over GRE encapsulation may be used for the service packet 2. In this case, for an encapsulation format of the service packet 2, refer to FIG. 14a for understanding. FIG. 14a is a diagram of a structure of SRv6 over GRE encapsulation according to an embodiment of this application. As shown in FIG. 14a, the service packet 2 includes an outer IP header, a UDP header, outer GRE encapsulation, the IPv6 header, the SRH, inner GRE encapsulation, and the payload, where the payload includes the service packet 1, and the inner GRE encapsulation includes a VPN identifier of the VPN service carried in the service packet 1. The VPN identifier is carried in the inner GRE encapsulation. When transmission of the service packet 2 is performed in the backbone network, a device in the backbone network does not parse the VPN identifier (VPN identifier, VNI). That is, the backbone network does not sense a VPN. In an example, a metadata field may be further included between the SRH and the inner GRE encapsulation. In another example, the service packet 2 may further include a security check field, for example, an encapsulation security protocol (Encapsulation Security Protocol, ESP) field. Details are not described herein.

In another specific example, if the end-to-end path 1 is the SR-MPLS TE policy, MPLS over GRE encapsulation may be used for the service packet 2. In this case, for an encapsulation format of the service packet 2, refer to FIG. 14b for understanding. FIG. 14b is a diagram of a structure of MPLS over GRE encapsulation according to an embodiment of this application. As shown in FIG. 14b, the service packet 2 includes an outer IP header, a UDP header, outer GRE encapsulation, the MPLS label stack, inner GRE encapsulation, and the payload, where the payload includes the service packet 1, and the inner GRE encapsulation includes a VPN identifier of the VPN service carried in the service packet 1. The VPN identifier is carried in the inner GRE encapsulation. When transmission of the service packet 2 is performed in the backbone network, a device in the backbone network does not parse the VPN identifier. That is, the backbone network does not sense a VPN. In an example, a metadata field may be further included between the MPLS label stack and the inner GRE encapsulation. In another example, the service packet 2 may further include a security check field, for example, an ESP field. Details are not described herein.

In another example, the end-to-end path 1 may be a tunnel encapsulated based on a GENEVE protocol. In this case, GENEVE encapsulation may be used for the service packet.

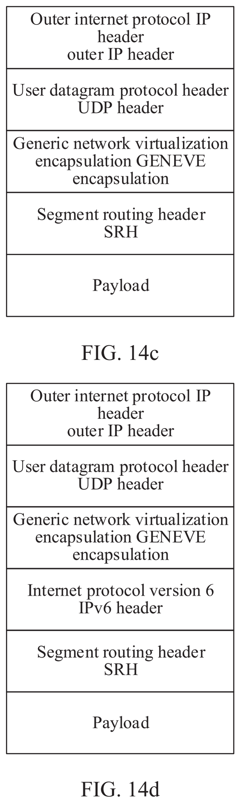

In a specific example, if the end-to-end path 1 is the SRv6 tunnel, SRv6 in GENEVE encapsulation may be used for the service packet 2. In this case, for an encapsulation format of the service packet 2, refer to FIG. 14c for understanding. FIG. 14c is a diagram of a structure of SRv6 in GENEVE encapsulation according to an embodiment of this application. As shown in FIG. 14c, the service packet 2 includes an outer IP header, a UDP header, GENEVE encapsulation, the SRH, and the payload, where the payload includes the service packet 1, and the GENEVE encapsulation includes a VPN identifier of the VPN service carried in the service packet 1. In an example, a metadata field may be further included between the SRH and the payload. In another example, the service packet 2 may further include a security check field, for example, an ESP field. Details are not described herein. Certainly, SRv6 over GENEVE encapsulation may alternatively be used for the service packet 2. In comparison with the SRv6 in GENEVE encapsulation, the SRv6 over GENEVE encapsulation differs in that the service packet 2 for which the SRv6 over GENEVE encapsulation is used further includes the IPv6 header. Refer to FIG. 14d for understanding. FIG. 14d is a diagram of a structure of SRv6 over GENEVE encapsulation according to an embodiment of this application. In comparison with the SRv6 in GENEVE encapsulation shown in FIG. 14c, in the structure of the encapsulation shown in FIG. 14d, the IPv6 header is further included between the GENEVE encapsulation and the SRH. Compared with the SRv6 in GENEVE encapsulation, the SRv6 over GENEVE encapsulation has higher encapsulation overheads, but the SRv6 over GENEVE encapsulation complies with a standard SRv6 encapsulation format.

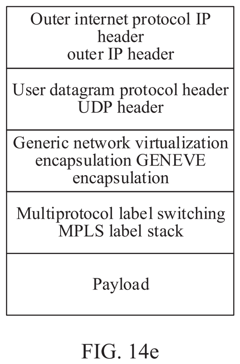

In another specific example, if the end-to-end path 1 is the SR-MPLS TE policy, MPLS in GENEVE encapsulation may be used for the service packet 2. In this case, for an encapsulation format of the service packet 2, refer to FIG. 14e for understanding. FIG. 14e is a diagram of a structure of MPLS in GENEVE encapsulation according to an embodiment of this application. As shown in FIG. 14e, the service packet 2 includes an outer IP header, a UDP header, GENEVE encapsulation, the MPLS label stack, and the payload, where the payload includes the service packet 1, and the GENEVE encapsulation includes a VPN identifier of the VPN service carried in the service packet 1. In an example, a metadata field may be further included between the MPLS label stack and the payload. In another example, the service packet 2 may further include a security check field, for example, an ESP field. Details are not described herein.

S603: The site edge 1 sends the service packet 2 through the end-to-end path 1.

S604: The backbone network ingress device 1 receives the service packet 2 from the site edge 1.

S605: The backbone network ingress device 1 processes the service packet 2 based on the information 1, to obtain a service packet 3.

After obtaining the service packet 2, the site edge 1 may forward the service packet 2. In an example, in the outer IP header in the service packet 2, a source address is an IP address of the site edge 1, and a destination address is an IP address of the backbone network ingress device 1. The site edge 1 forwards the service packet 2 to the backbone network ingress device 1 based on the destination address in the outer IP header.

The backbone network ingress device 1 may receive the service packet 2 from the site edge 1, further parse the service packet 2, and process the service packet 2 by using the information 1 in the packet 2, to obtain the service packet 3.

As described above, in an example, the information 1 may be the END.SID 1. In this case:
In an example, the backbone network ingress device 1 may match the overlay SRv6 policy from the backbone network ingress device 1 to the backbone network egress device 1 based on the next-hop SID of the END.SID 1 in the SRH in the service packet 2. In an example, the backbone network ingress device 1 may use the next-hop SID of the END.SID 1 to match a destination address in the overlay SRv6 policy. When a destination address in an overlay SRv6 policy 1 successfully matches the next-hop SID, it is determined that the overlay SRv6 policy 1 is successfully matched. In a specific example, the backbone network ingress device 1 may use the END.SID 2 to match the overlay SRv6 policy 1. In another specific example, the backbone network ingress device 1 may use the END.X SID to match the overlay SRv6 policy 1. After obtaining the overlay SRv6 policy 1 through matching, the backbone network ingress device 1 may re-encapsulate the service packet 2 by using the overlay SRv6 policy 1. For example, the backbone network ingress device 1 may insert a new SRH into the service packet 2 to carry the overlay SRv6 policy 1, to obtain the service packet 3. In an example, the SRH for carrying the overlay SRv6 policy 1 may be located at an outer layer of the SRH that carries the information 1 and the information 2.

In another example, if the service packet 2 includes the service intention information, the backbone network ingress device 1 may match the overlay SRv6 policy from the backbone network ingress device 1 to the backbone network egress device 1 based on the next-hop SID of the END.SID 1 in the SRH in the service packet 2 and the service intention information. In an example, the backbone network ingress device 1 may use the next-hop SID of the END.SID 1 to match a destination address in the overlay SRv6 policy, to obtain at least one overlay SRv6 policy that matches the next-hop SID of the END.SID 1, and then determine, in the at least one overlay SRv6 policy, an overlay SRv6 policy 2 that satisfies the service intention information. In a specific example, the backbone network ingress device 1 may use the END.SID 2 and the service intention information to match the overlay SRv6 policy 2. In another specific example, the backbone network ingress device 1 may use the END.X SID and the service intention information to match the overlay SRv6 policy 2. After obtaining the overlay SRv6 policy 2 through matching, the backbone network ingress device 1 may re-encapsulate the service packet 2 by using the overlay SRv6 policy 2, to obtain the service packet 3. For example, the backbone network ingress device 1 may insert a new SRH into the service packet 2 to carry the overlay SRv6 policy 2, to obtain the service packet 3. In an example, the SRH for carrying the overlay SRv6 policy 2 may be located at an outer layer of the SRH that carries the information 1 and the information 2.

As described above, in an example, the information 1 may be the node SID 1. In this case:
In an example, the backbone network ingress device 1 may match the overlay SR-MPLS TE policy from the backbone network ingress device 1 to the backbone network egress device 1 based on the next-hop SID of the node SID 1 in the MPLS label stack in the service packet 2. In an example, the backbone network ingress device 1 may use the next-hop SID of the node SID 1 to match a destination address in the overlay SR-MPLS TE policy. When a destination address in an overlay SR-MPLS TE policy 1 successfully matches the next-hop SID, it is determined that the overlay SR-MPLS TE policy 1 is successfully matched. In a specific example, the backbone network ingress device 1 may use the node SID 2 to match the overlay SR-MPLS TE policy 1. After obtaining the overlay SR-MPLS TE policy 1 through matching, the backbone network ingress device 1 may re-encapsulate the service packet 2 by using the overlay SR-MPLS TE policy 1. For example, the backbone network ingress device 1 may replace the node SID 1 and the node SID 2 in the MPLS label stack in the service packet 2 with the overlay SR-MPLS TE policy 1, to obtain the service packet 3.

In another example, if the service packet 2 includes the service intention information, the backbone network ingress device 1 may match the overlay SR-MPLS TE policy from the backbone network ingress device 1 to the backbone network egress device 1 based on the next-hop SID of the node SID 1 in the MPLS label stack in the service packet 2 and the service intention information. In an example, the backbone network ingress device 1 may use the next-hop SID of the node SID 1 to match a destination address in the overlay SR-MPLS TE policy, to obtain at least one overlay SR-MPLS TE policy that matches the next-hop SID of the node SID 1, and then determine, in the at least one overlay SR-MPLS TE policy, an overlay SR-MPLS TE policy 2 that satisfies the service intention information. After obtaining the overlay SR-MPLS TE policy 2 through matching, the backbone network ingress device 1 may re-encapsulate the service packet 2 by using the overlay SR-MPLS TE policy 2, to obtain the service packet 3. For example, the backbone network ingress device 1 may replace the node SID 1 and the node SID 2 in the MPLS label stack in the service packet 2 with the overlay SR-MPLS TE policy 2, to obtain the service packet 3.

S606: The backbone network ingress device 1 sends the service packet 3 to the backbone network egress device 1.

After obtaining the service packet 3, the backbone network ingress device 1 may send the service packet 3 to the backbone network egress device 1. In an example, the backbone network ingress device 1 may send the service packet 3 to the backbone network egress device 1 based on the overlay SRv6 policy 1 or the overlay SRv6 policy 2. In another example, the backbone network ingress device 1 may send the service packet 3 to the backbone network egress device 1 based on the overlay SR-MPLS TE policy 1 or the overlay SR-MPLS TE policy 2.

It can be learned from the foregoing descriptions that the site edge 1 can orchestrate, by using the method 600 provided in this embodiment of this application, the end-to-end path 1 that crosses the backbone network, and the device in the backbone network does not need to determine a transmission path based on VPN configuration, so that the backbone network does not need to sense the service. In this way, service traffic forwarding efficiency is improved. In addition, because the backbone network does not need to sense the service, service-related configuration does not need to be performed on the device in the backbone network, so that service provisioning efficiency is improved, and accordingly, scalability of the backbone network is improved.

In an example, the site edge 1 may be dual-homed to the backbone network ingress device 1 and a backbone network ingress device 2. In other words, the site edge 1 may further access the backbone network via the backbone network ingress device 2 in addition to the backbone network ingress device 1. The site edge 2 may be dual-homed to the backbone network egress device 1 and a backbone network egress device 2. In other words, the site edge 2 may further access the backbone network via the backbone network egress device 2 in addition to the backbone network egress device 1. In this case, the site edge 1 may further orchestrate an end-to-end path 2 from the site edge 1 to the site edge 2, where an ingress endpoint included in the end-to-end path 2 is the site edge 1, an egress endpoint included in the end-to-end path 2 is the site edge 2, and the end-to-end path 2 includes the backbone network ingress device 2 and the backbone network egress device 2. In this case:
The site edge 1 may further receive a service packet 4, encapsulate path information of the end-to-end path 2 at an outer layer of the service packet 4, to obtain a service packet 5, and send the service packet 5 through the end-to-end path 2. The path information of the end-to-end path 2 includes information 3 identifying the backbone network ingress device 2 and information 4 identifying the backbone network egress device 2.

For the path information of the end-to-end path 2, refer to the description part of the path information of the end-to-end path 1. For specific implementation in which the site edge 1 "encapsulates path information of the end-to-end path 2 at an outer layer of the service packet 4, to obtain a service packet 5", refer to the specific description part of S602 in the method 600. Repetitive descriptions are not provided herein.

After the site edge 1 sends the service packet 5 through the end-to-end path 2, the backbone network ingress device 2 may receive the service packet 5 from the site edge 1, further process the service packet 5 based on the information 3, to obtain a service packet 6, and further forward the service packet 6. For a manner of processing the service packet 5 by the backbone network ingress device 2, refer to the manner of processing the service packet 2 by the site edge 1 in the method 600. Repetitive descriptions are not provided herein.

The foregoing describes the traffic forwarding method provided in embodiments of this application. With reference to the application scenarios shown in FIG. 1b and FIG. 1c, the following describes, by using an example in which an end-to-end path from the site edge 1 to the site edge 2 is an end-to-end tunnel for which GRE encapsulation is used, the traffic forwarding method provided in embodiments of this application.

First, the solutions in embodiments of this application are described with reference to the application scenario shown in FIG. 1b.

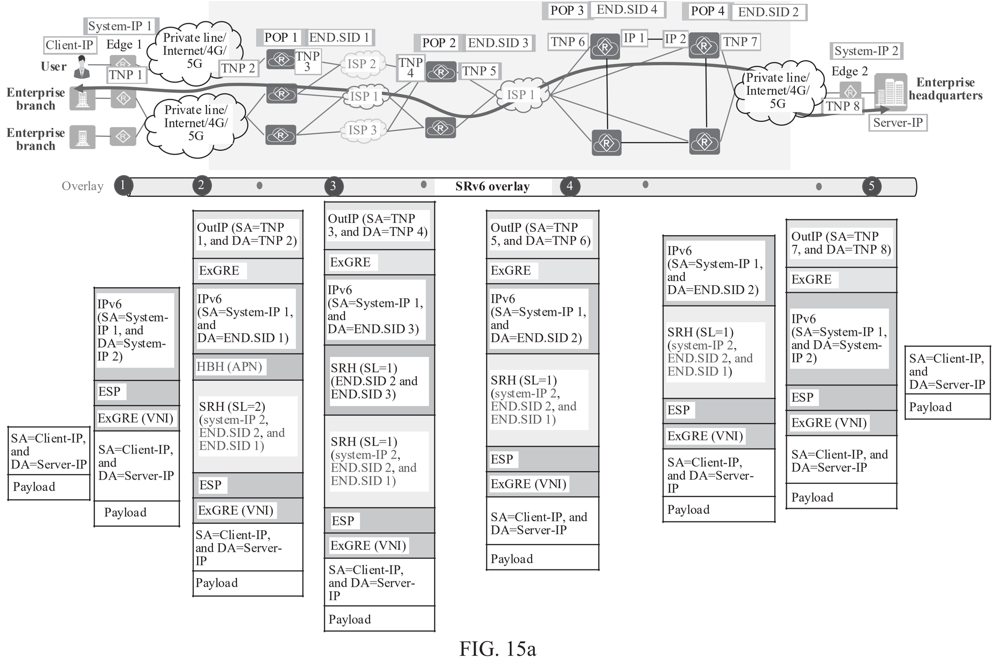

FIG. 15a is a diagram of a scenario of a traffic forwarding method according to an embodiment of this application. FIG. 15a shows an encapsulation format of service traffic transmitted in a network when the solutions provided in embodiments of this application are applied to the scenario shown in FIG. 1b. In the scenario shown in FIG. 15a, an end-to-end path between the site edge 1 and the site edge 2 is an SRv6 tunnel. A specific traffic forwarding procedure is as follows:
Site edge 1: A service packet for an enterprise user to access headquarters reaches the branch site edge 1. A source address in the service packet is an IP address (a client-IP) of the enterprise user, and a destination address in the service packet is an IP address (a server-IP) of the headquarters. The site edge 1 queries for a server-IP route, to determine that a next hop is an IP address system-IP 2 of the site edge 2, and iterates an SRv6 policy based on the system-IP 2 (a path list is an END.SID 1, an END.SID 2, and the system-IP 2). The site edge 1 encapsulates an IPv6 header, an SRH, and service intention information at an outer layer of the service packet. Based on SRv6, forwarding to a next hop END.SID 1 is performed, and route querying and forwarding continue. An SD-WAN tunnel is iterated based on the END.SID 1, link information (Source address (source address, SA)=TNP 1, and Destination address (destination address, DA)=TNP 2) of the SD-WAN tunnel is encapsulated, and the packet is sent to a POP 1. The TNP 1 is an IP address of a port used by the site edge 1 to communicate with the POP 1, and the TNP 2 is an IP address of a port used by the POP 1 to communicate with the site edge 1.

The POP 1 decapsulates the SD-WAN tunnel at the outer layer of the received packet, and learns, through querying, that an IPv6 DA (the END.SID 1) matches a local SID entry. An operation associated with the END.SID 1 is matching an SR policy based on a next-hop SID and the service intention information. If matching succeeds according to a tunnel matching tunnel, a new SRH (including an SR list: an END.SID 3 and the END.SID 2) is inserted into the packet, a DA in the IPv6 header is replaced with the END.SID 3, route querying and forwarding continue, the SD-WAN tunnel is iterated based on the END.SID 3, link information (SA=TNP 3, and DA=TNP 4) of the SD-WAN tunnel is encapsulated for the packet, and the packet is sent to a POP 2. If no SR policy is matched, IPv6 DA (the END.SID 2) route querying and forwarding to the POP 4 continue. The TNP 3 is an IP address of a port used by the POP 1 to communicate with the POP 2, and the TNP 2 is an IP address of a port used by the POP 2 to communicate with the POP 1.

The POP 2 decapsulates the SD-WAN tunnel at the outer layer of the received packet, learns, through querying, that the IPv6 DA (the END.SID 3) matches the local SID entry, replaces the DA in the IPv6 header with the END.SID 2, and continues route querying and forwarding. The SD-WAN tunnel is iterated based on the END.SID 2, link information (SA=TNP 5, and DA=TNP 6) of the SD-WAN tunnel is encapsulated, and the packet is sent to a POP 3. The TNP 5 is an IP address of a port used by the POP 2 to communicate with the POP 3, and the TNP 6 is an IP address of a port used by the POP 3 to communicate with the POP 2.

The POP 3 decapsulates the SD-WAN tunnel at the outer layer of the received packet, continues route querying and forwarding based on the IPv6 DA (the END.SID 2), and forwards the packet to the POP 4 through a local direct interface based on an END.X SID route egress interface.

The POP 4 learns, through querying, that the IPv6 DA (the END.SID 2) matches the local SID entry for the received packet. In addition, an SL is 0. SRH encapsulation is removed. The DA in the IPv6 header is replaced with the system-IP 2, and route querying and forwarding continue. The SD-WAN tunnel is iterated based on the system-IP 2, link information (SA=TNP 7, and DA=TNP 8) of the SD-WAN tunnel is encapsulated, and the packet is sent to the site edge 2. The TNP 7 is an IP address of a port used by the POP 4 to communicate with the site edge 2, and the TNP 8 is an IP address of a port used by the site edge 2 to communicate with the POP 4.

The site edge 2 decapsulates the SD-WAN tunnel at the outer layer, learns, through querying, that the system-IP 2 is a local route, removes IPv6 encapsulation, processes an ESP, queries for a server-IP route based on a private network identified by a VPN identifier in GRE, and performs routing and forwarding to a destination.

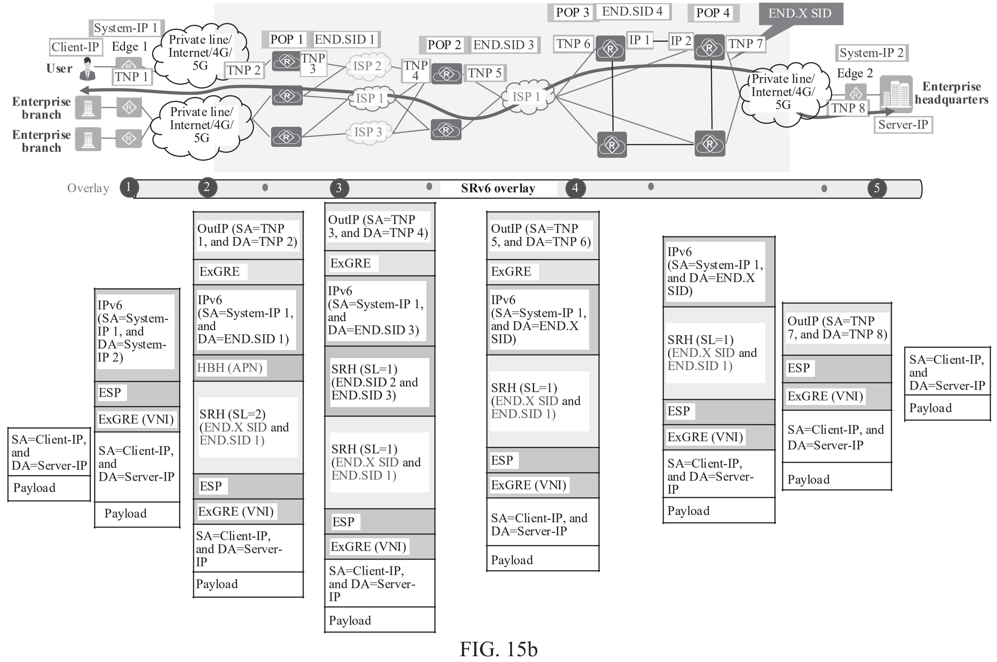

FIG. 15b is a diagram of a scenario of another traffic forwarding method according to an embodiment of this application. FIG. 15b shows an encapsulation format of service transmitted in a network when the solutions provided in embodiments of this application are applied to the scenario shown in FIG. 1b. In the scenario shown in FIG. 15b, an end-to-end path between the site edge 1 and the site edge 2 is an SRv6 tunnel. A specific traffic forwarding procedure is as follows:
Site edge 1: A service packet for an enterprise user to access headquarters reaches the branch site edge 1. A source address in the service packet is an IP address (a client-IP) of the enterprise user, and a destination address in the service packet is an IP address (a server-IP) of the headquarters. The site edge 1 queries for a server-IP route, to determine that a next hop is an IP address system-IP 2 of the site edge 2, and iterates an SRv6 policy based on the system-IP 2 (a path list is an END.SID 1 and an END.X SID). The site edge 1 encapsulates an IPv6 header, an SRH, and service intention information at an outer layer of the service packet. Based on SRv6, forwarding to the next hop END.SID 1 is performed, and route querying and forwarding continue. An SD-WAN tunnel is iterated based on the END.SID 1, link information (SA=TNP 1, and DA=TNP 2) of the SD-WAN tunnel is encapsulated, and the packet is sent to a POP 1.

The POP 1 decapsulates the SD-WAN tunnel at the outer layer of the received packet, and learns, through querying, that an IPv6 DA (the END.SID 1) matches a local SID entry. An operation associated with the END.SID 1 is matching an SR policy based on a next-hop SID and the service intention information. If matching succeeds according to a tunnel matching tunnel, a new SRH (including an SR list: an END.SID 3 and the END.X SID) is inserted into the packet, a DA in the IPv6 header is replaced with the END.SID 3, route querying and forwarding continue, the SD-WAN tunnel is iterated based on the END.SID 3, link information (SA=TNP 3, and DA=TNP 4) of the SD-WAN tunnel is encapsulated for the packet, and the packet is sent to a POP 2. If no SR policy path is matched, IPv6 DA (the END.X SID) route querying and forwarding to the POP 4 continue.

The POP 2 decapsulates the SD-WAN tunnel at the outer layer of the received packet, learns, through querying, that the IPv6 DA (the END.SID 3) matches the local SID entry, replaces the DA in the IPv6 header with the END.X SID, and continues route querying and forwarding. The SD-WAN tunnel is iterated based on an END.X SID route, link information (SA=TNP 5, and DA=TNP 6) of the SD-WAN tunnel is encapsulated, and the packet is sent to a POP 3.

The POP 3 decapsulates the SD-WAN tunnel at the outer layer of the received packet, continues route querying and forwarding based on the IPv6 DA (the END.X SID), and directly forwards the packet to the POP 4 through a local direct interface based on an END.X SID route egress interface.

The POP 4 learns, through querying, that the IPv6 DA (the END.X SID) matches the local SID entry for the received packet. In addition, an SL is 0. SRH encapsulation is removed, and IPv6 header encapsulation is removed. The SD-WAN tunnel is iterated based on the system-IP 2, link information (SA=TNP 7, and DA=TNP 8) of the SD-WAN tunnel is encapsulated, and the packet is sent to the site edge 2.

The site edge 2 decapsulates the SD-WAN tunnel at the outer layer of the received packet, learns, through querying, that the system-IP 2 is a local route, removes the IPv6 encapsulation, processes an ESP, queries for a server-IP route based on a private network identified by a VPN identifier in GRE, and performs routing and forwarding to a destination.

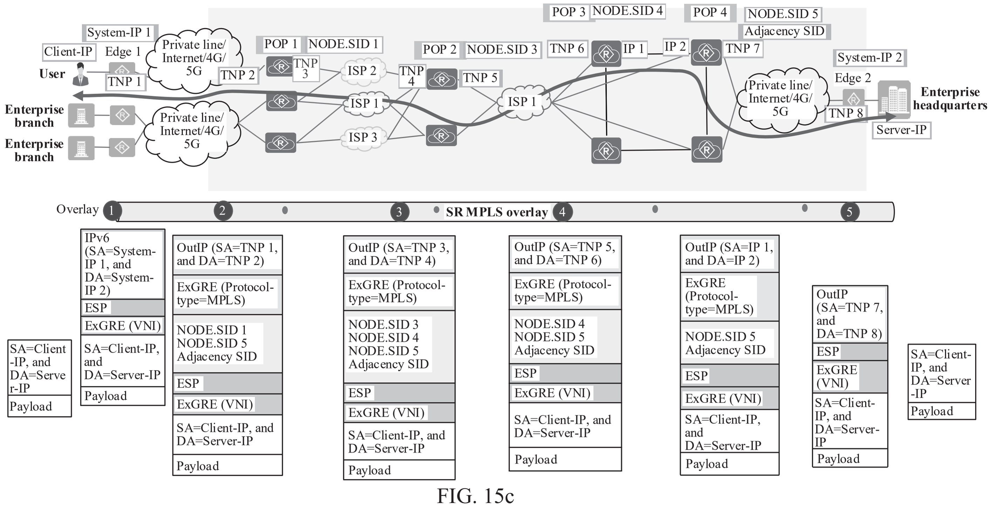

FIG. 15c is a diagram of a scenario of another traffic forwarding method according to an embodiment of this application. FIG. 15c shows an encapsulation format of service transmitted in a network when the solutions provided in embodiments of this application are applied to the scenario shown in FIG. 1b. In the scenario shown in FIG. 15c, an end-to-end path between the site edge 1 and the site edge 2 is an SR-MPLS TE policy. A specific traffic forwarding procedure is as follows:
Site edge 1: A service packet for an enterprise user to access headquarters reaches the branch site edge 1. A source address in the service packet is an IP address (a client-IP) of the enterprise user, and a destination address in the service packet is an IP address (a server-IP) of the headquarters. The site edge 1 queries for a server-IP route, to determine that a next hop is an IP address system-IP 2 of the site edge 2, iterates the SR-MPLS TE policy based on the system-IP 2 (the path list is a NODE.SID 1, a NODE.SID 5, and an adjacency SID), and encapsulates an MPLS label stack. Based on a label, forwarding to a next hop NODE.SID 1 is performed, and route querying and forwarding continue. An SD-WAN tunnel is iterated based on the NODE.SID 1, link information (SA=TNP 1, and DA=TNP 2) of the SD-WAN tunnel is encapsulated, and the packet is sent to a POP 1.

The POP 1 decapsulates the SD-WAN tunnel at an outer layer of the received packet, and learns, through querying, that the NODE.SID 1 matches a local SID entry. An operation associated with the NODE.SID 1 is matching the SR-MPLS TE policy based on a next-hop SID of the NODE.SID 1 in the MPLS label stack as egress node information of an SR-MPLS label stack path in a transit POP backbone network. If matching succeeds according to a tunnel matching policy, the local NODE.SID 1 and the next-hop label NODE.SID 5 in the packet are replaced with a label stack corresponding to an SR-MPLS policy in the transit POP backbone network (an SR-MPLS TE policy path in the backbone network: a NODE.SID 3, a NODE.SID 4, and the NODE.SID 5), table lookup and forwarding continue based on a topmost label NODE.SID 3 in the packet, the SD-WAN tunnel is iterated based on the NODE.SID 3, link information (SA=TNP 3, and DA=TNP 4) of the SD-WAN tunnel is encapsulated, and the packet is sent to a POP 2. If no SR-MPLS TE policy in the POP backbone network is matched on the POP 1, forwarding to the POP 4 is directly performed based on the next-hop label NODE.SID 5 in the packet.

The POP 2 decapsulates the SD-WAN tunnel at the outer layer of the received packet, learns, through querying, that the label NODE.SID 3 matches the local SID entry, pops the current label NODE.SID 3, and continues table lookup and forwarding by using the next-hop label NODE.SID 4. The SD-WAN tunnel is iterated based on a NODE.SID 4 route, link information (SA=TNP 5, and DA=TNP 6) of the SD-WAN tunnel is encapsulated, and the packet is sent to a POP 3.

The POP 3 decapsulates the SD-WAN tunnel at the outer layer of the received packet, pops the current label NODE.SID 4, continues table lookup and forwarding by using the next-hop label NODE.SID 5, and forwards the packet to the POP 4 through a local direct interface.

The POP 4 decapsulates the SD-WAN tunnel at the outer layer of the received packet. The label NODE.SID 5 matches the local SID entry. The current label NODE.SID 5 is popped. Table lookup and forwarding continue by using the next-hop label adjacency SID. The adjacency SID indicates that a next hop is forwarding performed through the SD-WAN tunnel. The current label adjacency SID is popped. Link information (SA=TNP 7, and DA=TNP 8) of the SD-WAN tunnel is encapsulated, and the packet is sent to the site edge 2.

The site edge 2 decapsulates the SD-WAN tunnel at the outer layer, processes an ESP, queries for a server-IP route based on a private network identified by a VPN identifier in GRE, queries for a destination system-IP 2 route, and forwards the packet to a destination.

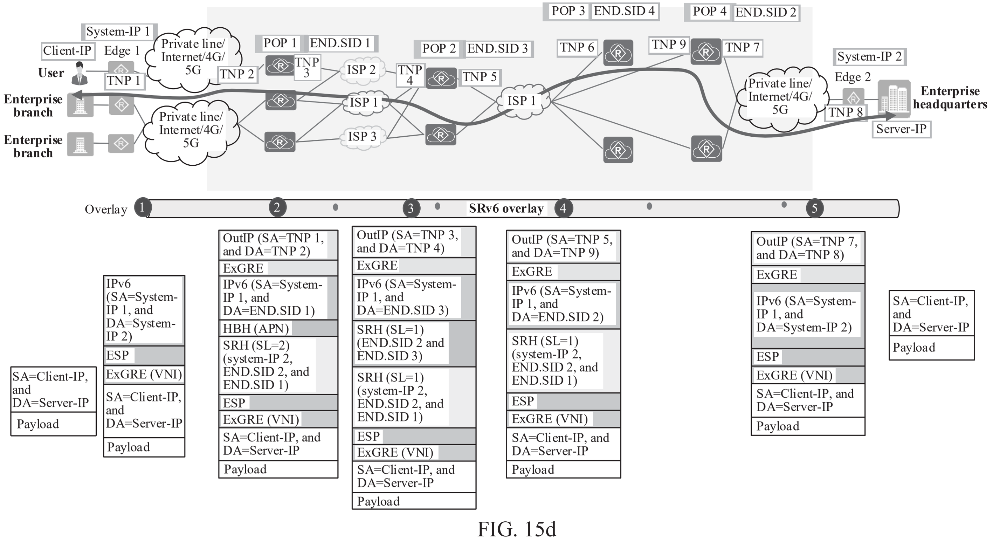

FIG. 15d is a diagram of a scenario of a traffic forwarding method according to an embodiment of this application. FIG. 15d shows an encapsulation format of service transmitted in a network when the solutions provided in embodiments of this application are applied to the scenario shown in FIG. 1c. In the scenario shown in FIG. 15d, an end-to-end path between a site edge 1 and a site edge 2 is an SRv6 tunnel. A specific traffic forwarding procedure is as follows:
Site edge 1: A service packet for an enterprise user to access headquarters reaches the branch site edge 1. A source address in the service packet is an IP address (a client-IP) of the enterprise user, and a destination address in the service packet is an IP address (a server-IP) of the headquarters. The site edge 1 queries for a server-IP route, to determine that a next hop is an IP address system-IP 2 of the site edge 2, and iterates an SRv6 policy based on the system-IP 2 (a path list is an END.SID 1, an END.SID 2, and the system-IP 2). The site edge 1 encapsulates an IPv6 header, an SRH, and service intention information at an outer layer of the service packet. Based on SRv6, forwarding to the next hop END.SID 1 is performed, and route querying and forwarding continue. An SD-WAN tunnel is iterated based on the END.SID 1, link information (SA=TNP 1, and DA=TNP 2) of the SD-WAN tunnel is encapsulated, and the packet is sent to a POP 1.

The POP 1 decapsulates the SD-WAN tunnel at the outer layer of the received packet, and learns, through querying, that an IPv6 DA (the END.SID 1) matches a local SID entry. An operation associated with the END.SID 1 is matching an SR policy based on a next-hop SID and the service intention information. If matching succeeds according to a tunnel matching tunnel, a new SRH (including an SR list: an END.SID 3 and the END.SID 2) is inserted into the packet, a DA in the IPv6 header is replaced with the END.SID 3, route querying and forwarding continue, the SD-WAN tunnel is iterated based on the END.SID 3, link information (SA=TNP 3, and DA=TNP 4) of the SD-WAN tunnel is encapsulated for the packet, and the packet is sent to a POP 2. If no SR policy is matched, IPv6 DA (the END.SID 2) route querying and forwarding to a POP 4 continue.

The POP 2 decapsulates the SD-WAN tunnel at the outer layer of the received packet, learns, through querying, that the IPv6 DA (the END.SID 3) matches the local SID entry, replaces the DA in the IPv6 header with the END.SID 2, and continues route querying and forwarding. The SD-WAN tunnel is iterated based on the END.SID 2, link information (SA=TNP 5, and DA=TNP 9) of the SD-WAN tunnel is encapsulated, and the packet is sent to the POP 4. The TNP 5 is an IP address of a port used by the POP 2 to communicate with the POP 4, and the TNP 9 is an IP address of a port used by the POP 4 to communicate with the POP 2.

The POP 4 learns, through querying, that the IPv6 DA (the END.SID 2) matches the local SID entry for the received packet. In addition, an SL is 0. SRH encapsulation is removed. The DA in the IPv6 header is replaced with the system-IP 2, and route querying and forwarding continue. The SD-WAN tunnel is iterated based on the system-IP 2, link information (SA=TNP 7, and DA=TNP 8) of the SD-WAN tunnel is encapsulated, and the packet is sent to the site edge 2.

The site edge 2 decapsulates the SD-WAN tunnel at the outer layer, learns, through querying, that the system-IP 2 is a local route, removes IPv6 encapsulation, processes an ESP, queries for a server-IP route based on a private network identified by a VNI in GRE, and performs routing and forwarding to a destination.

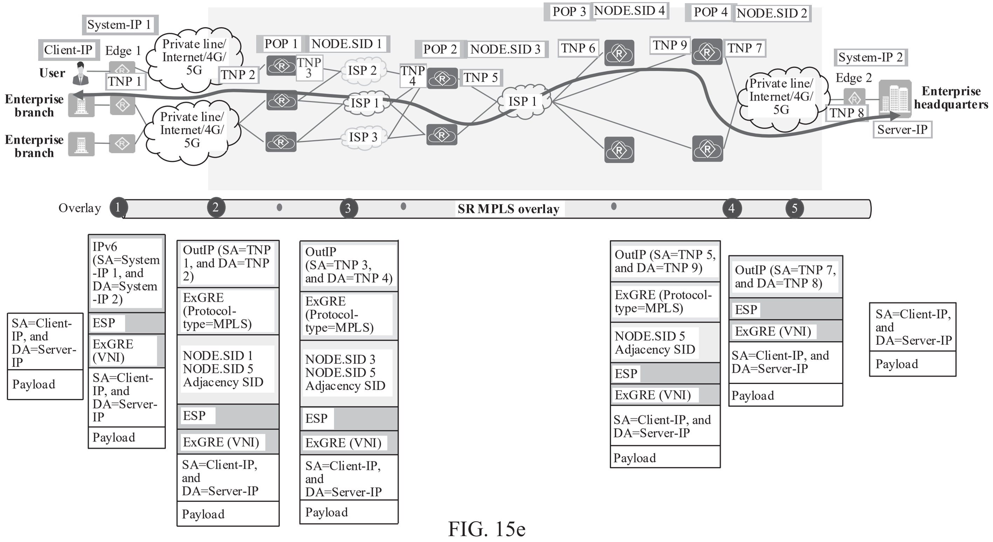

FIG. 15e is a diagram of a scenario of another traffic forwarding method according to an embodiment of this application. FIG. 15e shows an encapsulation format of service transmitted in a network when the solutions provided in embodiments of this application are applied to the scenario shown in FIG. 1c. In the scenario shown in FIG. 15e, an end-to-end path between a site edge 1 and a site edge 2 is an SR-MPLS TE policy. A specific traffic forwarding procedure is as follows:
Site edge 1: A service packet for an enterprise user to access headquarters reaches the branch site edge 1. A source address in the service packet is an IP address (a client-IP) of the enterprise user, and a destination address in the service packet is an IP address (a server-IP) of the headquarters. The site edge 1 queries for a server-IP route, to determine that a next hop is an IP address system-IP 2 of the site edge 2, iterates the SR-MPLS TE policy based on the system-IP 2 (the path list is a NODE.SID 1, a NODE.SID 5, and an adjacency SID), and encapsulates an MPLS label stack. Based on a label, forwarding to a next hop NODE.SID 1 is performed, and route querying and forwarding continue. An SD-WAN tunnel is iterated based on the NODE.SID 1, link information (SA=TNP 1, and DA=TNP 2) of the SD-WAN tunnel is encapsulated, and the packet is sent to a POP 1.

The POP 1 decapsulates the SD-WAN tunnel at an outer layer of the received packet, and learns, through querying, that the NODE.SID 1 matches a local SID entry. An operation associated with the NODE.SID 1 is matching the SR-MPLS TE policy based on a next-hop SID of the NODE.SID 1 in the MPLS label stack as egress node information of an SR-MPLS label stack path in a transit POP backbone network. If matching succeeds according to a tunnel matching policy, the local NODE.SID 1 and the next-hop label NODE.SID 5 in the packet are replaced with a label stack corresponding to an SR-MPLS policy in the transit POP backbone network (an SR-MPLS TE policy path in the backbone network: a NODE.SID 3 and the NODE.SID 5), table lookup and forwarding continue based on a topmost label NODE.SID 3 in the packet, the SD-WAN tunnel is iterated based on the NODE.SID 3, link information (SA=TNP 3, and DA=TNP 4) of the SD-WAN tunnel is encapsulated, and the packet is sent to a POP 2. If no SR-MPLS TE policy in the POP backbone network is matched on the POP 1, forwarding to a POP 4 is directly performed based on the next-hop label NODE.SID 5 in the packet.

The POP 2 decapsulates the SD-WAN tunnel at the outer layer of the received packet, learns, through querying, that the label NODE.SID 3 matches the local SID entry, pops the current label NODE.SID 3, and continues table lookup and forwarding by using the next-hop label NODE.SID 5. The SD-WAN tunnel is iterated based on a NODE.SID 5 route, link information (SA=TNP 5, and DA=TNP 9) of the SD-WAN tunnel is encapsulated, and the packet is sent to the POP 4.

The POP 4 decapsulates the SD-WAN tunnel at the outer layer of the received packet. The label NODE.SID 5 matches the local SID entry. The current label NODE.SID 5 is popped. Table lookup and forwarding continue by using the next-hop label adjacency SID. The adjacency SID indicates that a next hop is forwarding performed through the SD-WAN tunnel. The current label adjacency SID is popped. Link information (SA=TNP 7, and DA=TNP 8) of the SD-WAN tunnel is encapsulated, and the packet is sent to the site edge 2.

The site edge 2 decapsulates the SD-WAN tunnel at the outer layer, processes an ESP, queries for a server-IP route based on a private network identified by a VPN identifier in GRE, queries for a destination system-IP 2 route, and forwards the packet to a destination.

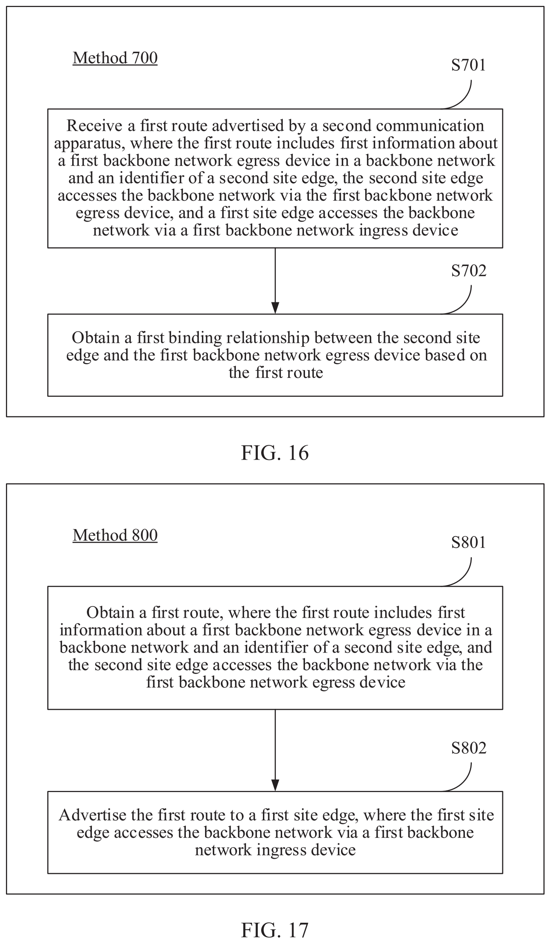

FIG. 16 is a schematic flowchart of an information advertisement method according to an embodiment of this application. The information advertisement method 700 shown in FIG. 16 may be applied to the method 100, the method 200, the method 300, the method 400, the method 500, or the method 600.

The information advertisement method 700 shown in FIG. 16 may be applied to a first communication apparatus used as a first site edge.

In this embodiment of this application, the method 700 may include S701 and S702 below.

S701: Receive a first route advertised by a second communication apparatus, where the first route includes first information about a first backbone network egress device in a backbone network and an identifier of a second site edge, the second site edge accesses the backbone network via the first backbone network egress device, and the first site edge accesses the backbone network via a first backbone network ingress device.

S702: Obtain a first binding relationship between the second site edge and the first backbone network egress device based on the first route.

When the method 700 is applied to the method 100,
the first site edge in the method 700 may correspond to the site edge 1 in the method 100; the second communication apparatus in the method 700 may correspond to the site edge 2 in the method 100; the first route in the method 700 may correspond to the route 1 in the method 100; the first backbone network egress device in the method 700 may correspond to the backbone network egress device 1 in the method 100; the first information in the method 700 may correspond to the information 1 in the method 100; and the first binding relationship in the method 700 may correspond to the binding relationship 1 in the method 100.

When the method 700 is applied to the method 200,
the first site edge in the method 700 may correspond to the site edge 1 in the method 200; the second communication apparatus in the method 700 may correspond to the site edge 2 in the method 200; the first route in the method 700 may correspond to the route 1' in the method 100; the first backbone network egress device in the method 700 may correspond to the backbone network egress device 1 in the method 200; the first information in the method 700 may correspond to the information 1 in the method 200; and the first binding relationship in the method 700 may correspond to the binding relationship 1 in the method 200.

When the method 700 is applied to the method 300,
the first site edge in the method 700 may correspond to the site edge 1 in the method 300; the second communication apparatus in the method 700 may correspond to the backbone network egress device 1 in the method 300; the first route in the method 700 may correspond to the route 1" in the method 300; the first backbone network egress device in the method 700 may correspond to the backbone network egress device 1 in the method 300; the first information in the method 700 may correspond to the information 1 in the method 300; and the first binding relationship in the method 700 may correspond to the binding relationship 1 in the method 300.

In a possible implementation, the method further includes: determining a first end-to-end path from the first site edge to the second site edge based on the first binding relationship, where the first end-to-end path passes through the first backbone network ingress device and the first backbone network egress device.

The first end-to-end path mentioned in the method 700 may be, for example, the end-to-end path 1 or the end-to-end path 2 mentioned in the foregoing method embodiments.

In a possible implementation, the first information includes one or more of the following: a first segment identifier SID allocated by the first backbone network egress device for an adjacency relationship between the first backbone network egress device and the second site edge; a second SID of the first backbone network egress device; a routing priority of the first backbone network egress device; and a load balancing weight of the first backbone network egress device.

When the method 700 is applied to the method 100, the first SID in the method 700 may be the SID 1 in the method 100; and the second SID in the method 700 may be the SID 2 in the method 100.

When the method 700 is applied to the method 200, the first SID in the method 700 may be the SID 1 in the method 200; and the second SID in the method 700 may be the SID 2 in the method 200.

When the method 700 is applied to the method 300, the first SID in the method 700 may be the SID 1 in the method 300; and the second SID in the method 700 may be the SID 2 in the method 300.

In a possible implementation, the first SID is a segment routing over internet protocol version 6 endpoint segment identifier with cross-connect to an array of layer-3 adjacency relationships SRv6 END.X SID, and the second SID is a segment routing over internet protocol version 6 endpoint segment identifier SRv6 END.SID; or the first SID is an adjacency segment identifier adj-SID, and the second SID is a node SID.

In a possible implementation, when the method 700 is applied to the foregoing method 100, the second communication apparatus is the second site edge, the first route includes a software-defined wide area network SD-WAN gateway information advertisement route, the SD-WAN gateway information advertisement route includes at least one type length value TLV, and the at least one TLV carries the first information.

In a possible implementation, the SD-WAN gateway information advertisement route includes a first TLV, a value value field in the first TLV is for carrying the first SID and/or the second SID in the first information, the first TLV further includes a priority sub-TLV and/or a weight sub-TLV, the priority sub-TLV is for carrying the routing priority in the first information, and the weight sub-TLV is for carrying the load balancing weight in the first information.

The first TLV mentioned in the method 700 may be the MP_REACH_NLRI shown in FIG. 4a mentioned in the method 100.

In a possible implementation, when the method 700 is applied to the foregoing method 200, the second communication apparatus is the second site edge, and the first route includes a virtual private network VPN route.

In a possible implementation, the VPN route includes a first metadata path attribute metadata path attribute, and the first metadata path attribute carries the first information.

The first metadata path attribute in the method 700 may correspond to the metadata path attribute 2 in the method 100.

In a possible implementation, the first route further includes service intention information.

In a possible implementation, the service intention information includes one or more of the following: a gateway that needs to be included by the first end-to-end path, a gateway that needs to be excluded by the first end-to-end path, and a quality of service parameter.

In a possible implementation, the first route includes a second metadata path attribute, and the second metadata path attribute includes the service intention information.

When the method 700 is applied to the foregoing method 100, the second metadata path attribute in the method 700 may correspond to the metadata path attribute 1 in the method 100.

When the method 700 is applied to the foregoing method 200, the second metadata path attribute in the method 700 may correspond to the metadata path attribute 2 in the method 200.

In a possible implementation, when the method 700 is applied to the foregoing method 200, the second communication apparatus is the first backbone network egress device, and receiving the first route advertised by the second communication apparatus includes: receiving, via the first backbone network ingress device, the first route advertised by the first backbone network egress device.

The first backbone network ingress device in the method 700 may correspond to the backbone network ingress device 1 in the method 300.

In a possible implementation, the first route includes a first SD-WAN gateway auto-discovery route.

In a possible implementation, the method further includes: receiving a second route advertised by a third communication apparatus, where the second route includes second information about a second backbone network egress device in the backbone network and the identifier of the second site edge, and the second site edge accesses the backbone network via the second backbone network egress device; and obtaining a second binding relationship between the second site edge and the second backbone network egress device based on the second route.

When the method 700 is applied to the foregoing method 100,
the third communication apparatus in the method 700 may correspond to the site edge 2 in the method 100; the second route in the method 700 may correspond to the route 2 in the method 100; the second backbone network egress device in the method 700 may correspond to the backbone network egress device 2 in the method 100; the second information in the method 700 may correspond to the information 2 in the method 100; and the second binding relationship in the method 700 may correspond to the binding relationship 2 in the method 100.

When the method 700 is applied to the foregoing method 200,
the third communication apparatus in the method 700 may correspond to the site edge 2 in the method 200; the second route in the method 700 may correspond to the route 1' in the method 200; the second backbone network egress device in the method 700 may correspond to the backbone network egress device 2 in the method 200; the second information in the method 700 may correspond to the information 2 in the method 200; and the second binding relationship in the method 700 may correspond to the binding relationship 2 in the method 200.

In a possible implementation, the method further includes: determining routing priorities respectively corresponding to the first backbone network egress device and the second backbone network egress device; and/or determining load balancing weights respectively corresponding to the first backbone network egress device and the second backbone network egress device.

In a possible implementation, the method further includes: determining a second end-to-end path from the first site edge to the second site edge based on the second binding relationship, where the second end-to-end path passes through the first backbone network ingress device and the second backbone network egress device.

The second end-to-end path in the method 700 may be an end-to-end path other than the first end-to-end path and from the first site edge to the second site edge. The second end-to-end path mentioned in the method 700 may be, for example, the end-to-end path 1 or the end-to-end path 2 mentioned in the foregoing method embodiments.

In a possible implementation, the method 700 may be further applied to the foregoing method 400 or 500. In this case, the method further includes: receiving a third route sent by the first backbone network ingress device, where the third route is for advertising third information of the first backbone network ingress device; and obtaining a third binding relationship between the first site edge and the first backbone network ingress device based on the third route.

When the method 700 is applied to the foregoing method 400,
the first site edge in the method 700 may correspond to the site edge in the method 400; the first backbone network ingress device in the method 700 may correspond to the gateway in the method 400; the third route in the method 700 may correspond to the route 3 in the method 400; the third information in the method 700 may correspond to the information 3 in the method 400; and the third binding relationship in the method 700 may correspond to the binding relationship 3 in the method 400.

When the method 700 is applied to the foregoing method 500,
the first site edge in the method 700 may correspond to the site edge in the method 500; the first backbone network ingress device in the method 700 may correspond to the gateway in the method 500; the third route in the method 700 may correspond to the route 3' in the method 500; the third information in the method 700 may correspond to the information 3 in the method 500; and the third binding relationship in the method 700 may correspond to the binding relationship 3 in the method 500.

In a possible implementation, when the method 700 is applied to the foregoing method 400, the third route is a second SD-WAN gateway auto-discovery route.

In a possible implementation, when the method 700 is applied to the foregoing method 500, the third route is a BGP link state LS route.

In a possible implementation, the third information includes a third SID allocated by the first backbone network ingress device for an adjacency relationship between the first backbone network ingress device and the first site edge and/or a fourth SID of the first backbone network ingress device.

When the method 700 is applied to the foregoing method 400, the third SID in the method 700 may correspond to the SID 3 in the method 400; and the fourth SID in the method 700 may correspond to the SID 4 in the method 400.

When the method 700 is applied to the foregoing method 500, the third SID in the method 700 may correspond to the SID 3 in the method 500; and the fourth SID in the method 700 may correspond to the SID 4 in the method 500.

In a possible implementation, the third route further includes transit-gateway information, and the transit-gateway information indicates at least one transit gateway between the first backbone network ingress device and an egress device in the backbone network.

The method 700 may be further applied to the foregoing method 600. Specifically, the method further includes:
The first site edge receives a first service packet. The first site edge encapsulates path information of the first end-to-end path at an outer layer of the first service packet, to obtain a second service packet, where the path information of the first end-to-end path includes fourth information identifying the first backbone network ingress device in the backbone network and fifth information identifying the first backbone network egress device in the backbone network, an ingress endpoint of the first end-to-end path is the first site edge, an egress endpoint of the first end-to-end path is the second site edge, the first end-to-end path passes through the first backbone network ingress device and the first backbone network egress device, the first site edge accesses the backbone network via the first backbone network ingress device, and the second site edge accesses the backbone network via the first backbone network egress device. The first site edge sends the second service packet through the first end-to-end path.

The first site edge in the method 700 may correspond to the site edge 1 in the method 600; the first service packet in the method 700 may correspond to the service packet 1 in the method 600; the second service packet in the method 700 may correspond to the service packet 2 in the method 600; the first end-to-end path in the method 700 may correspond to the end-to-end path 1 in the method 600; the fourth information in the method 700 may correspond to the information 1 in the method 600; the fifth information in the method 700 may correspond to the information 2 in the method 600; the first backbone network ingress device in the method 700 may correspond to the backbone network ingress device 1 in the method 600; the first backbone network egress device in the method 700 may correspond to the backbone network egress device 1 in the method 600; and the second site edge in the method 700 may correspond to the site edge 2 in the method 600.

In a possible implementation, the first service packet is for carrying a virtual private network VPN service, and before receiving the first service packet, the method further includes: orchestrating, by the first site edge, the first end-to-end path from the first site edge to the second site edge by using the first backbone network ingress device and the first backbone network egress device on demand based on the VPN service.

In a possible implementation, the second service packet further includes service intention information.

In a possible implementation, the service intention information is carried in a metadata metadata field in the second service packet.

In a possible implementation, before encapsulating the path information of the first end-to-end path, the method further includes: determining, by the first site edge based on a destination address in the first service packet, that a next hop for forwarding the first service packet is the second site edge, and iterating a first segment routing policy SR policy based on an internet protocol IP address of the second site edge, to obtain the path information of the first end-to-end path.

The first SR policy in the method 700 may correspond to the SR policy 1 in the method 600.

In a possible implementation, the first end-to-end path is an SRv6 tunnel, the second service packet includes an IPv6 header and a segment routing header SRH, a destination address in the IPv6 header points to the first backbone network ingress device, and the SRH includes the fourth information and the fifth information.

In a possible implementation, the fourth information is a first endpoint segment identifier END.SID 1 of the first backbone network ingress device, the fifth information is a second endpoint segment identifier END.SID 2 of the first backbone network egress device, and the SRH further includes an IPv6 address of the second site edge.

In a possible implementation, the fourth information is a first endpoint segment identifier END.SID 1 of the first backbone network ingress device, and the fifth information is the endpoint segment identifier with cross-connect to an array of layer-3 adjacency relationships END.X SID allocated by the first backbone network egress device for the adjacency relationship between the first backbone network egress device and the second site edge.

In a possible implementation, an operation associated with the first endpoint segment identifier END.SID 1 includes: matching an overlay overlay SRv6 policy from the first backbone network ingress device to the first backbone network egress device based on a next-hop SID of the END.SID 1.

In a possible implementation, when the second service packet includes the service intention information, an operation associated with the first endpoint segment identifier END.SID 1 includes: matching an overlay overlay SRv6 policy from the first backbone network ingress device to the first backbone network egress device based on a next-hop SID of the END.SID 1 and the service intention information.

In a possible implementation, the first end-to-end path is an SR-MPLS TE policy, the second service packet includes an MPLS label stack, the MPLS label stack includes the fourth information and the fifth information, the fourth information is a first node SID of the first backbone network ingress device, and the fifth information includes a second node SID of the first backbone network egress device and the adjacency segment identifier adj-SID allocated by the first backbone network egress device for the adjacency relationship between the first backbone network egress device and the second site edge.

In a possible implementation, an operation associated with the first node SID includes: matching an overlay overlay SR-MPLS TE policy from the first backbone network ingress device to the first backbone network egress device based on a next-hop SID of the first node SID in the label stack.

In a possible implementation, when the second service packet includes the service intention information, an operation associated with the first node SID includes: matching an overlay overlay SR-MPLS TE policy from the first backbone network ingress device to the first backbone network egress device based on a next-hop SID of the first node SID in the label stack and the service intention information.

In a possible implementation, the first end-to-end path is a tunnel encapsulated according to a generic network virtualization encapsulation GENEVE protocol, and SRv6 in GENEVE encapsulation is used for the second service packet.

In a possible implementation, the first end-to-end path is a tunnel encapsulated according to a generic routing encapsulation GRE protocol, and SRv6 over GRE encapsulation is used for the second service packet.

In a possible implementation, the second service packet includes an outer IP header, a user datagram protocol UDP header, outer GRE encapsulation, the IPv6 header, the SRH, inner GRE encapsulation, and a payload, where the payload includes the first service packet, and the inner GRE encapsulation includes a VPN identifier of the VPN service carried in the first service packet.

In a possible implementation, the method further includes:
The first site edge receives a third service packet.

The first site edge encapsulates path information of a third end-to-end path at an outer layer of the third service packet, to obtain a fourth service packet, where the path information of the third end-to-end path includes sixth information identifying a second backbone network ingress device in the backbone network and seventh information identifying a second backbone network egress device in the backbone network, an ingress endpoint of the third end-to-end path is the first site edge, an egress endpoint of the third end-to-end path is the second site edge, the third end-to-end path passes through the second backbone network ingress device and the second backbone network egress device, the first site edge is multi-homed to the first backbone network ingress device and the second backbone network ingress device, and the second site edge is multi-homed to the first backbone network egress device and the second backbone network egress device.

The first site edge sends the fourth service packet through the third end-to-end path.

The third service packet in the method 700 may correspond to the service packet 4 in the method 600; the fourth service packet in the method 700 may correspond to the service packet 5 in the method 600; the third end-to-end path in the method 700 may correspond to the end-to-end path 2 in the method 600; the third information in the method 700 may correspond to the information 3 in the method 600; the fourth information in the method 700 may correspond to the information 4 in the method 600; the second backbone network ingress device in the method 700 may correspond to the backbone network ingress device 2 in the method 600; and the second backbone network egress device in the method 700 may correspond to the backbone network egress device 2 in the method 600.

In a possible implementation, the first site edge accesses the first backbone network ingress device through a software-defined wide area network SD-WAN tunnel or the internet internet.

FIG. 17 is a schematic flowchart of another information advertisement method according to an embodiment of this application. The information advertisement method 800 shown in FIG. 17 may be applied to the method 100, the method 200, the method 300, the method 400, or the method 500.

The information advertisement method 800 shown in FIG. 17 may be applied to a second communication apparatus.

In this embodiment of this application, the method 800 may include S701 and S702 below.

S801: Obtain a first route, where the first route includes first information about a first backbone network egress device in a backbone network and an identifier of a second site edge, and the second site edge accesses the backbone network via the first backbone network egress device.

S802: Advertise the first route to a first site edge, where the first site edge accesses the backbone network via a first backbone network ingress device.

When the method 800 is applied to the method 100,
the first site edge in the method 800 may correspond to the site edge 1 in the method 100; the second site edge in the method 800 may correspond to the site edge 2 in the method 100; the first route in the method 800 may correspond to the route 1 in the method 100; the first backbone network egress device in the method 800 may correspond to the backbone network egress device 1 in the method 100; and the first information in the method 800 may correspond to the information 1 in the method 100.

When the method 800 is applied to the method 200,
the first site edge in the method 800 may correspond to the site edge 1 in the method 200; the second site edge in the method 800 may correspond to the site edge 2 in the method 200; the first route in the method 800 may correspond to the route 1' in the method 100; the first backbone network egress device in the method 800 may correspond to the backbone network egress device 1 in the method 200; and the first information in the method 800 may correspond to the information 1 in the method 200.

When the method 800 is applied to the method 300,
the first site edge in the method 800 may correspond to the site edge 1 in the method 300; the first route in the method 800 may correspond to the route 1" in the method 300; the first backbone network egress device in the method 800 may correspond to the backbone network egress device 1 in the method 300; and the first information in the method 800 may correspond to the information 1 in the method 300.

In a possible implementation, the first information includes one or more of the following: a first segment identifier SID allocated by the first backbone network egress device for an adjacency relationship between the first backbone network egress device and the second site edge; a second SID of the first backbone network egress device; a routing priority of the first backbone network egress device; and a load balancing weight of the first backbone network egress device.

When the method 800 is applied to the method 100, the first SID in the method 800 may be the SID 1 in the method 100; and the second SID in the method 800 may be the SID 2 in the method 100.

When the method 800 is applied to the method 200, the first SID in the method 800 may be the SID 1 in the method 200; and the second SID in the method 800 may be the SID 2 in the method 200.

When the method 800 is applied to the method 300, the first SID in the method 800 may be the SID 1 in the method 300; and the second SID in the method 800 may be the SID 2 in the method 300.

In a possible implementation, the first SID is a segment routing over internet protocol version 6 endpoint segment identifier with cross-connect to an array of layer-3 adjacency relationships SRv6 END.X SID, and the second SID is a segment routing over internet protocol version 6 endpoint segment identifier SRv6 END.SID; or the first SID is an adjacency segment identifier adj-SID, and the second SID is a node SID.

In a possible implementation, when the method 800 is applied to the foregoing method 100, the second communication apparatus is the second site edge, the first route includes a software-defined wide area network SD-WAN gateway information advertisement route, the SD-WAN gateway information advertisement route includes at least one type length value TLV, and the at least one TLV carries the first information.

In a possible implementation, the SD-WAN gateway information advertisement route includes a first TLV, a value value field in the first TLV is for carrying the first SID and/or the second SID in the first information, the first TLV further includes a priority sub-TLV and/or a weight sub-TLV, the priority sub-TLV is for carrying the routing priority in the first information, and the weight sub-TLV is for carrying the load balancing weight in the first information.

The first TLV mentioned in the method 700 may be the MP_REACH_NLRI shown in FIG. 4a mentioned in the method 100.

In a possible implementation, when the method 800 is applied to the foregoing method 200, the second communication apparatus is the second site edge, and the first route includes a virtual private network VPN route.

In a possible implementation, the VPN route includes a first metadata path attribute metadata path attribute, and the first metadata path attribute carries the first information.

The first metadata path attribute in the method 800 may correspond to the metadata path attribute 2 in the method 100.

In a possible implementation, the first route further includes service intention information.

In a possible implementation, the service intention information includes one or more of the following: a gateway that needs to be included for transmission of service traffic, a gateway that needs to be excluded for transmission of the service traffic, and a quality of service parameter that needs to be satisfied for transmission of the service traffic.

In a possible implementation, the first route includes a second metadata path attribute, and the second metadata path attribute includes the service intention information.

When the method 800 is applied to the foregoing method 100, the second metadata path attribute in the method 800 may correspond to the metadata path attribute 1 in the method 100.

When the method 800 is applied to the foregoing method 200, the second metadata path attribute in the method 800 may correspond to the metadata path attribute 2 in the method 200. In a possible implementation, when the method 800 is applied to the foregoing method 200, the second communication apparatus is the first backbone network egress device, and advertising the first route to the first site edge includes: advertising the first route to the first site edge via the first backbone network ingress device.

The first backbone network ingress device in the method 700 may correspond to the backbone network ingress device 1 in the method 300.

In a possible implementation, the first route includes a first SD-WAN gateway auto-discovery route.

In a possible implementation, when the method 800 is applied to the foregoing method 100 or 200, the method further includes: advertising a second route to the first site edge, where the second route includes second information about a second backbone network egress device in the backbone network and the identifier of the second site edge, and the second site edge accesses the backbone network via the second backbone network egress device.

When the method 800 is applied to the foregoing method 100,
the second route in the method 800 may correspond to the route 2 in the method 100; the second backbone network egress device in the method 800 may correspond to the backbone network egress device 2 in the method 100; the second information in the method 800 may correspond to the information 2 in the method 100; and a second binding relationship in the method 800 may correspond to the binding relationship 2 in the method 100.

When the method 800 is applied to the foregoing method 200,
the second route in the method 800 may correspond to the route 1' in the method 200; the second backbone network egress device in the method 800 may correspond to the backbone network egress device 2 in the method 200; the second information in the method 800 may correspond to the information 2 in the method 200; and a second binding relationship in the method 800 may correspond to the binding relationship 2 in the method 200.

In a possible implementation, when the second communication apparatus is the second site edge, the method 800 may be further applied to the foregoing method 400 or 500. In this case, the method further includes: receiving a third route sent by the first backbone network egress device, where the third route is for advertising third information of the first backbone network egress device; and obtaining a first binding relationship between the second site edge and the first backbone network egress device based on the third route.

When the method 800 is applied to the foregoing method 400,
the second site edge in the method 800 may correspond to the site edge in the method 400; the first backbone network egress device in the method 800 may correspond to the gateway in the method 400; the third route in the method 800 may correspond to the route 3 in the method 400; the third information in the method 800 may correspond to the information 3 in the method 400; and a third binding relationship in the method 800 may correspond to the binding relationship 3 in the method 400.

When the method 800 is applied to the foregoing method 500,
the second site edge in the method 800 may correspond to the site edge in the method 500; the first backbone network egress device in the method 800 may correspond to the gateway in the method 500; the third route in the method 800 may correspond to the route 3' in the method 500; the third information in the method 800 may correspond to the information 3 in the method 500; and a third binding relationship in the method 800 may correspond to the binding relationship 3 in the method 500.

In a possible implementation, the third information includes a third SID allocated by the first backbone network egress device for the adjacency relationship between the first backbone network egress device and the second site edge and/or a fourth SID of the first backbone network egress device.

When the method 800 is applied to the foregoing method 400, the third SID in the method 800 may correspond to the SID 3 in the method 400; and the fourth SID in the method 800 may correspond to the SID 4 in the method 400.

When the method 800 is applied to the foregoing method 500, the third SID in the method 800 may correspond to the SID 3 in the method 500; and the fourth SID in the method 800 may correspond to the SID 4 in the method 500.

In a possible implementation, when the method 800 may be further applied to the foregoing method 400 or 500, the method further includes: receiving a fourth route sent by a second backbone network egress device, where the fourth route is for advertising fourth information of the second backbone network egress device; and obtaining a second binding relationship between the second site edge and the second backbone network egress device based on the fourth route.

In a possible implementation, the method further includes: determining routing priorities respectively corresponding to the first backbone network egress device and the second backbone network egress device; and/or determining load balancing weights respectively corresponding to the first backbone network egress device and the second backbone network egress device.

In a possible implementation, when the method 800 is applied to the foregoing method 400, the third route is a second SD-WAN gateway auto-discovery route.

In a possible implementation, when the method 800 is applied to the foregoing method 500, the third route is a BGP link state LS route, the BGP-LS route includes a second TLV, and the second TLV indicates that the third route is for advertising the third information of the first backbone network egress device.

The second TLV in the method 800 may correspond to the TLV 1 in the method 500.

In a possible implementation, the second TLV is a role advertisement TLV, and the role advertisement TLV indicates that a role of the first backbone network egress device is a gateway.

In a possible implementation, the third route further includes transit-gateway information, and the transit-gateway information indicates at least one transit gateway between a backbone network ingress device in the backbone network and the first backbone network egress device.

In a possible implementation, the third route includes a third metadata path attribute, and the third metadata path attribute carries the transit-gateway information.

When the method 800 is applied to the foregoing method 400, the third metadata path attribute in the method 800 may correspond to the metadata path attribute 3 in the method 400.

When the method 800 is applied to the foregoing method 500, the third metadata path attribute in the method 800 may correspond to the metadata path attribute 4 in the method 500.

In a possible implementation, the method further includes: determining gateway constraint information in service intention information based on the transit-gateway information, where the gateway constraint information indicates to determine a gateway constraint condition that needs to be followed by a path to the second site edge.

In a possible implementation, the gateway constraint condition includes a gateway that needs to be included, and/or a gateway that needs to be excluded.

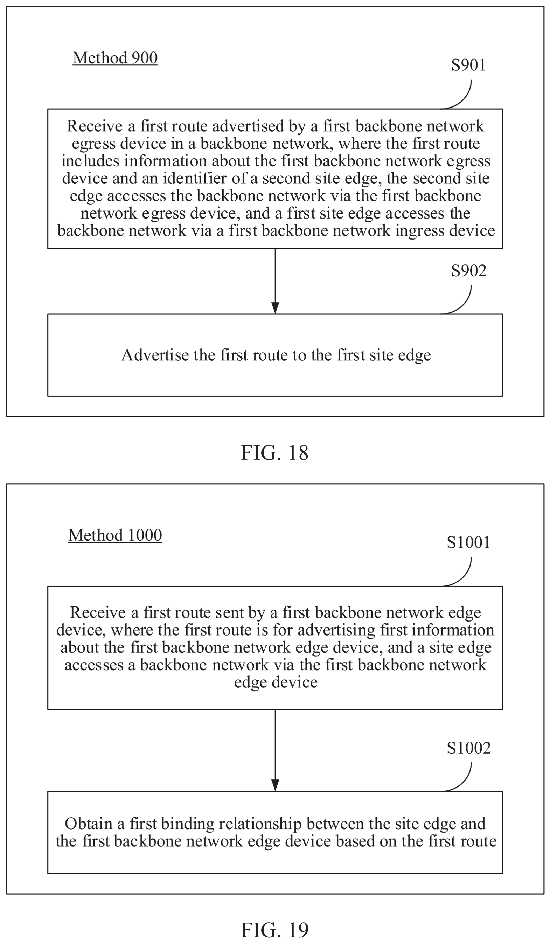

FIG. 18 is a schematic flowchart of another information advertisement method according to an embodiment of this application. The information advertisement method 900 shown in FIG. 18 may be applied to the method 300 or method 600.

The information advertisement method 900 shown in FIG. 18 may be applied to a first backbone network ingress device.

In this embodiment of this application, the method 900 may include S901 and S902 below.

S901: Receive a first route advertised by a first backbone network egress device in a backbone network, where the first route includes information about the first backbone network egress device and an identifier of a second site edge, the second site edge accesses the backbone network via the first backbone network egress device, and a first site edge accesses the backbone network via the first backbone network ingress device.

S902: Advertise the first route to the first site edge.

When the method 900 is applied to the foregoing method 300, the first backbone network egress device in the method 900 corresponds to the backbone network egress device 1 in the method 300; the first route in the method 900 may correspond to the route 1" in the method 300; the information about the first backbone network egress device in the method 900 may correspond to the information 1 in the method 300; the second site edge in the method 900 may correspond to the site edge 2 in the method 300; the first backbone network ingress device in the method 900 may correspond to the backbone network ingress device 1 in the method 300; and the first site edge in the method 900 may correspond to the site edge 1 in the method 300.

When the method 900 is applied to the foregoing method 600, the method 900 may further include the following content:

The first backbone network ingress device receives a second service packet from the first site edge, where a payload in the second service packet includes a first service packet, path information of an end-to-end path between the first site edge and the second site edge is encapsulated at an outer layer of the first service packet, the path information of the end-to-end path includes first information identifying the first backbone network ingress device and second information identifying the first backbone network egress device in the backbone network, an ingress endpoint of the end-to-end path is the first site edge, an egress endpoint of the end-to-end path is the second site edge, the end-to-end path passes through the first backbone network ingress device and the first backbone network egress device, the first site edge accesses the backbone network via the first backbone network ingress device, and the second site edge accesses the backbone network via the first backbone network egress device. The first backbone network ingress device processes the second service packet based on the first information, to obtain a third service packet. The first backbone network ingress device sends the third service packet to the first backbone network egress device.

The first site edge in the method 900 may correspond to the site edge 1 in the method 600; the first service packet in the method 900 may correspond to the service packet 1 in the method 600; the second service packet in the method 900 may correspond to the service packet 2 in the method 600; a first end-to-end path in the method 900 may correspond to the end-to-end path 1 in the method 600; the first information in the method 900 may correspond to the information 1 in the method 600; the second information in the method 900 may correspond to the information 2 in the method 600; the first backbone network ingress device in the method 900 may correspond to the backbone network ingress device 1 in the method 600; the first backbone network egress device in the method 900 may correspond to the backbone network egress device 1 in the method 600; the second site edge in the method 900 may correspond to the site edge 2 in the method 600; and the third service packet in the method 900 may correspond to the service packet 3 in the method 600.

In a possible implementation, the second service packet further includes service intention information.

In a possible implementation, the service intention information is carried in a metadata metadata field in the second service packet.

In a possible implementation, the end-to-end path is an SRv6 tunnel, the second service packet includes an IPv6 header and a segment routing header SRH, a destination address in the IPv6 header points to the first backbone network ingress device, and the SRH includes the first information and the second information.

In a possible implementation, the first information is a first endpoint segment identifier END.SID 1 allocated by the first backbone network ingress device, the second information is a second endpoint segment identifier END.SID 2 allocated by the first backbone network egress device, and the SRH further includes an IPv6 address of the second site edge.

In a possible implementation, the first information is a first endpoint segment identifier END.SID 1 of the first backbone network ingress device, and the second information is an endpoint segment identifier with cross-connect to an array of layer-3 adjacency relationships END.X SID allocated by the first backbone network egress device for an adjacency relationship between the first backbone network egress device and the second site edge.

In a possible implementation, an operation associated with the first endpoint segment identifier END.SID 1 includes: matching an overlay overlay SRv6 policy from the first backbone network ingress device to the first backbone network egress device based on a next-hop SID of the END.SID 1 in the SRH.

In a possible implementation, when the second service packet includes the service intention information, an operation associated with the first endpoint segment identifier END.SID 1 includes: matching an overlay overlay SRv6 policy from the first backbone network ingress device to the first backbone network egress device based on a next-hop SID of the END.SID 1 in the SRH and the service intention information.

In a possible implementation, processing the second service packet based on the first information, to obtain the third service packet includes: matching a first overlay SRv6 policy from the first backbone network ingress device to the first backbone network egress device based on the next-hop SID of the END.SID 1 in the SRH; and encapsulating the second service packet by using the first overlay SRv6 policy, to obtain the third service packet.

In a possible implementation, processing the second service packet based on the first information, to obtain the third service packet includes: matching a second overlay SRv6 policy from the first backbone network ingress device to the first backbone network egress device based on the next-hop SID of the END.SID 1 in the SRH and the service intention information; and encapsulating the second service packet by using the second overlay SRv6 policy, to obtain the third service packet.

In a possible implementation, the end-to-end path is an SR-MPLS TE policy, the second service packet includes an MPLS label stack, the MPLS label stack includes the first information and the second information, the first information is a first node SID of the first backbone network ingress device, and the second information includes a second node SID of the first backbone network egress device and an adjacency segment identifier adj-SID allocated by the first backbone network egress device for an adjacency relationship between the first backbone network egress device and the second site edge.

In a possible implementation, an operation associated with the first node SID includes: matching an overlay overlay SR-MPLS TE policy from the first backbone network ingress device to the first backbone network egress device based on a next-hop SID of the first node SID in the label stack.

In a possible implementation, when the second service packet includes the service intention information, an operation associated with the first node SID includes: matching an overlay overlay SR-MPLS TE policy from the first backbone network ingress device to the first backbone network egress device based on a next-hop SID of the first node SID in the label stack and the service intention information.

In a possible implementation, processing the second service packet based on the first information, to obtain the third service packet includes: matching a first overlay SR-MPLS TE policy from the first backbone network ingress device to the first backbone network egress device based on the next-hop SID of the first node SID in the label stack; and encapsulating the second service packet by using the first overlay SR-MPLS TE policy, to obtain the third service packet.

In a possible implementation, processing the second service packet based on the first information, to obtain the third service packet includes: matching a second overlay SR-MPLS TE policy from the first backbone network ingress device to the first backbone network egress device based on the next-hop SID of the first node SID in the label stack and the service intention information; and encapsulating the second service packet by using the second overlay SR-MPLS TE policy, to obtain the third service packet.

In a possible implementation, the end-to-end path is a tunnel encapsulated according to a generic network virtualization encapsulation GENEVE protocol, and SRv6 in GENEVE encapsulation is used for the second service packet.

In a possible implementation, the end-to-end path is a tunnel encapsulated according to a generic routing encapsulation GRE protocol, and SRv6 over GRE encapsulation is used for the second service packet.

In a possible implementation, the second service packet includes an outer IP header, a user datagram protocol UDP header, outer GRE encapsulation, the IPv6 header, the SRH, inner GRE encapsulation, and the payload, where the payload includes the first service packet, and the inner GRE encapsulation includes a VPN identifier of a VPN service carried in the first service packet.

In a possible implementation, the first site edge accesses the first backbone network ingress device through a software-defined wide area network SD-WAN tunnel or an internet.

FIG. 19 is a schematic flowchart of still another information advertisement method according to an embodiment of this application. The information advertisement method 1000 shown in FIG. 19 may be applied to the method 400 or method 500.

The information advertisement method 1000 may be applied to a site edge, and the method may include S1001 and S1002 below.

S1001: Receive a first route sent by a first backbone network edge device, where the first route is for advertising first information about the first backbone network edge device, and the site edge accesses a backbone network via the first backbone network edge device.

S1002: Obtain a first binding relationship between the site edge and the first backbone network edge device based on the first route.

When the method 1000 is applied to the foregoing method 400, the first backbone network edge device in the method 1000 may correspond to the gateway in the method 400; the site edge in the method 1000 may correspond to the site edge in the method 400; the first route in the method 1000 may correspond to the route 3 in the method 400; the first information in the method 1000 may correspond to the information 3 in the method 400; and the first binding relationship in the method 1000 may correspond to the binding relationship 3 in the method 400.

When the method 1000 is applied to the foregoing method 500, the first backbone network edge device in the method 1000 may correspond to the gateway in the method 500; the site edge in the method 1000 may correspond to the site edge in the method 500; the first route in the method 1000 may correspond to the route 3' in the method 500; the first information in the method 1000 may correspond to the information 3 in the method 500; and the first binding relationship in the method 1000 may correspond to the binding relationship 3 in the method 500.

In a possible implementation, the first information includes a first SID allocated by the first backbone network edge device for an adjacency relationship between the first backbone network edge device and the site edge and/or a second SID of the first backbone network edge device.

When the method 1000 is applied to the foregoing method 400, the first SID in the method 1000 may correspond to the SID 3 in the method 400; and the second SID in the method 1000 may correspond to the SID 4 in the method 400.

When the method 1000 is applied to the foregoing method 500, the first SID in the method 1000 may correspond to the SID 3 in the method 500; and the second SID in the method 1000 may correspond to the SID 4 in the method 500.

In a possible implementation, the method further includes: receiving a second route sent by a second backbone network edge device, where the second route is for advertising second information about the second backbone network edge device; and obtaining a second binding relationship between the site edge and the second backbone network edge device based on the second route.

In a possible implementation, the method further includes: determining routing priorities respectively corresponding to the first backbone network edge device and the second backbone network edge device; and/or determining load balancing weights respectively corresponding to the first backbone network edge device and the second backbone network edge device.

In a possible implementation, when the method 1000 is applied to the foregoing method 400, the first route is an SD-WAN gateway auto-discovery route.

In a possible implementation, when the method 1000 is applied to the foregoing method 500, the first route is a BGP link state LS route, the BGP-LS route includes a TLV, and the TLV indicates that the first route is for advertising the first information about the first backbone network edge device.

The TLV in the method 1000 may correspond to the TLV 1 in the method 500.

In a possible implementation, the TLV is a role advertisement TLV, and the role advertisement TLV indicates that a role of the backbone network edge device is a gateway.

In a possible implementation, the first route further includes transit-gateway information, and the transit-gateway information indicates at least one transit gateway between a backbone network ingress device and a backbone network egress device in the backbone network.

In a possible implementation, the first route includes a metadata path attribute, and the metadata path attribute carries the transit-gateway information.

When the method 1000 is applied to the foregoing method 400, the metadata path attribute in the method 1000 may correspond to the metadata path attribute 3 in the method 400.

When the method 1000 is applied to the foregoing method 500, the metadata path attribute in the method 1000 may correspond to the metadata path attribute 4 in the method 500.

In a possible implementation, the method further includes: determining gateway constraint information in service intention information based on the transit-gateway information, where the gateway constraint information indicates to determine a gateway constraint condition that needs to be followed by a path to the site edge.

In a possible implementation, the gateway constraint condition includes a gateway that needs to be included, and/or a gateway that needs to be excluded.

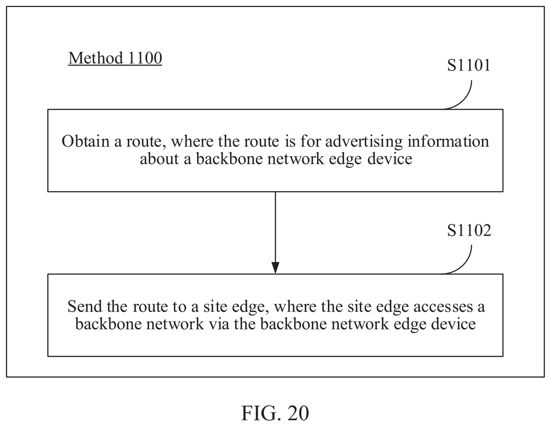

FIG. 20 is a schematic flowchart of still another information advertisement method according to an embodiment of this application. The information advertisement method 1100 shown in FIG. 20 may be applied to the method 400 or method 500.

The information advertisement method 1100 may be applied to a backbone network edge device, and the method may include S1101 and S1102 below.

S1101: Obtain a route, where the route is for advertising information about the backbone network edge device.

S1102: Send the route to a site edge, where the site edge accesses a backbone network via the backbone network edge device.

When the method 1100 is applied to the foregoing method 400, the backbone network edge device in the method 1100 may correspond to the gateway in the method 400; the site edge in the method 1100 may correspond to the site edge in the method 400; the route in the method 1100 may correspond to the route 3 in the method 400; and the information in the method 1100 may correspond to the information 3 in the method 400.

When the method 1100 is applied to the foregoing method 500, the backbone network edge device in the method 1100 may correspond to the gateway in the method 500; the site edge in the method 1100 may correspond to the site edge in the method 500; the route in the method 1100 may correspond to the route 3' in the method 400; and the information in the method 1100 may correspond to the information 3 in the method 500.

In a possible implementation, the information includes a first SID allocated by the backbone network edge device for an adjacency relationship between the backbone network edge device and the site edge and/or a second SID of the backbone network edge device.

When the method 1100 is applied to the foregoing method 400, the first SID in the method 1100 may correspond to the SID 3 in the method 400; and the second SID in the method 1100 may correspond to the SID 4 in the method 400.

When the method 1100 is applied to the foregoing method 500, the first SID in the method 1100 may correspond to the SID 3 in the method 500; and the second SID in the method 1100 may correspond to the SID 4 in the method 500.

In a possible implementation, when the method 1100 is applied to the foregoing method 400, the route is an SD-WAN gateway auto-discovery route.

In a possible implementation, when the method 1100 is applied to the foregoing method 500, the route is a BGP link state LS route, the BGP-LS route includes a TLV, and the TLV indicates that the route is for advertising the information about the backbone network edge device.

The TLV in the method 1100 may correspond to the TLV 1 in the method 500.

In a possible implementation, the TLV is a role advertisement TLV, and the role advertisement TLV indicates that a role of the backbone network edge device is a gateway.

In a possible implementation, the route further includes transit-gateway information, and the transit-gateway information indicates at least one transit gateway between a backbone network ingress device and a backbone network egress device in the backbone network.

In a possible implementation, the route includes a metadata path attribute, and the metadata path attribute carries the transit-gateway information.

When the method 1100 is applied to the foregoing method 400, the metadata path attribute in the method 1100 may correspond to the metadata path attribute 3 in the method 400.

When the method 1100 is applied to the foregoing method 500, the metadata path attribute in the method 1100 may correspond to the metadata path attribute 4 in the method 500.

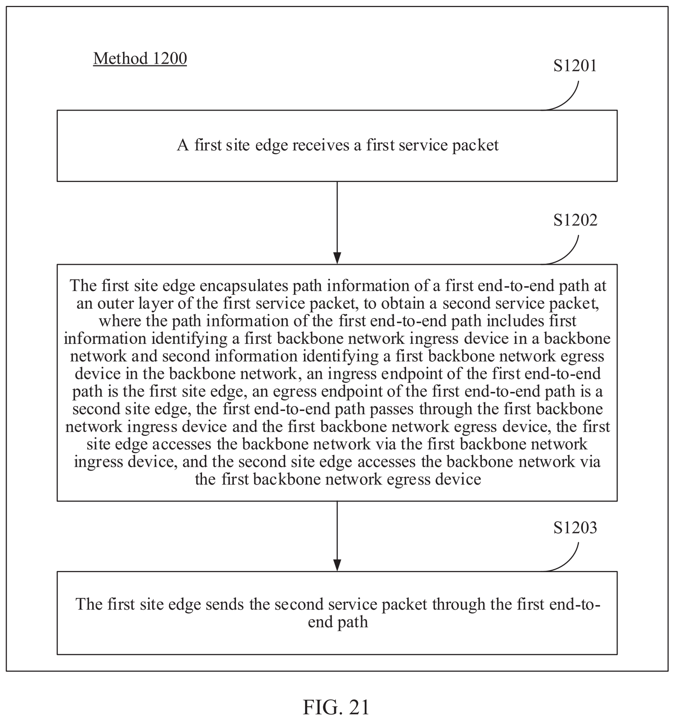

FIG. 21 is a schematic flowchart of a traffic forwarding method according to an embodiment of this application. The traffic forwarding method 1200 shown in FIG. 21 may be applied to the foregoing method 600.

The traffic forwarding method 1200 may include S1201 to S1203 below.

S1201: A first site edge receives a first service packet.

S1202: The first site edge encapsulates path information of a first end-to-end path at an outer layer of the first service packet, to obtain a second service packet, where the path information of the first end-to-end path includes first information identifying a first backbone network ingress device in a backbone network and second information identifying a first backbone network egress device in the backbone network, an ingress endpoint of the first end-to-end path is the first site edge, an egress endpoint of the first end-to-end path is a second site edge, the first end-to-end path passes through the first backbone network ingress device and the first backbone network egress device, the first site edge accesses the backbone network via the first backbone network ingress device, and the second site edge accesses the backbone network via the first backbone network egress device.

S1203: The first site edge sends the second service packet through the first end-to-end path.

The first site edge in the method 1200 may correspond to the site edge 1 in the method 600; the first service packet in the method 1200 may correspond to the service packet 1 in the method 600; the second service packet in the method 1200 may correspond to the service packet 2 in the method 600; a first end-to-end path in the method 1200 may correspond to the end-to-end path 1 in the method 600; the first information in the method 1200 may correspond to the information 1 in the method 600; the second information in the method 1200 may correspond to the information 2 in the method 600; the first backbone network ingress device in the method 1200 may correspond to the backbone network ingress device 1 in the method 600; the first backbone network egress device in the method 1200 may correspond to the backbone network egress device 1 in the method 600; the second site edge in the method 1200 may correspond to the site edge 2 in the method 600; and
In a possible implementation, the first service packet is for carrying a virtual private network VPN service, and before receiving the first service packet, the method further includes: orchestrating, by the first site edge, the first end-to-end path from the first site edge to the second site edge by using the first backbone network ingress device and the first backbone network egress device on demand based on the VPN service.

In a possible implementation, the second service packet further includes service intention information.

In a possible implementation, the service intention information is carried in a metadata metadata field in the second service packet.

In a possible implementation, before encapsulating the path information of the first end-to-end path, the method further includes: determining, by the first site edge based on a destination address in the first service packet, that a next hop for forwarding the first service packet is the second site edge, and iterating a first segment routing policy SR policy based on an internet protocol IP address of the second site edge, to obtain the path information of the first end-to-end path.

The first SR policy in the method 1200 may correspond to the SR policy 1 in the method 600.

In a possible implementation, the first end-to-end path is an SRv6 tunnel, the second service packet includes an IPv6 header and a segment routing header SRH, a destination address in the IPv6 header points to the first backbone network ingress device, and the SRH includes the first information and the second information.

In a possible implementation, the first information is a first endpoint segment identifier END.SID 1 of the first backbone network ingress device, the second information is a second endpoint segment identifier END.SID 2 of the first backbone network egress device, and the SRH further includes an IPv6 address of the second site edge.

In a possible implementation, the first information is a first endpoint segment identifier END.SID 1 of the first backbone network ingress device, and the second information is an endpoint segment identifier with cross-connect to an array of layer-3 adjacency relationships END.X SID allocated by the first backbone network egress device for an adjacency relationship between the first backbone network egress device and the second site edge.

In a possible implementation, an operation associated with the first endpoint segment identifier END.SID 1 includes: matching an overlay overlay SRv6 policy from the first backbone network ingress device to the first backbone network egress device based on a next-hop SID of the END.SID 1.

In a possible implementation, when the second service packet includes the service intention information, an operation associated with the first endpoint segment identifier END.SID 1 includes: matching an overlay overlay SRv6 policy from the first backbone network ingress device to the first backbone network egress device based on a next-hop SID of the END.SID 1 and the service intention information.

In a possible implementation, the first end-to-end path is an SR-MPLS TE policy, the second service packet includes an MPLS label stack, the MPLS label stack includes the first information and the second information, the first information is a first node SID of the first backbone network ingress device, and the second information includes a second node SID of the first backbone network egress device and an adjacency segment identifier adj-SID allocated by the first backbone network egress device for an adjacency relationship between the first backbone network egress device and the second site edge.

In a possible implementation, an operation associated with the first node SID includes: matching an overlay overlay SR-MPLS TE policy from the first backbone network ingress device to the first backbone network egress device based on a next-hop SID of the first node SID in the label stack.

In a possible implementation, when the second service packet includes the service intention information, an operation associated with the first node SID includes: matching an overlay overlay SR-MPLS TE policy from the first backbone network ingress device to the first backbone network egress device based on a next-hop SID of the first node SID in the label stack and the service intention information.

In a possible implementation, the first end-to-end path is a tunnel encapsulated according to a generic network virtualization encapsulation GENEVE protocol, and SRv6 in GENEVE encapsulation is used for the second service packet.

In a possible implementation, the first end-to-end path is a tunnel encapsulated according to a generic routing encapsulation GRE protocol, and SRv6 over GRE encapsulation is used for the second service packet.

In a possible implementation, the second service packet includes an outer IP header, a user datagram protocol UDP header, outer GRE encapsulation, the IPv6 header, the SRH, inner GRE encapsulation, and a payload, where the payload includes the first service packet, and the inner GRE encapsulation includes a VPN identifier of the VPN service carried in the first service packet.

In a possible implementation, the method further includes:
The first site edge receives a third service packet.

The first site edge encapsulates path information of a second end-to-end path at an outer layer of the third service packet, to obtain a fourth service packet, where the path information of the second end-to-end path includes third information identifying a second backbone network ingress device in the backbone network and fourth information identifying a second backbone network egress device in the backbone network, an ingress endpoint of the second end-to-end path is the first site edge, an egress endpoint of the second end-to-end path is the second site edge, the second end-to-end path passes through the second backbone network ingress device and the second backbone network egress device, the first site edge is multi-homed to the first backbone network ingress device and the second backbone network ingress device, and the second site edge is multi-homed to the first backbone network egress device and the second backbone network egress device.

The first site edge sends the fourth service packet through the second end-to-end path.

The third service packet in the method 1200 may correspond to the service packet 4 in the method 600; the fourth service packet in the method 1200 may correspond to the service packet 5 in the method 600; the second end-to-end path in the method 1200 may correspond to the end-to-end path 2 in the method 600; the third information in the method 1200 may correspond to the information 3 in the method 600; the fourth information in the method 1200 may correspond to the information 4 in the method 600; the second backbone network ingress device in the method 1200 may correspond to the backbone network ingress device 2 in the method 600; and the second backbone network egress device in the method 1200 may correspond to the backbone network egress device 2 in the method 600.

In a possible implementation, the first site edge accesses the first backbone network ingress device through a software-defined wide area network SD-WAN tunnel or the internet internet.

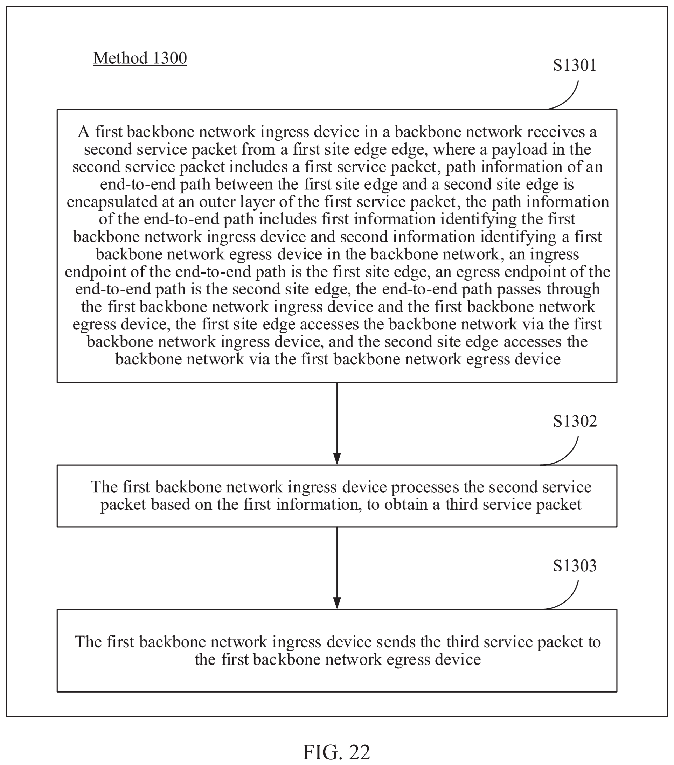

FIG. 22 is a schematic flowchart of another traffic forwarding method according to an embodiment of this application. The traffic forwarding method 1300 shown in FIG. 22 may be applied to the foregoing method 600.

The traffic forwarding method 1300 may include S1301 to S1303 below.

S1301: A first backbone network ingress device in a backbone network receives a second service packet from a first site edge, where a payload in the second service packet includes a first service packet, path information of an end-to-end path between the first site edge and a second site edge is encapsulated at an outer layer of the first service packet, the path information of the end-to-end path includes first information identifying the first backbone network ingress device and second information identifying a first backbone network egress device in the backbone network, an ingress endpoint of the end-to-end path is the first site edge, an egress endpoint of the end-to-end path is the second site edge, the end-to-end path passes through the first backbone network ingress device and the first backbone network egress device, the first site edge accesses the backbone network via the first backbone network ingress device, and the second site edge accesses the backbone network via the first backbone network egress device.

S1302: The first backbone network ingress device processes the second service packet based on the first information, to obtain a third service packet.

S1303: The first backbone network ingress device sends the third service packet to the first backbone network egress device.

The first site edge in the method 1300 may correspond to the site edge 1 in the method 600; the first service packet in the method 1300 may correspond to the service packet 1 in the method 600; the second service packet in the method 1300 may correspond to the service packet 2 in the method 600; a first end-to-end path in the method 1300 may correspond to the end-to-end path 1 in the method 600; the first information in the method 1300 may correspond to the information 1 in the method 600; the second information in the method 1300 may correspond to the information 2 in the method 600; the first backbone network ingress device in the method 1300 may correspond to the backbone network ingress device 1 in the method 600; the first backbone network egress device in the method 1300 may correspond to the backbone network egress device 1 in the method 600; the second site edge in the method 1300 may correspond to the site edge 2 in the method 600; and the third service packet in the method 1300 may correspond to the service packet 3 in the method 600.

In a possible implementation, the second service packet further includes service intention information.

In a possible implementation, the service intention information is carried in a metadata metadata field in the second service packet.

In a possible implementation, the end-to-end path is an SRv6 tunnel, the second service packet includes an IPv6 header and a segment routing header SRH, a destination address in the IPv6 header points to the first backbone network ingress device, and the SRH includes the first information and the second information.

In a possible implementation, the first information is a first endpoint segment identifier END.SID 1 allocated by the first backbone network ingress device, the second information is a second endpoint segment identifier END.SID 2 allocated by the first backbone network egress device, and the SRH further includes an IPv6 address of the second site edge.

In a possible implementation, the first information is a first endpoint segment identifier END.SID 1 of the first backbone network ingress device, and the second information is an endpoint segment identifier with cross-connect to an array of layer-3 adjacency relationships END.X SID allocated by the first backbone network egress device for an adjacency relationship between the first backbone network egress device and the second site edge.

In a possible implementation, an operation associated with the first endpoint segment identifier END.SID 1 includes: matching an overlay overlay SRv6 policy from the first backbone network ingress device to the first backbone network egress device based on a next-hop SID of the END.SID 1 in the SRH.

In a possible implementation, when the second service packet includes the service intention information, an operation associated with the first endpoint segment identifier END.SID 1 includes: matching an overlay overlay SRv6 policy from the first backbone network ingress device to the first backbone network egress device based on a next-hop SID of the END.SID 1 in the SRH and the service intention information.

In a possible implementation, processing the second service packet based on the first information, to obtain the third service packet includes: matching a first overlay SRv6 policy from the first backbone network ingress device to the first backbone network egress device based on the next-hop SID of the END.SID 1 in the SRH; and encapsulating the second service packet by using the first overlay SRv6 policy, to obtain the third service packet.

In a possible implementation, processing the second service packet based on the first information, to obtain the third service packet includes: matching a second overlay SRv6 policy from the first backbone network ingress device to the first backbone network egress device based on the next-hop SID of the END.SID 1 in the SRH and the service intention information; and encapsulating the second service packet by using the second overlay SRv6 policy, to obtain the third service packet.

In a possible implementation, the end-to-end path is an SR-MPLS TE policy, the second service packet includes an MPLS label stack, the MPLS label stack includes the first information and the second information, the first information is a first node SID of the first backbone network ingress device, and the second information includes a second node SID of the first backbone network egress device and an adjacency segment identifier adj-SID allocated by the first backbone network egress device for an adjacency relationship between the first backbone network egress device and the second site edge.

In a possible implementation, an operation associated with the first node SID includes: matching an overlay overlay SR-MPLS TE policy from the first backbone network ingress device to the first backbone network egress device based on a next-hop SID of the first node SID in the label stack.

In a possible implementation, when the second service packet includes the service intention information, an operation associated with the first node SID includes: matching an overlay overlay SR-MPLS TE policy from the first backbone network ingress device to the first backbone network egress device based on a next-hop SID of the first node SID in the label stack and the service intention information.

In a possible implementation, processing the second service packet based on the first information, to obtain the third service packet includes: matching a first overlay SR-MPLS TE policy from the first backbone network ingress device to the first backbone network egress device based on the next-hop SID of the first node SID in the label stack; and encapsulating the second service packet by using the first overlay SR-MPLS TE policy, to obtain the third service packet.

In a possible implementation, processing the second service packet based on the first information, to obtain the third service packet includes: matching a second overlay SR-MPLS TE policy from the first backbone network ingress device to the first backbone network egress device based on the next-hop SID of the first node SID in the label stack and the service intention information; and encapsulating the second service packet by using the second overlay SR-MPLS TE policy, to obtain the third service packet.

In a possible implementation, the end-to-end path is a tunnel encapsulated according to a generic network virtualization encapsulation GENEVE protocol, and SRv6 in GENEVE encapsulation is used for the second service packet.

In a possible implementation, the end-to-end path is a tunnel encapsulated according to a generic routing encapsulation GRE protocol, and SRv6 over GRE encapsulation is used for the second service packet.

In a possible implementation, the second service packet includes an outer IP header, a user datagram protocol UDP header, outer GRE encapsulation, the IPv6 header, the SRH, inner GRE encapsulation, and the payload, where the payload includes the first service packet, and the inner GRE encapsulation includes a VPN identifier of a VPN service carried in the first service packet.

In a possible implementation, the first site edge accesses the first backbone network ingress device through a software-defined wide area network SD-WAN tunnel or an internet.

An embodiment of this application further provides a communication apparatus, configured to perform the information advertisement methods provided in the foregoing method embodiments. The communication apparatus may include a transceiver unit and/or a processing unit. The transceiver unit is configured to perform a receiving operation and/or a sending operation, and the processing unit is configured to perform an operation other than the receiving operation and/or the sending operation. In an example, the transceiver unit includes a receiving unit and/or a sending unit, where the receiving unit is configured to perform the receiving operation, and the sending unit is configured to perform the sending operation.

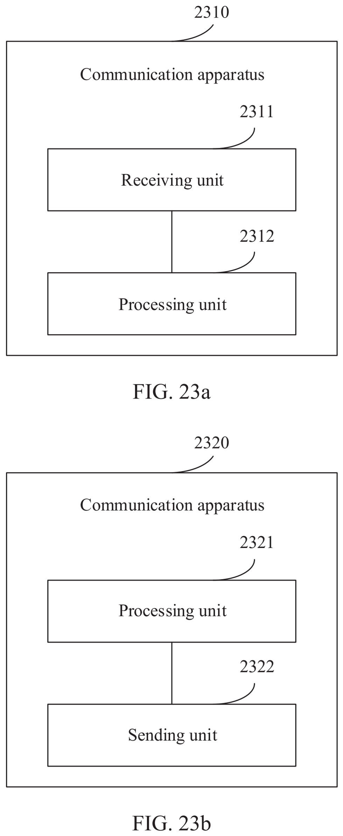

In a specific example, a structure of the communication apparatus may be shown in FIG. 23a. FIG. 23a is a diagram of a structure of a communication apparatus according to an embodiment of this application. As shown in FIG. 23a,
the communication apparatus 2310 includes a receiving unit 2311 and a processing unit 2312.

In a specific example, the communication apparatus 2310 may be used in a first communication apparatus used as a first site edge. In this case:

The receiving unit 2311 is configured to receive a first route advertised by a second communication apparatus, where the first route includes first information about a first backbone network egress device in a backbone network and an identifier of a second site edge, the second site edge accesses the backbone network via the first backbone network egress device, and the first site edge accesses the backbone network via a first backbone network ingress device; and
the processing unit 2312 is configured to obtain a first binding relationship between the second site edge and the first backbone network egress device based on the first route.

In a possible implementation, the processing unit 2312 is further configured to determine a first end-to-end path from the first site edge to the second site edge based on the first binding relationship, where the first end-to-end path passes through the first backbone network ingress device and the first backbone network egress device.

In a possible implementation, the first information includes one or more of the following: a first segment identifier SID allocated by the first backbone network egress device for an adjacency relationship between the first backbone network egress device and the second site edge; a second SID of the first backbone network egress device; a routing priority of the first backbone network egress device; and a load balancing weight of the first backbone network egress device.

In a possible implementation, the first SID is a segment routing over internet protocol version 6 endpoint segment identifier with cross-connect to an array of layer-3 adjacency relationships SRv6 END.X SID, and the second SID is a segment routing over internet protocol version 6 endpoint segment identifier SRv6 END.SID; or the first SID is an adjacency segment identifier adj-SID, and the second SID is a node SID.

In a possible implementation, the second communication apparatus is the second site edge, the first route includes a software-defined wide area network SD-WAN gateway information advertisement route, the SD-WAN gateway information advertisement route includes at least one type length value TLV, and the at least one TLV carries the first information.

In a possible implementation, the SD-WAN gateway information advertisement route includes a first TLV, a value value field in the first TLV is for carrying the first SID and/or the second SID in the first information, the first TLV further includes a priority sub-TLV and/or a weight sub-TLV, the priority sub-TLV is for carrying the routing priority in the first information, and the weight sub-TLV is for carrying the load balancing weight in the first information.

In a possible implementation, the second communication apparatus is the second site edge, and the first route includes a virtual private network VPN route.

In a possible implementation, the VPN route includes a first metadata path attribute metadata path attribute, and the first metadata path attribute carries the first information.

In a possible implementation, the first route further includes service intention information.

In a possible implementation, the service intention information includes one or more of the following: a gateway that needs to be included by the first end-to-end path, a gateway that needs to be excluded by the first end-to-end path, and a quality of service parameter.

In a possible implementation, the first route includes a second metadata path attribute, and the second metadata path attribute includes the service intention information.

In a possible implementation, the second communication apparatus is the first backbone network egress device, and the receiving unit 2311 is configured to receive, via the first backbone network ingress device, the first route advertised by the first backbone network egress device.

In a possible implementation, the first route includes a first SD-WAN gateway auto-discovery route.

In a possible implementation, the receiving unit 2311 is further configured to receive a second route advertised by a third communication apparatus, where the second route includes second information about a second backbone network egress device in the backbone network and the identifier of the second site edge, and the second site edge accesses the backbone network via the second backbone network egress device; and the processing unit 2312 is further configured to obtain a second binding relationship between the second site edge and the second backbone network egress device based on the second route.

In a possible implementation, the processing unit 2312 is further configured to: determine routing priorities respectively corresponding to the first backbone network egress device and the second backbone network egress device; and/or determine load balancing weights respectively corresponding to the first backbone network egress device and the second backbone network egress device.

In a possible implementation, the processing unit 2312 is further configured to determine a second end-to-end path from the first site edge to the second site edge based on the second binding relationship, where the second end-to-end path passes through the first backbone network ingress device and the second backbone network egress device.

In a possible implementation, the receiving unit 2311 is further configured to receive a third route sent by the first backbone network ingress device, where the third route is for advertising third information of the first backbone network ingress device; and the processing unit 2312 is further configured to obtain a third binding relationship between the first site edge and the first backbone network ingress device based on the third route.

In a possible implementation, the third route is a second SD-WAN gateway auto-discovery route or a BGP link state LS route.

In a possible implementation, the third information includes a third SID allocated by the first backbone network ingress device for an adjacency relationship between the first backbone network ingress device and the first site edge and/or a fourth SID of the first backbone network ingress device.

In a possible implementation, the third route further includes transit-gateway information, and the transit-gateway information indicates at least one transit gateway between the first backbone network ingress device and an egress device in the backbone network.

In a possible implementation, the communication apparatus 2310 further includes a sending unit. In this case:
The receiving unit 2311 is further configured to receive a first service packet; the processing unit 2312 is further configured to encapsulate path information of the first end-to-end path at an outer layer of the first service packet, to obtain a second service packet, where the path information of the first end-to-end path includes fourth information identifying the first backbone network ingress device in the backbone network and fifth information identifying the first backbone network egress device in the backbone network, an ingress endpoint of the first end-to-end path is the first site edge, an egress endpoint of the first end-to-end path is the second site edge, the first end-to-end path passes through the first backbone network ingress device and the first backbone network egress device, the first site edge accesses the backbone network via the first backbone network ingress device, and the second site edge accesses the backbone network via the first backbone network egress device; and the sending unit is configured to send the second service packet through the first end-to-end path.

In a possible implementation, the first service packet is for carrying a virtual private network VPN service, and the processing unit 2312 is further configured to: before the first service packet is received, orchestrate the first end-to-end path from the first site edge to the second site edge by using the first backbone network ingress device and the first backbone network egress device on demand based on the VPN service.

In a possible implementation, the second service packet further includes service intention information.

In a possible implementation, the service intention information is carried in a metadata metadata field in the second service packet.

In a possible implementation, the processing unit 2312 is further configured to: before encapsulating the path information of the first end-to-end path, determine, based on a destination address in the first service packet, that a next hop for forwarding the first service packet is the second site edge, and iterating a first segment routing policy SR policy based on an internet protocol IP address of the second site edge, to obtain the path information of the first end-to-end path.

In a possible implementation, the first end-to-end path is an SRv6 tunnel, the second service packet includes an IPv6 header and a segment routing header SRH, a destination address in the IPv6 header points to the first backbone network ingress device, and the SRH includes the fourth information and the fifth information.

In a possible implementation, the fourth information is a first endpoint segment identifier END.SID 1 of the first backbone network ingress device, the fifth information is a second endpoint segment identifier END.SID 2 of the first backbone network egress device, and the SRH further includes an IPv6 address of the second site edge.

In a possible implementation, the fourth information is a first endpoint segment identifier END.SID 1 of the first backbone network ingress device, and the fifth information is the endpoint segment identifier with cross-connect to an array of layer-3 adjacency relationships END.X SID allocated by the first backbone network egress device for the adjacency relationship between the first backbone network egress device and the second site edge.

In a possible implementation, an operation associated with the first endpoint segment identifier END.SID 1 includes: matching an overlay overlay SRv6 policy from the first backbone network ingress device to the first backbone network egress device based on a next-hop SID of the END.SID 1.

**In** a possible implementation, when the second service packet includes the service intention information, an operation associated with the first endpoint segment identifier END.SID 1 includes: matching an overlay overlay SRv6 policy from the first backbone network ingress device to the first backbone network egress device based on a next-hop SID of the END.SID 1 and the service intention information.

**In** a possible implementation, the first end-to-end path is an SR-MPLS TE policy, the second service packet includes an MPLS label stack, the MPLS label stack includes the fourth information and the fifth information, the fourth information is a first node SID of the first backbone network ingress device, and the fifth information includes a second node SID of the first backbone network egress device and the adjacency segment identifier adj-SID allocated by the first backbone network egress device for the adjacency relationship between the first backbone network egress device and the second site edge.

**In a** possible implementation, an operation associated with the first node SID includes: matching an overlay overlay SR-MPLS TE policy from the first backbone network ingress device to the first backbone network egress device based on a next-hop SID of the first node SID in the label stack.

**In** a possible implementation, when the second service packet includes the service intention information, an operation associated with the first node SID includes: matching an overlay overlay SR-MPLS TE policy from the first backbone network ingress device to the first backbone network egress device based on a next-hop SID of the first node SID in the label stack and the service intention information.

**In** a possible implementation, the first end-to-end path is a tunnel encapsulated according to a generic network virtualization encapsulation GENEVE protocol, and SRv6 in GENEVE encapsulation is used for the second service packet.

**In** a possible implementation, the first end-to-end path is a tunnel encapsulated according to a generic routing encapsulation GRE protocol, and SRv6 over GRE encapsulation is used for the second service packet.

**In** a possible implementation, the second service packet includes an outer IP header, a user datagram protocol UDP header, outer GRE encapsulation, the IPv6 header, the SRH, inner GRE encapsulation, and a payload, where the payload includes the first service packet, and the inner GRE encapsulation includes a VPN identifier of the VPN service carried in the first service packet.

In a possible implementation, the receiving unit 2311 is further configured to receive a third service packet; the processing unit 2312 is further configured to encapsulate path information of a third end-to-end path at an outer layer of the third service packet, to obtain a fourth service packet, where the path information of the third end-to-end path includes sixth information identifying a second backbone network ingress device in the backbone network and seventh information identifying a second backbone network egress device in the backbone network, an ingress endpoint of the third end-to-end path is the first site edge, an egress endpoint of the third end-to-end path is the second site edge, the third end-to-end path passes through the second backbone network ingress device and the second backbone network egress device, the first site edge is multi-homed to the first backbone network ingress device and the second backbone network ingress device, and the second site edge is multi-homed to the first backbone network egress device and the second backbone network egress device; and the sending unit is further configured to send the fourth service packet through the third end-to-end path.

In a possible implementation, the first site edge accesses the first backbone network ingress device through a software-defined wide area network SD-WAN tunnel or the internet internet.

In another example, the communication apparatus 2310 may be used in a site edge. In this case:

The receiving unit 2311 is configured to receive a first route sent by a first backbone network edge device, where the first route is for advertising first information about the first backbone network edge device, and the site edge accesses a backbone network via the first backbone network edge device; and
the processing unit 2312 is configured to obtain a first binding relationship between the site edge and the first backbone network edge device based on the first route.

In a possible implementation, the first information includes a first SID allocated by the first backbone network edge device for an adjacency relationship between the first backbone network edge device and the site edge and/or a second SID of the first backbone network edge device.

In a possible implementation, the receiving unit 2311 is further configured to receive a second route sent by a second backbone network edge device, where the second route is for advertising second information about the second backbone network edge device; and the processing unit 2312 is further configured to obtain a second binding relationship between the site edge and the second backbone network edge device based on the second route.

In a possible implementation, the processing unit 2312 is further configured to: determine routing priorities respectively corresponding to the first backbone network edge device and the second backbone network edge device; and/or determine load balancing weights respectively corresponding to the first backbone network edge device and the second backbone network edge device.

In a possible implementation, the first route is an SD-WAN gateway auto-discovery route.

In a possible implementation, the first route is a BGP link state LS route, the BGP-LS route includes a TLV, and the TLV indicates that the first route is for advertising the first information about the first backbone network edge device.

In a possible implementation, the TLV is a role advertisement TLV, and the role advertisement TLV indicates that a role of the backbone network edge device is a gateway.

In a possible implementation, the first route further includes transit-gateway information, and the transit-gateway information indicates at least one transit gateway between a backbone network ingress device and a backbone network egress device in the backbone network.

In a possible implementation, the first route includes a metadata path attribute, and the metadata path attribute carries the transit-gateway information.

In a possible implementation, the processing unit 2312 is further configured to determine gateway constraint information in service intention information based on the transit-gateway information, where the gateway constraint information indicates to determine a gateway constraint condition that needs to be followed by a path to the site edge.

In a possible implementation, the gateway constraint condition includes a gateway that needs to be included, and/or a gateway that needs to be excluded.

In another specific example, a structure of the communication apparatus may be shown in FIG. 23b. FIG. 23b is a diagram of a structure of another communication apparatus according to an embodiment of this application. As shown in FIG. 23b,
the communication apparatus 2320 includes a processing unit 2321 and a sending unit 2322.

In a specific example, the communication apparatus 2320 may be used in a second communication apparatus. In this case:

The processing unit 2321 is configured to obtain a first route, where the first route includes first information about a first backbone network egress device in a backbone network and an identifier of a second site edge, and the second site edge accesses the backbone network via the first backbone network egress device; and
the sending unit 2322 is configured to advertise the first route to a first site edge, where the first site edge accesses the backbone network via a first backbone network ingress device.

In a possible implementation, the first information includes one or more of the following: a first segment identifier SID allocated by the first backbone network egress device for an adjacency relationship between the first backbone network egress device and the second site edge; a second SID of the first backbone network egress device; a routing priority of the first backbone network egress device; and a load balancing weight of the first backbone network egress device.

In a possible implementation, the first SID is a segment routing over internet protocol version 6 endpoint segment identifier with cross-connect to an array of layer-3 adjacency relationships SRv6 END.X SID, and the second SID is a segment routing over internet protocol version 6 endpoint segment identifier SRv6 END.SID; or the first SID is an adjacency segment identifier adj-SID, and the second SID is a node SID.

In a possible implementation, the second communication apparatus is the second site edge, the first route includes a software-defined wide area network SD-WAN gateway information advertisement route, the SD-WAN gateway information advertisement route includes at least one type length value TLV, and the at least one TLV carries the first information.

In a possible implementation, the SD-WAN gateway information advertisement route includes a first TLV, a value value field in the first TLV is for carrying the first SID and/or the second SID in the first information, the first TLV further includes a priority sub-TLV and/or a weight sub-TLV, the priority sub-TLV is for carrying the routing priority in the first information, and the weight sub-TLV is for carrying the load balancing weight in the first information.

In a possible implementation, the second communication apparatus is the second site edge, and the first route includes a virtual private network VPN route.

In a possible implementation, the VPN route includes a first metadata path attribute metadata path attribute, and the first metadata path attribute carries the first information.

In a possible implementation, the first route further includes service intention information.

In a possible implementation, the service intention information includes one or more of the following:
a gateway that needs to be included for transmission of service traffic, a gateway that needs to be excluded for transmission of the service traffic, and a quality of service parameter that needs to be satisfied for transmission of the service traffic.

In a possible implementation, the first route includes a second metadata path attribute, and the second metadata path attribute includes the service intention information.

In a possible implementation, the second communication apparatus is the first backbone network egress device, and the sending unit 2322 is configured to advertise the first route to the first site edge via the first backbone network ingress device.

In a possible implementation, the first route includes a first SD-WAN gateway auto-discovery route.

In a possible implementation, the sending unit 2322 is further configured to advertise a second route to the first site edge, where the second route includes second information about a second backbone network egress device in the backbone network and the identifier of the second site edge, and the second site edge accesses the backbone network via the second backbone network egress device.

In a possible implementation, the apparatus further includes a receiving unit, configured to receive a third route sent by the first backbone network egress device, where the third route is for advertising third information of the first backbone network egress device; and the processing unit 2321 is further configured to obtain a first binding relationship between the second site edge and the first backbone network egress device based on the third route.

In a possible implementation, the third information includes a third SID allocated by the first backbone network egress device for the adjacency relationship between the first backbone network egress device and the second site edge and/or a fourth SID of the first backbone network egress device.

In a possible implementation, the receiving unit is further configured to receive a fourth route sent by a second backbone network egress device, where the fourth route is for advertising fourth information of the second backbone network egress device; and the processing unit 2321 is further configured to obtain a second binding relationship between the second site edge and the second backbone network egress device based on the fourth route.

In a possible implementation, the processing unit 2321 is further configured to: determine routing priorities respectively corresponding to the first backbone network egress device and the second backbone network egress device; and/or determine load balancing weights respectively corresponding to the first backbone network egress device and the second backbone network egress device.

In a possible implementation, the third route is a second SD-WAN gateway auto-discovery route.

In a possible implementation, the third route is a BGP link state LS route, the BGP-LS route includes a second TLV, and the second TLV indicates that the third route is for advertising the third information of the first backbone network egress device.

In a possible implementation, the second TLV is a role advertisement TLV, and the role advertisement TLV indicates that a role of the first backbone network egress device is a gateway.

In a possible implementation, the third route further includes transit-gateway information, and the transit-gateway information indicates at least one transit gateway between a backbone network ingress device in the backbone network and the first backbone network egress device.

In a possible implementation, the third route includes a third metadata path attribute, and the third metadata path attribute carries the transit-gateway information.

In a possible implementation, the processing unit 2321 is further configured to determine gateway constraint information in service intention information based on the transit-gateway information, where the gateway constraint information indicates to determine a gateway constraint condition that needs to be followed by a path to the second site edge.

In a possible implementation, the gateway constraint condition includes a gateway that needs to be included, and/or a gateway that needs to be excluded.

In another example, the communication apparatus 2320 may be used in a backbone network edge device. In this case:

The processing unit 2321 is configured to obtain a route, where the route is for advertising information about the backbone network edge device; and
the sending unit 2322 is configured to send the route to a site edge, where the site edge accesses a backbone network via the backbone network edge device.

In a possible implementation, the information includes a first SID allocated by the backbone network edge device for an adjacency relationship between the backbone network edge device and the site edge and/or a second SID of the backbone network edge device.

In a possible implementation, the route is an SD-WAN gateway auto-discovery route.

In a possible implementation, the route is a BGP link state LS route, the BGP-LS route includes a TLV, and the TLV indicates that the route is for advertising the information about the backbone network edge device.

In a possible implementation, the TLV is a role advertisement TLV, and the role advertisement TLV indicates that a role of the backbone network edge device is a gateway.

In a possible implementation, the route further includes transit-gateway information, and the transit-gateway information indicates at least one transit gateway between a backbone network ingress device and a backbone network egress device in the backbone network.

In a possible implementation, the route includes a metadata path attribute, and the metadata path attribute carries the transit-gateway information.

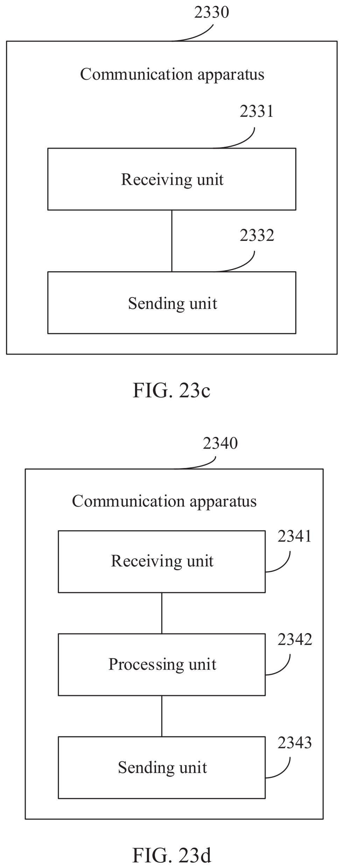

In another specific example, a structure of the communication apparatus may be shown in FIG. 23c. FIG. 23c is a diagram of a structure of another communication apparatus according to an embodiment of this application. As shown in FIG. 23c,
the communication apparatus 2330 includes a receiving unit 2331 and a sending unit 2332.

In a specific example, the communication apparatus 2330 may be used in a first backbone network ingress device in a backbone network. In this case:

The receiving unit 2331 is configured to receive a first route advertised by a first backbone network egress device in the backbone network, where the first route includes information about the first backbone network egress device and an identifier of a second site edge, the second site edge accesses the backbone network via the first backbone network egress device, and a first site edge accesses the backbone network via the first backbone network ingress device; and
the sending unit 2332 is configured to advertise the first route to the first site edge.

In a possible implementation, the communication apparatus 2330 further includes a processing unit. In this case:
The receiving unit 2331 is further configured to receive a second service packet from the first site edge, where a payload in the second service packet includes a first service packet, path information of an end-to-end path between the first site edge and the second site edge is encapsulated at an outer layer of the first service packet, the path information of the end-to-end path includes first information identifying the first backbone network ingress device and second information identifying the first backbone network egress device in the backbone network, an ingress endpoint of the end-to-end path is the first site edge, an egress endpoint of the end-to-end path is the second site edge, the end-to-end path passes through the first backbone network ingress device and the first backbone network egress device, the first site edge accesses the backbone network via the first backbone network ingress device, and the second site edge accesses the backbone network via the first backbone network egress device; the processing unit is configured to process the second service packet based on the first information, to obtain a third service packet; and the sending unit 2332 is further configured to send the third service packet to the first backbone network egress device.

In a possible implementation, the second service packet further includes service intention information.

In a possible implementation, the service intention information is carried in a metadata metadata field in the second service packet.

In a possible implementation, the end-to-end path is an SRv6 tunnel, the second service packet includes an IPv6 header and a segment routing header SRH, a destination address in the IPv6 header points to the first backbone network ingress device, and the SRH includes the first information and the second information.

In a possible implementation, the first information is a first endpoint segment identifier END.SID 1 allocated by the first backbone network ingress device, the second information is a second endpoint segment identifier END.SID 2 allocated by the first backbone network egress device, and the SRH further includes an IPv6 address of the second site edge.

In a possible implementation, the first information is a first endpoint segment identifier END.SID 1 of the first backbone network ingress device, and the second information is an endpoint segment identifier with cross-connect to an array of layer-3 adjacency relationships END.X SID allocated by the first backbone network egress device for an adjacency relationship between the first backbone network egress device and the second site edge.

In a possible implementation, an operation associated with the first endpoint segment identifier END.SID 1 includes: matching an overlay overlay SRv6 policy from the first backbone network ingress device to the first backbone network egress device based on a next-hop SID of the END.SID 1 in the SRH.

In a possible implementation, when the second service packet includes the service intention information, an operation associated with the first endpoint segment identifier END.SID 1 includes: matching an overlay overlay SRv6 policy from the first backbone network ingress device to the first backbone network egress device based on a next-hop SID of the END.SID 1 in the SRH and the service intention information.

In a possible implementation, the processing unit is configured to: match a first overlay SRv6 policy from the first backbone network ingress device to the first backbone network egress device based on the next-hop SID of the END.SID 1 in the SRH; and encapsulate the second service packet by using the first overlay SRv6 policy, to obtain the third service packet.

In a possible implementation, the processing unit is configured to: match a second overlay SRv6 policy from the first backbone network ingress device to the first backbone network egress device based on the next-hop SID of the END.SID 1 in the SRH and the service intention information; and encapsulate the second service packet by using the second overlay SRv6 policy, to obtain the third service packet.

In a possible implementation, the end-to-end path is an SR-MPLS TE policy, the second service packet includes an MPLS label stack, the MPLS label stack includes the first information and the second information, the first information is a first node SID of the first backbone network ingress device, and the second information includes a second node SID of the first backbone network egress device and an adjacency segment identifier adj-SID allocated by the first backbone network egress device for an adjacency relationship between the first backbone network egress device and the second site edge.

In a possible implementation, an operation associated with the first node SID includes: matching an overlay overlay SR-MPLS TE policy from the first backbone network ingress device to the first backbone network egress device based on a next-hop SID of the first node SID in the label stack.

In a possible implementation, when the second service packet includes the service intention information, an operation associated with the first node SID includes: matching an overlay overlay SR-MPLS TE policy from the first backbone network ingress device to the first backbone network egress device based on a next-hop SID of the first node SID in the label stack and the service intention information.

In a possible implementation, the processing unit is configured to: match a first overlay SR-MPLS TE policy from the first backbone network ingress device to the first backbone network egress device based on the next-hop SID of the first node SID in the label stack; and encapsulate the second service packet by using the first overlay SR-MPLS TE policy, to obtain the third service packet.

In a possible implementation, the processing unit is configured to: match a second overlay SR-MPLS TE policy from the first backbone network ingress device to the first backbone network egress device based on the next-hop SID of the first node SID in the label stack and the service intention information; and encapsulate the second service packet by using the second overlay SR-MPLS TE policy, to obtain the third service packet.

In a possible implementation, the end-to-end path is a tunnel encapsulated according to a generic network virtualization encapsulation GENEVE protocol, and SRv6 in GENEVE encapsulation is used for the second service packet.

In a possible implementation, the end-to-end path is a tunnel encapsulated according to a generic routing encapsulation GRE protocol, and SRv6 over GRE encapsulation is used for the second service packet.

In a possible implementation, the second service packet includes an outer IP header, a user datagram protocol UDP header, outer GRE encapsulation, the IPv6 header, the SRH, inner GRE encapsulation, and the payload, where the payload includes the first service packet, and the inner GRE encapsulation includes a VPN identifier of a VPN service carried in the first service packet.

In a possible implementation, the first site edge accesses the first backbone network ingress device through a software-defined wide area network SD-WAN tunnel or an internet.

In still another specific example, a structure of the communication apparatus may be shown in FIG. 23d. FIG. 23d is a diagram of a structure of another communication apparatus according to an embodiment of this application. As shown in FIG. 23d,
The communication apparatus 2340 shown in FIG. 23d includes a receiving unit 2341, a processing unit 2342, and a sending unit 2343. The receiving unit 2341 is configured to perform a receiving operation, the sending unit 2343 is configured to perform a sending operation, and the processing unit 2342 is configured to perform an operation other than the receiving operation and the sending operation.

In an example, the communication apparatus 2340 may be used in a first site edge, and is configured to perform the foregoing method 1200. In this case:

The receiving unit 2341 is configured to receive a first service packet;
the processing unit 2342 is configured to encapsulate path information of a first end-to-end path at an outer layer of the first service packet, to obtain a second service packet, where the path information of the first end-to-end path includes first information identifying a first backbone network ingress device in a backbone network and second information identifying a first backbone network egress device in the backbone network, an ingress endpoint of the first end-to-end path is the first site edge, an egress endpoint of the first end-to-end path is a second site edge, the first end-to-end path passes through the first backbone network ingress device and the first backbone network egress device, the first site edge accesses the backbone network via the first backbone network ingress device, and the second site edge accesses the backbone network via the first backbone network egress device; and
the sending unit 2343 is configured to send the second service packet through the first end-to-end path.

In a possible implementation, the first service packet is for carrying a virtual private network VPN service, and the processing unit 2342 is further configured to: before the first service packet is received, orchestrate the first end-to-end path from the first site edge to the second site edge by using the first backbone network ingress device and the first backbone network egress device on demand based on the VPN service.

In a possible implementation, the second service packet further includes service intention information.

In a possible implementation, the service intention information is carried in a metadata metadata field in the second service packet.

In a possible implementation, the processing unit 2342 is further configured to: before encapsulating the path information of the first end-to-end path, determine, based on a destination address in the first service packet, that a next hop for forwarding the first service packet is the second site edge, and iterating a first segment routing policy SR policy based on an internet protocol IP address of the second site edge, to obtain the path information of the first end-to-end path.

In a possible implementation, the first end-to-end path is an SRv6 tunnel, the second service packet includes an IPv6 header and a segment routing header SRH, a destination address in the IPv6 header points to the first backbone network ingress device, and the SRH includes the first information and the second information.

In a possible implementation, the first information is a first endpoint segment identifier END.SID 1 of the first backbone network ingress device, the second information is a second endpoint segment identifier END.SID 2 of the first backbone network egress device, and the SRH further includes an IPv6 address of the second site edge.

In a possible implementation, the first information is a first endpoint segment identifier END.SID 1 of the first backbone network ingress device, and the second information is an endpoint segment identifier with cross-connect to an array of layer-3 adjacency relationships END.X SID allocated by the first backbone network egress device for an adjacency relationship between the first backbone network egress device and the second site edge.

In a possible implementation, an operation associated with the first endpoint segment identifier END.SID 1 includes: matching an overlay overlay SRv6 policy from the first backbone network ingress device to the first backbone network egress device based on a next-hop SID of the END.SID 1.

In a possible implementation, when the second service packet includes the service intention information, an operation associated with the first endpoint segment identifier END.SID 1 includes: matching an overlay overlay SRv6 policy from the first backbone network ingress device to the first backbone network egress device based on a next-hop SID of the END.SID 1 and the service intention information.

In a possible implementation, the first end-to-end path is an SR-MPLS TE policy, the second service packet includes an MPLS label stack, the MPLS label stack includes the first information and the second information, the first information is a first node SID of the first backbone network ingress device, and the second information includes a second node SID of the first backbone network egress device and an adjacency segment identifier adj-SID allocated by the first backbone network egress device for an adjacency relationship between the first backbone network egress device and the second site edge.

In a possible implementation, an operation associated with the first node SID includes: matching an overlay overlay SR-MPLS TE policy from the first backbone network ingress device to the first backbone network egress device based on a next-hop SID of the first node SID in the label stack.

In a possible implementation, when the second service packet includes the service intention information, an operation associated with the first node SID includes: matching an overlay overlay SR-MPLS TE policy from the first backbone network ingress device to the first backbone network egress device based on a next-hop SID of the first node SID in the label stack and the service intention information.

In a possible implementation, the first end-to-end path is a tunnel encapsulated according to a generic network virtualization encapsulation GENEVE protocol, and SRv6 in GENEVE encapsulation is used for the second service packet.

In a possible implementation, the first end-to-end path is a tunnel encapsulated according to a generic routing encapsulation GRE protocol, and SRv6 over GRE encapsulation is used for the second service packet.

In a possible implementation, the second service packet includes an outer IP header, a user datagram protocol UDP header, outer GRE encapsulation, the IPv6 header, the SRH, inner GRE encapsulation, and a payload, where the payload includes the first service packet, and the inner GRE encapsulation includes a VPN identifier of the VPN service carried in the first service packet.

In a possible implementation, the receiving unit 2341 is further configured to receive a third service packet; the processing unit 2342 is further configured to encapsulate path information of a second end-to-end path at an outer layer of the third service packet, to obtain a fourth service packet, where the path information of the second end-to-end path includes third information identifying a second backbone network ingress device in the backbone network and fourth information identifying a second backbone network egress device in the backbone network, an ingress endpoint of the second end-to-end path is the first site edge, an egress endpoint of the second end-to-end path is the second site edge, the second end-to-end path passes through the second backbone network ingress device and the second backbone network egress device, the first site edge is multi-homed to the first backbone network ingress device and the second backbone network ingress device, and the second site edge is multi-homed to the first backbone network egress device and the second backbone network egress device; and the sending unit 2343 is further configured to send the fourth service packet through the second end-to-end path.

In a possible implementation, the first site edge accesses the first backbone network ingress device through a software-defined wide area network SD-WAN tunnel or the internet internet.

In another example, the communication apparatus 2340 may be used in a first backbone network ingress device in a backbone network, and is configured to perform the foregoing method 1300. In this case:

The receiving unit 2341 is configured to receive a second service packet from a first site edge, where a payload in the second service packet includes a first service packet, path information of an end-to-end path between the first site edge and a second site edge is encapsulated at an outer layer of the first service packet, the path information of the end-to-end path includes first information identifying the first backbone network ingress device and second information identifying a first backbone network egress device in the backbone network, an ingress endpoint of the end-to-end path is the first site edge, an egress endpoint of the end-to-end path is the second site edge, the end-to-end path passes through the first backbone network ingress device and the first backbone network egress device, the first site edge accesses the backbone network via the first backbone network ingress device, and the second site edge accesses the backbone network via the first backbone network egress device;
the processing unit 2342 is configured to process the second service packet based on the first information, to obtain a third service packet; and
the sending unit 2343 is configured to send the third service packet to the first backbone network egress device.

In a possible implementation, the second service packet further includes service intention information.

In a possible implementation, the service intention information is carried in a metadata metadata field in the second service packet.

In a possible implementation, the end-to-end path is an SRv6 tunnel, the second service packet includes an IPv6 header and a segment routing header SRH, a destination address in the IPv6 header points to the first backbone network ingress device, and the SRH includes the first information and the second information.

In a possible implementation, the first information is a first endpoint segment identifier END.SID 1 allocated by the first backbone network ingress device, the second information is a second endpoint segment identifier END.SID 2 allocated by the first backbone network egress device, and the SRH further includes an IPv6 address of the second site edge.

In a possible implementation, the first information is a first endpoint segment identifier END.SID 1 of the first backbone network ingress device, and the second information is an endpoint segment identifier with cross-connect to an array of layer-3 adjacency relationships END.X SID allocated by the first backbone network egress device for an adjacency relationship between the first backbone network egress device and the second site edge.

In a possible implementation, an operation associated with the first endpoint segment identifier END.SID 1 includes: matching an overlay overlay SRv6 policy from the first backbone network ingress device to the first backbone network egress device based on a next-hop SID of the END.SID 1 in the SRH.

In a possible implementation, when the second service packet includes the service intention information, an operation associated with the first endpoint segment identifier END.SID 1 includes: matching an overlay overlay SRv6 policy from the first backbone network ingress device to the first backbone network egress device based on a next-hop SID of the END.SID 1 in the SRH and the service intention information.

In a possible implementation, the processing unit 2342 is configured to: match a first overlay SRv6 policy from the first backbone network ingress device to the first backbone network egress device based on the next-hop SID of the END.SID 1 in the SRH; and encapsulate the second service packet by using the first overlay SRv6 policy, to obtain the third service packet.

In a possible implementation, the processing unit 2342 is configured to: match a second overlay SRv6 policy from the first backbone network ingress device to the first backbone network egress device based on the next-hop SID of the END.SID 1 in the SRH and the service intention information; and encapsulate the second service packet by using the second overlay SRv6 policy, to obtain the third service packet.

In a possible implementation, the end-to-end path is an SR-MPLS TE policy, the second service packet includes an MPLS label stack, the MPLS label stack includes the first information and the second information, the first information is a first node SID of the first backbone network ingress device, and the second information includes a second node SID of the first backbone network egress device and an adjacency segment identifier adj-SID allocated by the first backbone network egress device for an adjacency relationship between the first backbone network egress device and the second site edge.

In a possible implementation, an operation associated with the first node SID includes: matching an overlay overlay SR-MPLS TE policy from the first backbone network ingress device to the first backbone network egress device based on a next-hop SID of the first node SID in the label stack.

In a possible implementation, when the second service packet includes the service intention information, an operation associated with the first node SID includes: matching an overlay overlay SR-MPLS TE policy from the first backbone network ingress device to the first backbone network egress device based on a next-hop SID of the first node SID in the label stack and the service intention information.

In a possible implementation, the processing unit 2342 is configured to: match a first overlay SR-MPLS TE policy from the first backbone network ingress device to the first backbone network egress device based on the next-hop SID of the first node SID in the label stack; and encapsulate the second service packet by using the first overlay SR-MPLS TE policy, to obtain the third service packet.

In a possible implementation, the processing unit 2342 is configured to: match a second overlay SR-MPLS TE policy from the first backbone network ingress device to the first backbone network egress device based on the next-hop SID of the first node SID in the label stack and the service intention information; and encapsulate the second service packet by using the second overlay SR-MPLS TE policy, to obtain the third service packet.

In a possible implementation, the end-to-end path is a tunnel encapsulated according to a generic network virtualization encapsulation GENEVE protocol, and SRv6 in GENEVE encapsulation is used for the second service packet.

In a possible implementation, the end-to-end path is a tunnel encapsulated according to a generic routing encapsulation GRE protocol, and SRv6 over GRE encapsulation is used for the second service packet.

In a possible implementation, the second service packet includes an outer IP header, a user datagram protocol UDP header, outer GRE encapsulation, the IPv6 header, the SRH, inner GRE encapsulation, and the payload, where the payload includes the first service packet, and the inner GRE encapsulation includes a VPN identifier of a VPN service carried in the first service packet.

In a possible implementation, the first site edge accesses the first backbone network ingress device through a software-defined wide area network SD-WAN tunnel or an internet.

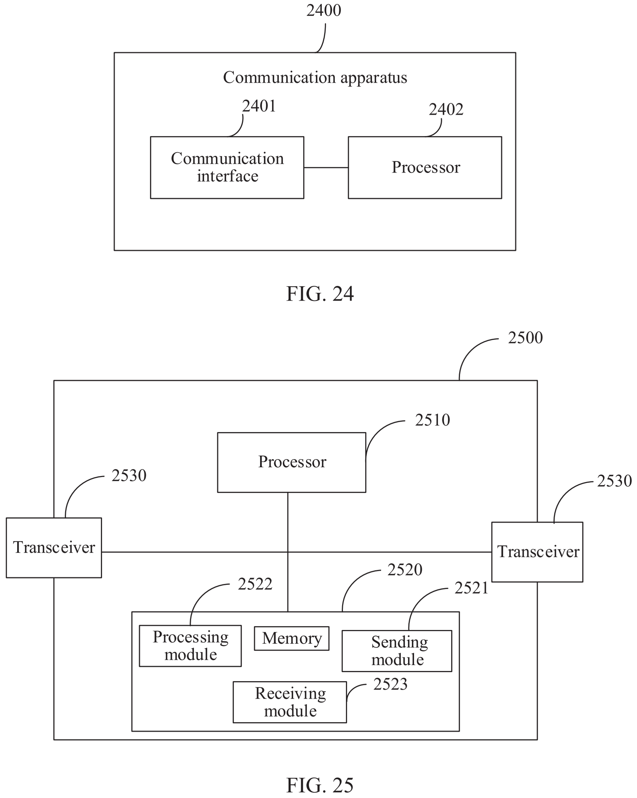

In addition, an embodiment of this application further provides a communication apparatus 2400. FIG. 24 is a diagram of a structure of a communication apparatus according to an embodiment of this application. The communication apparatus 2400 includes a communication interface 2401 and a processor 2402 connected to the communication interface 2401. The communication apparatus 2400 may be configured to perform the method 100, the method 200, the method 300, the method 400, the method 500, the method 600, the method 700, the method 800, the method 900, the method 1000, the method 1100, the method 1200, or the method 1300 in the foregoing embodiment.

When the communication apparatus 2400 is used in the foregoing method 100:
In an example, the communication apparatus 2400 is equivalent to the site edge 2 in the method 100. The communication interface 2401 is configured to perform the receiving operation and the sending operation performed by the site edge 2 in the method 100. The processor 2402 is configured to perform the operation other than the receiving operation and the sending operation performed by the site edge 2 in the method 100. For example, the processor 2402 is configured to obtain a route 1, where the route 1 is an SD-WAN gateway information advertisement route, the route 1 includes an identifier of the site edge 2 and information 1 about a backbone network egress device 1, and the site edge 2 accesses a backbone network via the backbone network egress device 1; and the communication interface 2401 is configured to advertise the route 1 to a site edge 1.

In another example, the communication apparatus 2400 is equivalent to the site edge 1 in the method 100. The communication interface 2401 is configured to perform the receiving operation and the sending operation performed by the site edge 1 in the method 100. The processor 2402 is configured to perform the operation other than the receiving operation and the sending operation performed by the site edge 1 in the method 100. For example, the communication interface 2401 is configured to receive a route 1 advertised by a site edge 2; and the processor 2402 is configured to obtain a binding relationship 1 between the site edge 2 and a backbone network egress device 1 based on the route 1.

When the communication apparatus 2400 is used in the foregoing method 200:
In an example, the communication apparatus 2400 is equivalent to the site edge 2 in the method 200. The communication interface 2401 is configured to perform the receiving operation and the sending operation performed by the site edge 2 in the method 200. The processor 2402 is configured to perform the operation other than the receiving operation and the sending operation performed by the site edge 2 in the method 200. For example, the processor 2402 is configured to obtain a route 1', where the route 1' is a VPN route, the route 1' includes an identifier of the site edge 2 and information 1 about a backbone network egress device 1, and the site edge 2 accesses a backbone network via the backbone network egress device 1; and the communication interface 2401 is configured to advertise the route 1' to a site edge 1.

In another example, the communication apparatus 2400 is equivalent to the site edge 1 in the method 200. The communication interface 2401 is configured to perform the receiving operation and the sending operation performed by the site edge 1 in the method 200. The processor 2402 is configured to perform the operation other than the receiving operation and the sending operation performed by the site edge 1 in the method 200. For example, the communication interface 2401 is configured to receive a route 1' advertised by a site edge 2; and the processor 2402 is configured to obtain a binding relationship 1 between the site edge 2 and a backbone network egress device 1 based on the route 1'.

When the communication apparatus 2400 is used in the foregoing method 300:
In an example, the communication apparatus 2400 is equivalent to the backbone network egress device 1 in the method 300. The communication interface 2401 is configured to perform the receiving operation and the sending operation performed by the backbone network egress device 1 in the method 300. The processor 2402 is configured to perform the operation other than the receiving operation and the sending operation performed by the backbone network egress device 1 in the method 300. For example, the processor 2402 is configured to obtain a route 1", where the route 1" is an SD-WAN gateway auto-discovery route, the route 1" includes an identifier of a site edge 2 and information 1 about the backbone network egress device 1, and the site edge 2 accesses a backbone network via the backbone network egress device 1; and the communication interface 2401 is configured to advertise the route 1" to a site edge 1 via a backbone network ingress device 1, where the site edge 1 accesses the backbone network via the backbone network ingress device 1.

In another example, the communication apparatus 2400 is equivalent to the site edge 1 in the method 300. The communication interface 2401 is configured to perform the receiving operation and the sending operation performed by the site edge 1 in the method 300. The processor 2402 is configured to perform the operation other than the receiving operation and the sending operation performed by the site edge 1 in the method 300. For example, the communication interface 2401 is configured to receive a route 1" advertised by a backbone network egress device 1; and the processor 2402 is configured to obtain a binding relationship 1 between a site edge 2 and the backbone network egress device 1 based on the route 1".

When the communication apparatus 2400 is used in the foregoing method 400:
In an example, the communication apparatus 2400 is equivalent to the gateway in the method 400. The communication interface 2401 is configured to perform the receiving operation and the sending operation performed by the gateway in the method 400. The processor 2402 is configured to perform the operation other than the receiving operation and the sending operation performed by the gateway in the method 400. For example, the processor 2402 is configured to obtain a route 3, where the route 3 is an SD-WAN gateway auto-discovery route, and the route 3 includes information 3 about the gateway; and the communication interface 2401 is configured to advertise the route 3 to a site edge, where the site edge accesses a backbone network via the gateway.

In another example, the communication apparatus 2400 is equivalent to the site edge in the method 400. The communication interface 2401 is configured to perform the receiving operation and the sending operation performed by the site edge in the method 400. The processor 2402 is configured to perform the operation other than the receiving operation and the sending operation performed by the site edge in the method 400. For example, the communication interface 2401 is configured to receive a route 3 advertised by a gateway; and the processor 2402 is configured to obtain a binding relationship 3 between the site edge and the gateway based on the route 3.

When the communication apparatus 2400 is used in the foregoing method 500:
In an example, the communication apparatus 2400 is equivalent to the gateway in the method 500. The communication interface 2401 is configured to perform the receiving operation and the sending operation performed by the gateway in the method 500. The processor 2402 is configured to perform the operation other than the receiving operation and the sending operation performed by the gateway in the method 500. For example, the processor 2402 is configured to obtain a route 3', where the route 3' is a BGP-LS route, and the route 3' includes information 3 about the gateway; and the communication interface 2401 is configured to advertise the route 3' to a site edge, where the site edge accesses a backbone network via the gateway.

In another example, the communication apparatus 2400 is equivalent to the site edge in the method 500. The communication interface 2401 is configured to perform the receiving operation and the sending operation performed by the site edge in the method 500. The processor 2402 is configured to perform the operation other than the receiving operation and the sending operation performed by the site edge in the method 500. For example, the communication interface 2401 is configured to receive a route 3' advertised by a gateway; and the processor 2402 is configured to obtain a binding relationship 3 between the site edge and the gateway based on the route 3'.

When the communication apparatus 2400 is used in the foregoing method 600:
In an example, the communication apparatus 2400 is equivalent to the site edge 1 in the method 600. The communication interface 2401 is configured to perform the receiving operation and the sending operation performed by the site edge 1 in the method 600. The processor 2402 is configured to perform the operation other than the receiving operation and the sending operation performed by the site edge 1 in the method 600. For example, the communication interface 2401 is configured to receive a service packet 1; the processor 2402 is configured to encapsulate path information of an end-to-end path 1 at an outer layer of the service packet 1, to obtain a service packet 2, where an ingress endpoint of the end-to-end path 1 is the site edge 1, an egress endpoint of the end-to-end path 1 is a site edge 2, the end-to-end path 1 includes a backbone network ingress device 1 and a backbone network egress device 1, the site edge 1 accesses a backbone network via the backbone network ingress device 1, the site edge 2 accesses the backbone network via the backbone network egress device 1, and the path information of the end-to-end path 1 includes information 1 identifying the backbone network ingress device 1 and information 2 identifying the backbone network egress device 1; and the communication interface 2401 is further configured to send the service packet 2 through the end-to-end path 1.

In another example, the communication apparatus 2400 is equivalent to the backbone network ingress device 1 in the method 600. The communication interface 2401 is configured to perform the receiving operation and the sending operation performed by the backbone network ingress device 1 in the method 600. The processor 2402 is configured to perform the operation other than the receiving operation and the sending operation performed by the backbone network ingress device 1 in the method 600. For example, the communication interface 2401 is configured to receive a service packet 2 from a site edge 1; the processor 2402 is configured to process the service packet 2 based on information 1, to obtain a service packet 3; and the communication interface 2401 is further configured to send the service packet 3 to a backbone network egress device 1.

When the communication apparatus 2400 is used in the foregoing method 700, the communication apparatus 2400 is equivalent to the first communication apparatus used as the first site edge in the method 700. The communication interface 2401 is configured to perform the receiving operation and the sending operation performed by the first site edge in the method 700. The processor 2402 is configured to perform the operation other than the receiving operation and the sending operation performed by the first site edge in the method 700. For example, the communication interface 2401 is configured to receive a first route advertised by a second communication apparatus, where the first route includes first information about a first backbone network egress device in a backbone network and an identifier of a second site edge, the second site edge accesses the backbone network via the first backbone network egress device, and the first site edge accesses the backbone network via a first backbone network ingress device; and the processor 2402 is configured to obtain a first binding relationship between the second site edge and the first backbone network egress device based on the first route.

When the communication apparatus 2400 is used in the foregoing method 800, the communication apparatus 2400 is equivalent to the second communication apparatus in the method 800. The communication interface 2401 is configured to perform the receiving operation and the sending operation performed by the second communication apparatus in the method 800. The processor 2402 is configured to perform the operation other than the receiving operation and the sending operation performed by the second communication apparatus in the method 800. For example, the processor 2402 is configured to obtain a first route, where the first route includes first information about a first backbone network egress device in a backbone network and an identifier of a second site edge, and the second site edge accesses the backbone network via the first backbone network egress device; and the communication interface 2401 is configured to advertise the first route to a first site edge, where the first site edge accesses the backbone network via a first backbone network ingress device.

When the communication apparatus 2400 is used in the foregoing method 900, the communication apparatus 2400 is equivalent to the first backbone network ingress device in the method 900. The communication interface 2401 is configured to perform the receiving operation and the sending operation performed by the first backbone network ingress device in the method 900. The processor 2402 is configured to perform the operation other than the receiving operation and the sending operation performed by the first backbone network ingress device in the method 900. For example, the communication interface 2401 is configured to: receive a first route advertised by a first backbone network egress device in a backbone network, where the first route includes information about the first backbone network egress device and an identifier of a second site edge, the second site edge accesses the backbone network via the first backbone network egress device, and a first site edge accesses the backbone network via the first backbone network ingress device; and advertise the first route to the first site edge.

When the communication apparatus 2400 is used in the foregoing method 1000, the communication apparatus 2400 is equivalent to the site edge in the method 1000. The communication interface 2401 is configured to perform the receiving operation and the sending operation performed by the site edge in the method 1000. The processor 2402 is configured to perform the operation other than the receiving operation and the sending operation performed by the site edge in the method 1000. For example, the communication interface 2401 is configured to receive a first route sent by a first backbone network edge device, where the first route is for advertising first information about the first backbone network edge device, and the site edge accesses a backbone network via the first backbone network edge device; and the processor 2402 is configured to obtain a first binding relationship between the site edge and the first backbone network edge device based on the first route.

When the communication apparatus 2400 is used in the foregoing method 1100, the communication apparatus 2400 is equivalent to the backbone network edge device in the method 1100. The communication interface 2401 is configured to perform the receiving operation and the sending operation performed by the backbone network edge device in the method 1100. The processor 2402 is configured to perform the operation other than the receiving operation and the sending operation performed by the backbone network edge device in the method 1100. For example, the processor 2402 is configured to obtain a route, where the route is for advertising information about the backbone network edge device; and the communication interface 2401 is configured to send the route to a site edge, where the site edge accesses a backbone network via the backbone network edge device.

When the communication apparatus 2400 is used in the foregoing method 1200, the communication apparatus 2400 is equivalent to the first site edge in the method 1200. The communication interface 2401 is configured to perform the receiving operation and the sending operation performed by the first site edge in the method 1200. The processor 2402 is configured to perform the operation other than the receiving operation and the sending operation performed by the first site edge in the method 1200. For example, the communication interface 2401 is configured to receive a first service packet; the processor 2402 is configured to encapsulate path information of a first end-to-end path at an outer layer of the first service packet, to obtain a second service packet, where the path information of the first end-to-end path includes first information identifying a first backbone network ingress device in a backbone network and second information identifying a first backbone network egress device in the backbone network, an ingress endpoint of the first end-to-end path is the first site edge, an egress endpoint of the first end-to-end path is a second site edge, the first end-to-end path passes through the first backbone network ingress device and the first backbone network egress device, the first site edge accesses the backbone network via the first backbone network ingress device, and the second site edge accesses the backbone network via the first backbone network egress device; and the communication interface 2401 is further configured to send the second service packet through the first end-to-end path.

When the communication apparatus 2400 is used in the foregoing method 1300, the communication apparatus 2400 is equivalent to the first backbone network ingress device in the method 1300. The communication interface 2401 is configured to perform the receiving operation and the sending operation performed by the first backbone network ingress device in the method 1300. The processor 2402 is configured to perform the operation other than the receiving operation and the sending operation performed by the first backbone network ingress device in the method 1300. For example, the communication interface 2401 is configured to receive a second service packet from a first site edge, where a payload in the second service packet includes a first service packet, path information of an end-to-end path between the first site edge and a second site edge is encapsulated at an outer layer of the first service packet, the path information of the end-to-end path includes first information identifying the first backbone network ingress device and second information identifying a first backbone network egress device in a backbone network, an ingress endpoint of the end-to-end path is the first site edge, an egress endpoint of the end-to-end path is the second site edge, the end-to-end path passes through the first backbone network ingress device and the first backbone network egress device, the first site edge accesses the backbone network via the first backbone network ingress device, and the second site edge accesses the backbone network via the first backbone network egress device; the processor 2402 is configured to process the second service packet based on the first information, to obtain a third service packet; and the communication interface 2401 is further configured to send the third service packet to the first backbone network egress device.

In addition, an embodiment of this application further provides a communication apparatus 2500. FIG. 25 is a diagram of a structure of a communication apparatus according to an embodiment of this application. The communication apparatus 2500 may be configured to perform the method 100, the method 200, the method 300, the method 400, the method 500, the method 600, the method 700, the method 800, the method 900, the method 1000, the method 1100, the method 1200, or the method 1300 in the foregoing embodiment.

As shown in FIG. 25, the communication apparatus 2500 may include a processor 2510, a memory 2520 coupled to the processor 2510, and transceivers 2530. The transceiver 2530 may be, for example, a communication interface or an optical module. The processor 2510 may be a central processing unit (English: central processing unit, CPU for short), a network processor (English: network processor, NP for short), or a combination of a CPU and an NP. Alternatively, the processor may be an application-specific integrated circuit (English: application-specific integrated circuit, ASIC for short), a programmable logic device (English: programmable logic device, PLD for short), or a combination thereof. The PLD may be a complex programmable logic device (English: complex programmable logic device, CPLD for short), a field-programmable gate array (English: field-programmable gate array, FPGA for short), generic array logic (English: generic array logic, GAL for short), or any combination thereof. The processor 2510 may be one processor, or may include a plurality of processors. The memory 2520 may include a volatile memory (English: volatile memory), for example, a random access memory (English: random access memory, RAM for short); or the memory may include a non-volatile memory (English: non-volatile memory), for example, a read-only memory (English: read-only memory, ROM for short), a flash memory (English: flash memory), a hard disk drive (English: hard disk drive, HDD for short), or a solid-state drive (English: solid-state drive, SSD for short). Alternatively, the memory 2520 may include a combination of the foregoing types of memories. The memory 2520 may be one memory, or may include a plurality of memories. In an implementation, the memory 2520 stores computer-readable instructions, and the computer-readable instructions include a plurality of software modules, for example, a sending module 2521, a processing module 2522, and a receiving module 2523. After executing each software module, the processor 2510 may perform a corresponding operation based on an indication of the software module. In this embodiment, an operation performed by a software module is actually an operation performed by the processor 2510 based on an indication of the software module.

When the communication apparatus 2500 is used in the foregoing method 100:
In an example, the communication apparatus 2500 is equivalent to the site edge 2 in the method 100. The transceiver 2530 is configured to perform the receiving operation and the sending operation performed by the site edge 2 in the method 100. The processor 2510 is configured to perform the operation other than the receiving operation and the sending operation performed by the site edge 2 in the method 100. For example, the processor 2510 is configured to obtain a route 1, where the route 1 is an SD-WAN gateway information advertisement route, the route 1 includes an identifier of the site edge 2 and information 1 about a backbone network egress device 1, and the site edge 2 accesses a backbone network via the backbone network egress device 1; and the transceiver 2530 is configured to advertise the route 1 to a site edge 1.

In another example, the communication apparatus 2500 is equivalent to the site edge 1 in the method 100. The transceiver 2530 is configured to perform the receiving operation and the sending operation performed by the site edge 1 in the method 100. The processor 2510 is configured to perform the operation other than the receiving operation and the sending operation performed by the site edge 1 in the method 100. For example, the transceiver 2530 is configured to receive a route 1 advertised by a site edge 2; and the processor 2510 is configured to obtain a binding relationship 1 between the site edge 2 and a backbone network egress device 1 based on the route 1.

When the communication apparatus 2500 is used in the foregoing method 200:
In an example, the communication apparatus 2500 is equivalent to the site edge 2 in the method 200. The transceiver 2530 is configured to perform the receiving operation and the sending operation performed by the site edge 2 in the method 200. The processor 2510 is configured to perform the operation other than the receiving operation and the sending operation performed by the site edge 2 in the method 200. For example, the processor 2510 is configured to obtain a route 1', where the route 1' is a VPN route, the route 1' includes an identifier of the site edge 2 and information 1 about a backbone network egress device 1, and the site edge 2 accesses a backbone network via the backbone network egress device 1; and the transceiver 2530 is configured to advertise the route 1' to a site edge 1.

In another example, the communication apparatus 2500 is equivalent to the site edge 1 in the method 200. The transceiver 2530 is configured to perform the receiving operation and the sending operation performed by the site edge 1 in the method 200. The processor 2510 is configured to perform the operation other than the receiving operation and the sending operation performed by the site edge 1 in the method 200. For example, the transceiver 2530 is configured to receive a route 1' advertised by a site edge 2; and the processor 2510 is configured to obtain a binding relationship 1 between the site edge 2 and a backbone network egress device 1 based on the route 1'.

When the communication apparatus 2500 is used in the foregoing method 300:
In an example, the communication apparatus 2500 is equivalent to the backbone network egress device 1 in the method 300. The transceiver 2530 is configured to perform the receiving operation and the sending operation performed by the backbone network egress device 1 in the method 300. The processor 2510 is configured to perform the operation other than the receiving operation and the sending operation performed by the backbone network egress device 1 in the method 300. For example, the processor 2510 is configured to obtain a route 1", where the route 1" is an SD-WAN gateway auto-discovery route, the route 1" includes an identifier of a site edge 2 and information 1 about the backbone network egress device 1, and the site edge 2 accesses a backbone network via the backbone network egress device 1; and the transceiver 2530 is configured to advertise the route 1" to a site edge 1 via a backbone network ingress device 1, where the site edge 1 accesses the backbone network via the backbone network ingress device 1.

In another example, the communication apparatus 2500 is equivalent to the site edge 1 in the method 300. The transceiver 2530 is configured to perform the receiving operation and the sending operation performed by the site edge 1 in the method 300. The processor 2510 is configured to perform the operation other than the receiving operation and the sending operation performed by the site edge 1 in the method 300. For example, the transceiver 2530 is configured to receive a route 1" advertised by a backbone network egress device 1; and the processor 2510 is configured to obtain a binding relationship 1 between a site edge 2 and the backbone network egress device 1 based on the route 1".

When the communication apparatus 2500 is used in the foregoing method 400:
In an example, the communication apparatus 2500 is equivalent to the gateway in the method 400. The transceiver 2530 is configured to perform the receiving operation and the sending operation performed by the gateway in the method 400. The processor 2510 is configured to perform the operation other than the receiving operation and the sending operation performed by the gateway in the method 400. For example, the processor 2510 is configured to obtain a route 3, where the route 3 is an SD-WAN gateway auto-discovery route, and the route 3 includes information 3 about the gateway; and the transceiver 2530 is configured to advertise the route 3 to a site edge, where the site edge accesses a backbone network via the gateway.

In another example, the communication apparatus 2500 is equivalent to the site edge in the method 400. The transceiver 2530 is configured to perform the receiving operation and the sending operation performed by the site edge in the method 400. The processor 2510 is configured to perform the operation other than the receiving operation and the sending operation performed by the site edge in the method 400. For example, the transceiver 2530 is configured to receive a route 3 advertised by a gateway; and the processor 2510 is configured to obtain a binding relationship 3 between the site edge and the gateway based on the route 3.

When the communication apparatus 2500 is used in the foregoing method 500:
In an example, the communication apparatus 2500 is equivalent to the gateway in the method 500. The transceiver 2530 is configured to perform the receiving operation and the sending operation performed by the gateway in the method 500. The processor 2510 is configured to perform the operation other than the receiving operation and the sending operation performed by the gateway in the method 500. For example, the processor 2510 is configured to obtain a route 3', where the route 3' is a BGP-LS route, and the route 3' includes information 3 about the gateway; and the transceiver 2530 is configured to advertise the route 3' to a site edge, where the site edge accesses a backbone network via the gateway.

In another example, the communication apparatus 2500 is equivalent to the site edge in the method 500. The transceiver 2530 is configured to perform the receiving operation and the sending operation performed by the site edge in the method 500. The processor 2510 is configured to perform the operation other than the receiving operation and the sending operation performed by the site edge in the method 500. For example, the transceiver 2530 is configured to receive a route 3' advertised by a gateway; and the processor 2510 is configured to obtain a binding relationship 3 between the site edge and the gateway based on the route 3'.

When the communication apparatus 2500 is used in the foregoing method 600:
In an example, the communication apparatus 2500 is equivalent to the site edge 1 in the method 600. The transceiver 2530 is configured to perform the receiving operation and the sending operation performed by the site edge 1 in the method 600. The processor 2510 is configured to perform the operation other than the receiving operation and the sending operation performed by the site edge 1 in the method 600. For example, the transceiver 2530 is configured to receive a service packet 1; the processor 2510 is configured to encapsulate path information of an end-to-end path 1 at an outer layer of the service packet 1, to obtain a service packet 2, where an ingress endpoint of the end-to-end path 1 is the site edge 1, an egress endpoint of the end-to-end path 1 is a site edge 2, the end-to-end path 1 includes a backbone network ingress device 1 and a backbone network egress device 1, the site edge 1 accesses a backbone network via the backbone network ingress device 1, the site edge 2 accesses the backbone network via the backbone network egress device 1, and the path information of the end-to-end path 1 includes information 1 identifying the backbone network ingress device 1 and information 2 identifying the backbone network egress device 1; and the transceiver 2530 is further configured to send the service packet 2 through the end-to-end path 1.

In another example, the communication apparatus 2500 is equivalent to the backbone network ingress device 1 in the method 600. The transceiver 2530 is configured to perform the receiving operation and the sending operation performed by the backbone network ingress device 1 in the method 600. The processor 2510 is configured to perform the operation other than the receiving operation and the sending operation performed by the backbone network ingress device 1 in the method 600. For example, the transceiver 2530 is configured to receive a service packet 2 from a site edge 1; the processor 2510 is configured to process the service packet 2 based on information 1, to obtain a service packet 3; and the transceiver 2530 is further configured to send the service packet 3 to a backbone network egress device 1.

When the communication apparatus 2500 is used in the foregoing method 700, the communication apparatus 2500 is equivalent to the first communication apparatus used as the first site edge in the method 700. The transceiver 2530 is configured to perform the receiving operation and the sending operation performed by the first site edge in the method 700. The processor 2510 is configured to perform the operation other than the receiving operation and the sending operation performed by the first site edge in the method 700. For example, the transceiver 2530 is configured to receive a first route advertised by a second communication apparatus, where the first route includes first information about a first backbone network egress device in a backbone network and an identifier of a second site edge, the second site edge accesses the backbone network via the first backbone network egress device, and the first site edge accesses the backbone network via a first backbone network ingress device; and the processor 2510 is configured to obtain a first binding relationship between the second site edge and the first backbone network egress device based on the first route.

When the communication apparatus 2500 is used in the foregoing method 800, the communication apparatus 2500 is equivalent to the second communication apparatus in the method 800. The transceiver 2530 is configured to perform the receiving operation and the sending operation performed by the second communication apparatus in the method 800. The processor 2510 is configured to perform the operation other than the receiving operation and the sending operation performed by the second communication apparatus in the method 800. For example, the processor 2510 is configured to obtain a first route, where the first route includes first information about a first backbone network egress device in a backbone network and an identifier of a second site edge, and the second site edge accesses the backbone network via the first backbone network egress device; and the transceiver 2530 is configured to advertise the first route to a first site edge, where the first site edge accesses the backbone network via a first backbone network ingress device.

When the communication apparatus 2500 is used in the foregoing method 900, the communication apparatus 2500 is equivalent to the first backbone network ingress device in the method 900. The transceiver 2530 is configured to perform the receiving operation and the sending operation performed by the first backbone network ingress device in the method 900. The processor 2510 is configured to perform the operation other than the receiving operation and the sending operation performed by the first backbone network ingress device in the method 900. For example, the transceiver 2530 is configured to: receive a first route advertised by a first backbone network egress device in a backbone network, where the first route includes information about the first backbone network egress device and an identifier of a second site edge, the second site edge accesses the backbone network via the first backbone network egress device, and a first site edge accesses the backbone network via the first backbone network ingress device; and advertise the first route to the first site edge.

When the communication apparatus 2500 is used in the foregoing method 1000, the communication apparatus 2500 is equivalent to the site edge in the method 1000. The transceiver 2530 is configured to perform the receiving operation and the sending operation performed by the site edge in the method 1000. The processor 2510 is configured to perform the operation other than the receiving operation and the sending operation performed by the site edge in the method 1000. For example, the transceiver 2530 is configured to receive a first route sent by a first backbone network edge device, where the first route is for advertising first information about the first backbone network edge device, and the site edge accesses a backbone network via the first backbone network edge device; and the processor 2510 is configured to obtain a first binding relationship between the site edge and the first backbone network edge device based on the first route.

When the communication apparatus 2500 is used in the foregoing method 1100, the communication apparatus 2500 is equivalent to the backbone network edge device in the method 1100. The transceiver 2530 is configured to perform the receiving operation and the sending operation performed by the backbone network edge device in the method 1100. The processor 2510 is configured to perform the operation other than the receiving operation and the sending operation performed by the backbone network edge device in the method 1100. For example, the processor 2510 is configured to obtain a route, where the route is for advertising information about the backbone network edge device; and the transceiver 2530 is configured to send the route to a site edge, where the site edge accesses a backbone network via the backbone network edge device.

When the communication apparatus 2500 is used in the foregoing method 1200, the communication apparatus 2500 is equivalent to the first site edge in the method 1200. The transceiver 2530 is configured to perform the receiving operation and the sending operation performed by the first site edge in the method 1200. The processor 2510 is configured to perform the operation other than the receiving operation and the sending operation performed by the first site edge in the method 1200. For example, the transceiver 2530 is configured to receive a first service packet; the processor 2510 is configured to encapsulate path information of a first end-to-end path at an outer layer of the first service packet, to obtain a second service packet, where the path information of the first end-to-end path includes first information identifying a first backbone network ingress device in a backbone network and second information identifying a first backbone network egress device in the backbone network, an ingress endpoint of the first end-to-end path is the first site edge, an egress endpoint of the first end-to-end path is a second site edge, the first end-to-end path passes through the first backbone network ingress device and the first backbone network egress device, the first site edge accesses the backbone network via the first backbone network ingress device, and the second site edge accesses the backbone network via the first backbone network egress device; and the transceiver 2530 is further configured to send the second service packet through the first end-to-end path.

When the communication apparatus 2500 is used in the foregoing method 1300, the communication apparatus 2500 is equivalent to the first backbone network ingress device in the method 1300. The transceiver 2530 is configured to perform the receiving operation and the sending operation performed by the first backbone network ingress device in the method 1300. The processor 2510 is configured to perform the operation other than the receiving operation and the sending operation performed by the first backbone network ingress device in the method 1300. For example, the transceiver 2530 is configured to receive a second service packet from a first site edge, where a payload in the second service packet includes a first service packet, path information of an end-to-end path between the first site edge and a second site edge is encapsulated at an outer layer of the first service packet, the path information of the end-to-end path includes first information identifying the first backbone network ingress device and second information identifying a first backbone network egress device in a backbone network, an ingress endpoint of the end-to-end path is the first site edge, an egress endpoint of the end-to-end path is the second site edge, the end-to-end path passes through the first backbone network ingress device and the first backbone network egress device, the first site edge accesses the backbone network via the first backbone network ingress device, and the second site edge accesses the backbone network via the first backbone network egress device; the processor 2510 is configured to process the second service packet based on the first information, to obtain a third service packet; and the transceiver 2530 is further configured to send the third service packet to the first backbone network egress device.

This application further provides a computer-readable storage medium. The computer-readable storage medium stores instructions or a computer program. When the instructions or the computer program is run on a processor, any one or more operations in the method (for example, the method 100, the method 200, the method 300, the method 400, the method 500, the method 600, the method 700, the method 800, the method 900, the method 1000, the method 1100, the method 1200, or the method 1300) in the foregoing embodiment can be implemented.

This application further provides a computer program product, including a computer program. When the computer program is run on a processor, any one or more operations in the method (for example, the method 100, the method 200, the method 300, the method 400, the method 500, the method 600, the method 700, the method 800, the method 900, the method 1000, the method 1100, the method 1200, or the method 1300) in the foregoing embodiment can be implemented.

An embodiment of this application further provides a communication system. The communication system is configured to perform the method in the foregoing embodiment.

In an example, the communication system includes the site edge 2 and the site edge 1 in the method 100, and is configured to perform the foregoing method 100.

In another example, the communication system includes the site edge 2 and the site edge 1 in the method 200, and is configured to perform the foregoing method 200.

In another example, the communication system includes the site edge 2 and the site edge 1 in the method 100, and is configured to perform the foregoing method 100.

In another example, the communication system includes the backbone network egress device 1 and the site edge 1 in the method 300, and is configured to perform the foregoing method 300.

In another example, the communication system includes the gateway and the site edge in the method 400, and is configured to perform the foregoing method 400.

In another example, the communication system includes the gateway and the site edge in the method 500, and is configured to perform the foregoing method 500.

In still another example, the communication system includes the backbone network ingress device 1 and the site edge 1 in the method 600, and is configured to perform the foregoing method 600.

In still another example, the communication system includes the first communication apparatus for performing the method 700 and the second communication apparatus for performing the method 800.

In another example, the communication system includes the first backbone network egress device for performing the method 800 and the first backbone network ingress device for performing the method 900.

In another example, the communication system includes the first backbone network edge device for performing the method 1000 and the site edge for performing the method 1100.

In another example, the communication system includes the first site edge for performing the method 1200 and the first backbone network ingress device for performing the method 1300.

In the specification, claims, and accompanying drawings of this application, the terms "first", "second", "third", "fourth", and the like (if existent) are intended to distinguish between similar objects but do not necessarily indicate a specific order or sequence. It should be understood that the data termed in such a way are interchangeable in appropriate cases, so that embodiments described herein can be implemented in other orders than the order illustrated or described herein. In addition, the terms "include" and "have" and any variant thereof are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical service division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions in embodiments.

In addition, service units in embodiments of this application may be integrated into one processing unit, each unit may exist alone physically, or two or more units may be integrated into one unit. The integrated unit may be implemented in a form of hardware, or may be implemented in a form of a software service unit.

When the integrated unit is implemented in a form of a software service unit and sold or used as an independent product, the integrated unit may be stored in a computer-readable storage medium. Based on such an understanding, the technical solutions in this application essentially, the part contributing to the conventional technology, or all or some of the technical solutions may be implemented in a form of a software product. The computer software product is stored in a storage medium, and includes several instructions for instructing a computer device (which may be a personal computer, a server, or a network device) to perform all or some of the steps of the methods in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

Persons skilled in the art should be aware that in the foregoing one or more examples, services described in the present invention may be implemented by using hardware, software, firmware, or any combination thereof. When implemented by using the software, these services may be stored in a computer-readable medium, or transmission of these services is performed in a case in which these services are used as one or more instructions or code on the computer-readable medium. The computer-readable medium includes a computer storage medium and a communication medium, where the communication medium includes any medium that enables a computer program to be transmitted from one place to another. The storage medium may be any available medium accessible to a general-purpose or dedicated computer.

The objectives, technical solutions, and beneficial effects of the present invention are further described in detail in the foregoing specific implementations. It should be understood that the foregoing is merely specific implementations of the present invention.

The foregoing embodiments are merely for describing the technical solutions in this application, but not for limiting the technical solutions. Although this application is described in detail with reference to the foregoing embodiments, persons of ordinary skill in the art should understand that they may still make modifications to the technical solutions recorded in the foregoing embodiments or make equivalent replacements to some technical features thereof. However, these modifications or replacements do not cause the essence of the corresponding technical solutions to depart from the scope of the technical solutions in embodiments of this application.

## Claims

1. An information advertisement method, applied to a first communication apparatus used as a first site edge, wherein the method comprises:
receiving a first route advertised by a second communication apparatus, wherein the first route comprises first information about a first backbone network egress device in a backbone network and an identifier of a second site edge, the second site edge accesses the backbone network via the first backbone network egress device, and the first site edge accesses the backbone network via a first backbone network ingress device; and
obtaining a first binding relationship between the second site edge and the first backbone network egress device based on the first route.

2. The method according to claim 1, wherein the method further comprises:
determining a first end-to-end path from the first site edge to the second site edge based on the first binding relationship, wherein the first end-to-end path passes through the first backbone network ingress device and the first backbone network egress device.

3. The method according to claim 2, wherein the first information comprises one or more of the following:
a first segment identifier SID allocated by the first backbone network egress device for an adjacency relationship between the first backbone network egress device and the second site edge;
a second SID of the first backbone network egress device;
a routing priority of the first backbone network egress device;
a load balancing weight of the first backbone network egress device.

4. The method according to claim 3, wherein
the first SID is a segment routing over internet protocol version 6 endpoint segment identifier with cross-connect to an array of layer-3 adjacency relationships SRv6 END.X SID, and the second SID is a segment routing over internet protocol version 6 endpoint segment identifier SRv6 END.SID; or
the first SID is an adjacency segment identifier adj-SID, and the second SID is a node SID.

5. The method according to claim 3 or 4, wherein the second communication apparatus is the second site edge, the first route comprises a software-defined wide area network SD-WAN gateway information advertisement route, the SD-WAN gateway information advertisement route comprises at least one type length value TLV, and the at least one TLV carries the first information.

6. The method according to claim 5, wherein the SD-WAN gateway information advertisement route comprises a first TLV, a value value field in the first TLV is for carrying the first SID and/or the second SID in the first information, the first TLV further comprises a priority sub-TLV and/or a weight sub-TLV, the priority sub-TLV is for carrying the routing priority in the first information, and the weight sub-TLV is for carrying the load balancing weight in the first information.

7. The method according to any one of claims 2 to 4, wherein the second communication apparatus is the second site edge, and the first route comprises a virtual private network VPN route.

8. The method according to claim 7, wherein the VPN route comprises a first metadata path attribute metadata path attribute, and the first metadata path attribute carries the first information.

9. The method according to any one of claims 2 to 8, wherein the first route further comprises service intention information.

10. The method according to claim 9, wherein the service intention information comprises one or more of the following:
a gateway that needs to be comprised by the first end-to-end path, a gateway that needs to be excluded by the first end-to-end path, and a quality of service parameter.

11. The method according to claim 9 or 10, wherein the first route comprises a second metadata path attribute, and the second metadata path attribute comprises the service intention information.

12. The method according to any one of claims 1 to 4, wherein the second communication apparatus is the first backbone network egress device, and receiving the first route advertised by the second communication apparatus comprises:
receiving, via the first backbone network ingress device, the first route advertised by the first backbone network egress device.

13. The method according to claim 12, wherein the first route comprises a first SD-WAN gateway auto-discovery route.

14. The method according to any one of claims 1 to 13, wherein the method further comprises:
receiving a second route advertised by a third communication apparatus, wherein the second route comprises second information about a second backbone network egress device in the backbone network and the identifier of the second site edge, and the second site edge accesses the backbone network via the second backbone network egress device; and
obtaining a second binding relationship between the second site edge and the second backbone network egress device based on the second route.

15. The method according to claim 14, wherein the method further comprises:
determining routing priorities respectively corresponding to the first backbone network egress device and the second backbone network egress device;
and/or
determining load balancing weights respectively corresponding to the first backbone network egress device and the second backbone network egress device.

16. The method according to claim 14 or 15, wherein the method further comprises:
determining a second end-to-end path from the first site edge to the second site edge based on the second binding relationship, wherein the second end-to-end path passes through the first backbone network ingress device and the second backbone network egress device.

17. The method according to any one of claims 1 to 16, wherein the method further comprises:
receiving a third route sent by the first backbone network ingress device, wherein the third route is for advertising third information of the first backbone network ingress device; and
obtaining a third binding relationship between the first site edge and the first backbone network ingress device based on the third route.

18. The method according to claim 17, wherein the third route is a second SD-WAN gateway auto-discovery route or a BGP link state LS route.

19. The method according to claim 17, wherein the third information comprises:
a third SID allocated by the first backbone network ingress device for an adjacency relationship between the first backbone network ingress device and the first site edge and/or a fourth SID of the first backbone network ingress device.

20. The method according to claim 18 or 19, wherein the third route further comprises transit-gateway information, and the transit-gateway information indicates at least one transit gateway between the first backbone network ingress device and an egress device in the backbone network.

21. The method according to any one of claims 2 to 11, wherein the method comprises:
receiving a first service packet;
encapsulating path information of the first end-to-end path at an outer layer of the first service packet, to obtain a second service packet, wherein the path information of the first end-to-end path comprises fourth information identifying the first backbone network ingress device in the backbone network and fifth information identifying the first backbone network egress device in the backbone network, an ingress endpoint of the first end-to-end path is the first site edge, and an egress endpoint of the first end-to-end path is the second site edge; and
sending the second service packet through the first end-to-end path.

22. The method according to claim 11, wherein the first service packet is for carrying a virtual private network VPN service, and before receiving the first service packet, the method further comprises:
orchestrating, by the first site edge, the first end-to-end path from the first site edge to the second site edge by using the first backbone network ingress device and the first backbone network egress device on demand based on the VPN service.

23. The method according to claim 21 or 22, wherein the second service packet further comprises service intention information.

24. The method according to claim 23, wherein the service intention information is carried in a metadata metadata field in the second service packet.

25. The method according to any one of claims 21 to 24, wherein before encapsulating the path information of the first end-to-end path, the method further comprises:
determining, by the first site edge based on a destination address in the first service packet, that a next hop for forwarding the first service packet is the second site edge, and iterating a first segment routing policy SR policy based on an internet protocol IP address of the second site edge, to obtain the path information of the first end-to-end path.

26. The method according to any one of claims 21 to 25, wherein the first end-to-end path is an SRv6 tunnel, the second service packet comprises an IPv6 header and a segment routing header SRH, a destination address in the IPv6 header points to the first backbone network ingress device, and the SRH comprises the fourth information and the fifth information.

27. The method according to claim 26, wherein the fourth information is a first endpoint segment identifier END.SID 1 of the first backbone network ingress device, the fifth information is a second endpoint segment identifier END.SID 2 of the first backbone network egress device, and the SRH further comprises an IPv6 address of the second site edge.

28. The method according to claim 26, wherein the fourth information is a first endpoint segment identifier END.SID 1 of the first backbone network ingress device, and the fifth information is the endpoint segment identifier with cross-connect to an array of layer-3 adjacency relationships END.X SID allocated by the first backbone network egress device for the adjacency relationship between the first backbone network egress device and the second site edge.

29. The method according to claim 27 or 28, wherein an operation associated with the first endpoint segment identifier END.SID 1 comprises: matching an overlay overlay SRv6 policy from the first backbone network ingress device to the first backbone network egress device based on a next-hop SID of the END.SID 1.

30. The method according to claim 27 or 28, wherein when the second service packet comprises the service intention information, an operation associated with the first endpoint segment identifier END.SID 1 comprises: matching an overlay overlay SRv6 policy from the first backbone network ingress device to the first backbone network egress device based on a next-hop SID of the END.SID 1 and the service intention information.

31. The method according to any one of claims 21 to 25, wherein the first end-to-end path is in a segment routing-multiprotocol label switching traffic engineering policy SR-MPLS TE policy, the second service packet comprises an MPLS label stack, the MPLS label stack comprises the fourth information and the fifth information, the fourth information is a first node SID of the first backbone network ingress device, and the fifth information comprises a second node SID of the first backbone network egress device and the adjacency segment identifier adj-SID allocated by the first backbone network egress device for the adjacency relationship between the first backbone network egress device and the second site edge.

32. The method according to claim 31, wherein an operation associated with the first node SID comprises:
matching an overlay overlay SR-MPLS TE policy from the first backbone network ingress device to the first backbone network egress device based on a next-hop SID of the first node SID in the label stack.

33. The method according to claim 31, wherein when the second service packet comprises the service intention information, an operation associated with the first node SID comprises: matching an overlay overlay SR-MPLS TE policy from the first backbone network ingress device to the first backbone network egress device based on a next-hop SID of the first node SID in the label stack and the service intention information.

34. The method according to any one of claims 26 to 30, wherein the first end-to-end path is a tunnel encapsulated according to a generic network virtualization encapsulation GENEVE protocol, and SRv6 in GENEVE encapsulation is used for the second service packet.

35. The method according to any one of claims 36 to 30, wherein the first end-to-end path is a tunnel encapsulated according to a generic routing encapsulation GRE protocol, and SRv6 over GRE encapsulation is used for the second service packet.

36. The method according to claim 35, wherein the second service packet comprises:
an outer IP header, a user datagram protocol UDP header, outer GRE encapsulation, the IPv6 header, the SRH, inner GRE encapsulation, and a payload, wherein the payload comprises the first service packet, and the inner GRE encapsulation comprises a VPN identifier of the VPN service carried in the first service packet.

37. The method according to any one of claims 21 to 36, wherein the method further comprises:
receiving a third service packet;
encapsulating path information of a third end-to-end path at an outer layer of the third service packet, to obtain a fourth service packet, wherein the path information of the third end-to-end path comprises sixth information identifying a second backbone network ingress device in the backbone network and seventh information identifying a second backbone network egress device in the backbone network, an ingress endpoint of the third end-to-end path is the first site edge, an egress endpoint of the third end-to-end path is the second site edge, the third end-to-end path passes through the second backbone network ingress device and the second backbone network egress device, the first site edge is multi-homed to the first backbone network ingress device and the second backbone network ingress device, and the second site edge is multi-homed to the first backbone network egress device and the second backbone network egress device; and
sending, by the first site edge, the fourth service packet through the third end-to-end path.

38. The method according to any one of claims 21 to 37, wherein the first site edge accesses the first backbone network ingress device through a software-defined wide area network SD-WAN tunnel or the internet internet.

39. An information advertisement method, applied to a second communication apparatus, wherein the method comprises:
obtaining a first route, wherein the first route comprises first information about a first backbone network egress device in a backbone network and an identifier of a second site edge, and the second site edge accesses the backbone network via the first backbone network egress device; and
advertising the first route to a first site edge, wherein the first site edge accesses the backbone network via a first backbone network ingress device.

40. The method according to claim 39, wherein the first information comprises one or more of the following:
a first segment identifier SID allocated by the first backbone network egress device for an adjacency relationship between the first backbone network egress device and the second site edge;
a second SID of the first backbone network egress device;
a routing priority of the first backbone network egress device; and
a load balancing weight of the first backbone network egress device.

41. The method according to claim 40, wherein
the first SID is a segment routing over internet protocol version 6 endpoint segment identifier with cross-connect to an array of layer-3 adjacency relationships SRv6 END.X SID, and the second SID is a segment routing over internet protocol version 6 endpoint segment identifier SRv6 END. SID;
or
the first SID is an adjacency segment identifier adj-SID, and the second SID is a node SID.

42. The method according to claim 40 or 41, wherein the second communication apparatus is the second site edge, the first route comprises a software-defined wide area network SD-WAN gateway information advertisement route, the SD-WAN gateway information advertisement route comprises at least one type length value TLV, and the at least one TLV carries the first information.

43. The method according to claim 42, wherein the SD-WAN gateway information advertisement route comprises a first TLV, a value value field in the first TLV is for carrying the first SID and/or the second SID in the first information, the first TLV further comprises a priority sub-TLV and/or a weight sub-TLV, the priority sub-TLV is for carrying the routing priority in the first information, and the weight sub-TLV is for carrying the load balancing weight in the first information.

44. The method according to claim 40 or 41, wherein the second communication apparatus is the second site edge, and the first route comprises a virtual private network VPN route.

45. The method according to claim 44, wherein the VPN route comprises a first metadata path attribute metadata path attribute, and the first metadata path attribute carries the first information.

46. The method according to any one of claims 39 to 45, wherein the first route further comprises service intention information.

47. The method according to claim 46, wherein the service intention information comprises one or more of the following:
a gateway that needs to be comprised for transmission of service traffic, a gateway that needs to be excluded for transmission of the service traffic, and a quality of service parameter that needs to be satisfied for transmission of the service traffic.

48. The method according to claim 46 or 47, wherein the first route comprises a second metadata path attribute, and the second metadata path attribute comprises the service intention information.

49. The method according to any one of claims 39 to 41, wherein the second communication apparatus is the first backbone network egress device, and advertising the first route to the first site edge comprises:
advertising the first route to the first site edge via the first backbone network ingress device.

50. The method according to claim 49, wherein the first route comprises a first SD-WAN gateway auto-discovery route.

51. The method according to any one of claims 42 to 45, wherein the method further comprises:
advertising a second route to the first site edge, wherein the second route comprises second information about a second backbone network egress device in the backbone network and the identifier of the second site edge, and the second site edge accesses the backbone network via the second backbone network egress device.

52. The method according to any one of claims 42 to 45, wherein the method further comprises:
receiving a third route sent by the first backbone network egress device, wherein the third route is for advertising third information of the first backbone network egress device; and
obtaining a first binding relationship between the second site edge and the first backbone network egress device based on the third route.

53. The method according to claim 52, wherein the third information comprises a third SID allocated by the first backbone network egress device for the adjacency relationship between the first backbone network egress device and the second site edge and/or a fourth SID of the first backbone network egress device.

54. The method according to claim 52 or 53, wherein the method further comprises:
receiving a fourth route sent by a second backbone network egress device, wherein the fourth route is for advertising fourth information of the second backbone network egress device; and
obtaining a second binding relationship between the second site edge and the second backbone network egress device based on the fourth route.

55. The method according to claim 54, wherein the method further comprises:
determining routing priorities respectively corresponding to the first backbone network egress device and the second backbone network egress device;
and/or
determining load balancing weights respectively corresponding to the first backbone network egress device and the second backbone network egress device.

56. The method according to any one of claims 52 to 55, wherein the third route is a second SD-WAN gateway auto-discovery route.

57. The method according to any one of claims 52 to 55, wherein the third route is a BGP link state LS route, the BGP-LS route comprises a second TLV, and the second TLV indicates that the third route is for advertising the third information of the first backbone network egress device.

58. The method according to claim 57, wherein the second TLV is a role advertisement TLV, and the role advertisement TLV indicates that a role of the first backbone network egress device is a gateway.

59. The method according to any one of claims 52 to 58, wherein the third route further comprises transit-gateway information, and the transit-gateway information indicates at least one transit gateway between a backbone network ingress device in the backbone network and the first backbone network egress device.

60. The method according to claim 59, wherein the third route comprises a third metadata path attribute, and the third metadata path attribute carries the transit-gateway information.

61. The method according to claim 59 or 60, wherein the method further comprises:
determining gateway constraint information in service intention information based on the transit-gateway information, wherein the gateway constraint information indicates to determine a gateway constraint condition that needs to be followed by a path to the second site edge.

62. The method according to claim 61, wherein the gateway constraint condition comprises:
a gateway that needs to be comprised, and/or a gateway that needs to be excluded.

63. An information advertisement method, applied to a first backbone network ingress device in a backbone network, wherein the method comprises:
receiving a first route advertised by a first backbone network egress device in the backbone network, wherein the first route comprises information about the first backbone network egress device and an identifier of a second site edge, the second site edge accesses the backbone network via the first backbone network egress device, and a first site edge accesses the backbone network via the first backbone network ingress device; and
advertising the first route to the first site edge.

64. The method according to claim 63, wherein the method further comprises:
receiving a second service packet from the first site edge, wherein a payload in the second service packet comprises a first service packet, path information of an end-to-end path between the first site edge and the second site edge is encapsulated at an outer layer of the first service packet, the path information of the end-to-end path comprises first information identifying the first backbone network ingress device and second information identifying the first backbone network egress device in the backbone network, an ingress endpoint of the end-to-end path is the first site edge, an egress endpoint of the end-to-end path is the second site edge, the end-to-end path passes through the first backbone network ingress device and the first backbone network egress device, the first site edge accesses the backbone network via the first backbone network ingress device, and the second site edge accesses the backbone network via the first backbone network egress device;
processing the second service packet based on the first information, to obtain a third service packet; and
sending, by the first backbone network ingress device, the third service packet to the first backbone network egress device.

65. The method according to claim 64, wherein the second service packet further comprises service intention information.

66. The method according to claim 65, wherein the service intention information is carried in a metadata metadata field in the second service packet.

67. The method according to any one of claims 64 to 66, wherein the end-to-end path is an SRv6 tunnel, the second service packet comprises an IPv6 header and a segment routing header SRH, a destination address in the IPv6 header points to the first backbone network ingress device, and the SRH comprises the first information and the second information.

68. The method according to claim 67, wherein the first information is a first endpoint segment identifier END.SID 1 allocated by the first backbone network ingress device, the second information is a second endpoint segment identifier END.SID 2 allocated by the first backbone network egress device, and the SRH further comprises an IPv6 address of the second site edge.

69. The method according to claim 67, wherein the first information is a first endpoint segment identifier END.SID 1 of the first backbone network ingress device, and the second information is an endpoint segment identifier with cross-connect to an array of layer-3 adjacency relationships END.X SID allocated by the first backbone network egress device for an adjacency relationship between the first backbone network egress device and the second site edge.

70. The method according to claim 68 or 69, wherein an operation associated with the first endpoint segment identifier END.SID 1 comprises: matching an overlay overlay SRv6 policy from the first backbone network ingress device to the first backbone network egress device based on a next-hop SID of the END.SID 1 in the SRH.

71. The method according to claim 68 or 69, wherein when the second service packet comprises the service intention information, an operation associated with the first endpoint segment identifier END.SID 1 comprises: matching an overlay overlay SRv6 policy from the first backbone network ingress device to the first backbone network egress device based on a next-hop SID of the END.SID 1 in the SRH and the service intention information.

72. The method according to claim 70, wherein processing the second service packet based on the first information, to obtain the third service packet comprises:
matching a first overlay SRv6 policy from the first backbone network ingress device to the first backbone network egress device based on the next-hop SID of the END.SID 1 in the SRH; and
encapsulating the second service packet by using the first overlay SRv6 policy, to obtain the third service packet.

73. The method according to claim 71, wherein processing the second service packet based on the first information, to obtain the third service packet comprises:
matching a second overlay SRv6 policy from the first backbone network ingress device to the first backbone network egress device based on the next-hop SID of the END.SID 1 in the SRH and the service intention information; and
encapsulating the second service packet by using the second overlay SRv6 policy, to obtain the third service packet.

74. The method according to any one of claims 64 to 66, wherein the end-to-end path is a segment routing-multiprotocol label switching traffic engineering policy SR-MPLS TE policy, the second service packet comprises an MPLS label stack, the MPLS label stack comprises the first information and the second information, the first information is a first node SID of the first backbone network ingress device, and the second information comprises a second node SID of the first backbone network egress device and an adjacency segment identifier adj-SID allocated by the first backbone network egress device for an adjacency relationship between the first backbone network egress device and the second site edge.

75. The method according to claim 74, wherein an operation associated with the first node SID comprises:
matching an overlay overlay SR-MPLS TE policy from the first backbone network ingress device to the first backbone network egress device based on a next-hop SID of the first node SID in the label stack.

76. The method according to claim 74, wherein when the second service packet comprises the service intention information, an operation associated with the first node SID comprises: matching an overlay overlay SR-MPLS TE policy from the first backbone network ingress device to the first backbone network egress device based on a next-hop SID of the first node SID in the label stack and the service intention information.

77. The method according to claim 75, wherein processing the second service packet based on the first information, to obtain the third service packet comprises:
matching a first overlay SR-MPLS TE policy from the first backbone network ingress device to the first backbone network egress device based on the next-hop SID of the first node SID in the label stack; and
encapsulating the second service packet by using the first overlay SR-MPLS TE policy, to obtain the third service packet.

78. The method according to claim 76, wherein processing the second service packet based on the first information, to obtain the third service packet comprises:
matching a second overlay SR-MPLS TE policy from the first backbone network ingress device to the first backbone network egress device based on the next-hop SID of the first node SID in the label stack and the service intention information; and
encapsulating the second service packet by using the second overlay SR-MPLS TE policy, to obtain the third service packet.

79. The method according to any one of claims 67 to 73, wherein the end-to-end path is a tunnel encapsulated according to a generic network virtualization encapsulation GENEVE protocol, and SRv6 in GENEVE encapsulation is used for the second service packet.

80. The method according to any one of claims 67 to 73, wherein the end-to-end path is a tunnel encapsulated according to a generic routing encapsulation GRE protocol, and SRv6 over GRE encapsulation is used for the second service packet.

81. The method according to claim 80, wherein the second service packet comprises:
an outer IP header, a user datagram protocol UDP header, outer GRE encapsulation, the IPv6 header, the SRH, inner GRE encapsulation, and the payload, wherein the payload comprises the first service packet, and the inner GRE encapsulation comprises a VPN identifier of a VPN service carried in the first service packet.

82. The method according to any one of claims 64 to 81, wherein the first site edge accesses the first backbone network ingress device through a software-defined wide area network SD-WAN tunnel or an internet.

83. A communication apparatus, wherein the apparatus comprises:
a transceiver unit and a processing unit, wherein
the transceiver unit is configured to perform the receiving operation and/or the sending operation performed by the first communication apparatus according to any one of claims 1 to 38, and the processing unit is configured to perform the operation other than the receiving operation and/or the sending operation performed by the first communication apparatus according to any one of claims 1 to 38;
or
the transceiver unit is configured to perform the receiving operation and/or the sending operation performed by the second communication apparatus according to any one of claims 39 to 62, and the processing unit is configured to perform the operation other than the receiving operation and/or the sending operation performed by the second communication apparatus according to any one of claims 39 to 62;
or
the transceiver unit is configured to perform the receiving operation and/or the sending operation performed by the first backbone network ingress device according to any one of claims 63 to 82, and the processing unit is configured to perform the operation other than the receiving operation and/or the sending operation performed by the first backbone network ingress device according to any one of claims 63 to 82.

84. A communication apparatus, comprising a processor and a memory, wherein
the memory is configured to store instructions; and
the processor is configured to execute the instructions, to enable the communication apparatus to perform the method according to any one of claims 1 to 82.

85. A communication system, wherein the system comprises:
the first communication apparatus for performing the method according to any one of claims 1 to 38 and the second communication apparatus for performing the method according to any one of claims 39 to 62;
or
the first communication apparatus for performing the method according to any one of claims 1 to 38 and the first backbone network ingress device for performing the method according to any one of claims 63 to 82.

86. A computer-readable storage medium, comprising instructions or a computer program, wherein when the instructions or the computer program is run on a processor, the method according to any one of claims 1 to 82 is implemented.

87. A traffic forwarding method, wherein the method comprises:
receiving, by a first site edge, a first service packet;
encapsulating, by the first site edge, path information of a first end-to-end path at an outer layer of the first service packet, to obtain a second service packet, wherein the path information of the first end-to-end path comprises first information identifying a first backbone network ingress device in a backbone network and second information identifying a first backbone network egress device in the backbone network, an ingress endpoint of the first end-to-end path is the first site edge, an egress endpoint of the first end-to-end path is a second site edge, the first end-to-end path passes through the first backbone network ingress device and the first backbone network egress device, the first site edge accesses the backbone network via the first backbone network ingress device, and the second site edge accesses the backbone network via the first backbone network egress device; and
sending, by the first site edge, the second service packet through the first end-to-end path.

88. The method according to claim 87, wherein the first service packet is for carrying a virtual private network VPN service, and before receiving the first service packet, the method further comprises:
orchestrating, by the first site edge, the first end-to-end path from the first site edge to the second site edge by using the first backbone network ingress device and the first backbone network egress device on demand based on the VPN service.

89. The method according to claim 87 or 88, wherein the second service packet further comprises service intention information.

90. The method according to claim 89, wherein the service intention information is carried in a metadata metadata field in the second service packet.

91. The method according to any one of claims 87 to 90, wherein before encapsulating the path information of the first end-to-end path, the method further comprises:
determining, by the first site edge based on a destination address in the first service packet, that a next hop for forwarding the first service packet is the second site edge, and iterating a first segment routing policy SR policy based on an internet protocol IP address of the second site edge, to obtain the path information of the first end-to-end path.

92. The method according to any one of claims 87 to 91, wherein the first end-to-end path is an SRv6 tunnel, the second service packet comprises an internet protocol version 6 IPv6 header and a segment routing header SRH, a destination address in the IPv6 header points to the first backbone network ingress device, and the SRH comprises the first information and the second information.

93. The method according to claim 92, wherein the first information is a first endpoint segment identifier END.SID 1 of the first backbone network ingress device, the second information is a second endpoint segment identifier END.SID 2 of the first backbone network egress device, and the SRH further comprises an IPv6 address of the second site edge.

94. The method according to claim 92, wherein the first information is a first endpoint segment identifier END.SID 1 of the first backbone network ingress device, and the second information is an endpoint segment identifier with cross-connect to an array of layer-3 adjacency relationships END.X SID allocated by the first backbone network egress device for an adjacency relationship between the first backbone network egress device and the second site edge.

95. The method according to claim 93 or 94, wherein an operation associated with the first endpoint segment identifier END.SID 1 comprises: matching an overlay overlay SRv6 policy from the first backbone network ingress device to the first backbone network egress device based on a next-hop SID of the END.SID 1.

96. The method according to claim 93 or 94, wherein when the second service packet comprises the service intention information, an operation associated with the first endpoint segment identifier END.SID 1 comprises: matching an overlay overlay SRv6 policy from the first backbone network ingress device to the first backbone network egress device based on a next-hop SID of the END.SID 1 and the service intention information.

97. The method according to any one of claims 87 to 91, wherein the first end-to-end path is a segment routing-multiprotocol label switching traffic engineering policy SR-MPLS TE policy, the second service packet comprises an MPLS label stack, the MPLS label stack comprises the first information and the second information, the first information is a first node SID of the first backbone network ingress device, and the second information comprises a second node SID of the first backbone network egress device and an adjacency segment identifier adj-SID allocated by the first backbone network egress device for an adjacency relationship between the first backbone network egress device and the second site edge.

98. The method according to claim 97, wherein an operation associated with the first node SID comprises:
matching an overlay overlay SR-MPLS TE policy from the first backbone network ingress device to the first backbone network egress device based on a next-hop SID of the first node SID in the label stack.

99. The method according to claim 97, wherein when the second service packet comprises the service intention information, an operation associated with the first node SID comprises: matching an overlay overlay SR-MPLS TE policy from the first backbone network ingress device to the first backbone network egress device based on a next-hop SID of the first node SID in the label stack and the service intention information.

100. The method according to any one of claims 92 to 96, wherein the first end-to-end path is a tunnel encapsulated according to a generic network virtualization encapsulation GENEVE protocol, and SRv6 in GENEVE encapsulation is used for the second service packet.

101. The method according to any one of claims 92 to 96, wherein the first end-to-end path is a tunnel encapsulated according to a generic routing encapsulation GRE protocol, and SRv6 over GRE encapsulation is used for the second service packet.

102. The method according to claim 101, wherein the second service packet comprises:
an outer IP header, a user datagram protocol UDP header, outer GRE encapsulation, the IPv6 header, the SRH, inner GRE encapsulation, and a payload, wherein the payload comprises the first service packet, and the inner GRE encapsulation comprises a VPN identifier of the VPN service carried in the first service packet.

103. The method according to any one of claims 87 to 102, wherein the method further comprises:
receiving, by the first site edge, a third service packet;
encapsulating, by the first site edge, path information of a second end-to-end path at an outer layer of the third service packet, to obtain a fourth service packet, wherein the path information of the second end-to-end path comprises third information identifying a second backbone network ingress device in the backbone network and fourth information identifying a second backbone network egress device in the backbone network, an ingress endpoint of the second end-to-end path is the first site edge, an egress endpoint of the second end-to-end path is the second site edge, the second end-to-end path passes through the second backbone network ingress device and the second backbone network egress device, the first site edge is multi-homed to the first backbone network ingress device and the second backbone network ingress device, and the second site edge is multi-homed to the first backbone network egress device and the second backbone network egress device; and
sending, by the first site edge, the fourth service packet through the second end-to-end path.

104. The method according to any one of claims 87 to 103, wherein the first site edge accesses the first backbone network ingress device through a software-defined wide area network SD-WAN tunnel or the internet internet.

105. A traffic forwarding method, wherein the method comprises:
receiving, by a first backbone network ingress device in a backbone network, a second service packet from a first site edge, wherein a payload in the second service packet comprises a first service packet, path information of an end-to-end path between the first site edge and a second site edge is encapsulated at an outer layer of the first service packet, the path information of the end-to-end path comprises first information identifying the first backbone network ingress device and second information identifying a first backbone network egress device in the backbone network, an ingress endpoint of the end-to-end path is the first site edge, an egress endpoint of the end-to-end path is the second site edge, the end-to-end path passes through the first backbone network ingress device and the first backbone network egress device, the first site edge accesses the backbone network via the first backbone network ingress device, and the second site edge accesses the backbone network via the first backbone network egress device;
processing, by the first backbone network ingress device, the second service packet based on the first information, to obtain a third service packet; and
sending, by the first backbone network ingress device, the third service packet to the first backbone network egress device.

106. The method according to claim 105, wherein the second service packet further comprises service intention information.

107. The method according to claim 106, wherein the service intention information is carried in a metadata metadata field in the second service packet.

108. The method according to any one of claims 105 to 107, wherein the end-to-end path is an SRv6 tunnel, the second service packet comprises an internet protocol version 6 IPv6 header and a segment routing header SRH, a destination address in the IPv6 header points to the first backbone network ingress device, and the SRH comprises the first information and the second information.

109. The method according to claim 108, wherein the first information is a first endpoint segment identifier END.SID 1 allocated by the first backbone network ingress device, the second information is a second endpoint segment identifier END.SID 2 allocated by the first backbone network egress device, and the SRH further comprises an IPv6 address of the second site edge.

110. The method according to claim 108, wherein the first information is a first endpoint segment identifier END.SID 1 of the first backbone network ingress device, and the second information is an endpoint segment identifier with cross-connect to an array of layer-3 adjacency relationships END.X SID allocated by the first backbone network egress device for an adjacency relationship between the first backbone network egress device and the second site edge.

111. The method according to claim 109 or 110, wherein an operation associated with the first endpoint segment identifier END.SID 1 comprises: matching an overlay overlay SRv6 policy from the first backbone network ingress device to the first backbone network egress device based on a next-hop SID of the END.SID 1 in the SRH.

112. The method according to claim 109 or 110, wherein when the second service packet comprises the service intention information, an operation associated with the first endpoint segment identifier END.SID 1 comprises: matching an overlay overlay SRv6 policy from the first backbone network ingress device to the first backbone network egress device based on a next-hop SID of the END.SID 1 in the SRH and the service intention information.

113. The method according to claim 111, wherein processing the second service packet based on the first information, to obtain the third service packet comprises:
matching a first overlay SRv6 policy from the first backbone network ingress device to the first backbone network egress device based on the next-hop SID of the END.SID 1 in the SRH; and
encapsulating the second service packet by using the first overlay SRv6 policy, to obtain the third service packet.

114. The method according to claim 111, wherein processing the second service packet based on the first information, to obtain the third service packet comprises:
matching a second overlay SRv6 policy from the first backbone network ingress device to the first backbone network egress device based on the next-hop SID of the END.SID 1 in the SRH and the service intention information; and
encapsulating the second service packet by using the second overlay SRv6 policy, to obtain the third service packet.

115. The method according to any one of claims 105 to 107, wherein the end-to-end path is in a segment routing-multiprotocol label switching traffic engineering policy SR-MPLS TE policy, the second service packet comprises an MPLS label stack, the MPLS label stack comprises the first information and the second information, the first information is a first node SID of the first backbone network ingress device, and the second information comprises a second node SID of the first backbone network egress device and an adjacency segment identifier adj-SID allocated by the first backbone network egress device for an adjacency relationship between the first backbone network egress device and the second site edge.

116. The method according to claim 115, wherein an operation associated with the first node SID comprises:
matching an overlay overlay SR-MPLS TE policy from the first backbone network ingress device to the first backbone network egress device based on a next-hop SID of the first node SID in the label stack.

117. The method according to claim 115, wherein when the second service packet comprises the service intention information, an operation associated with the first node SID comprises: matching an overlay overlay SR-MPLS TE policy from the first backbone network ingress device to the first backbone network egress device based on a next-hop SID of the first node SID in the label stack and the service intention information.

118. The method according to claim 116, wherein processing the second service packet based on the first information, to obtain the third service packet comprises:
matching a first overlay SR-MPLS TE policy from the first backbone network ingress device to the first backbone network egress device based on the next-hop SID of the first node SID in the label stack; and
encapsulating the second service packet by using the first overlay SR-MPLS TE policy, to obtain the third service packet.

119. The method according to claim 117, wherein processing the second service packet based on the first information, to obtain the third service packet comprises:
matching a second overlay SR-MPLS TE policy from the first backbone network ingress device to the first backbone network egress device based on the next-hop SID of the first node SID in the label stack and the service intention information; and
encapsulating the second service packet by using the second overlay SR-MPLS TE policy, to obtain the third service packet.

120. The method according to any one of claims 108 to 114, wherein the end-to-end path is a tunnel encapsulated according to a generic network virtualization encapsulation GENEVE protocol, and SRv6 in GENEVE encapsulation is used for the second service packet.

121. The method according to any one of claims 108 to 114, wherein the end-to-end path is a tunnel encapsulated according to a generic routing encapsulation GRE protocol, and SRv6 over GRE encapsulation is used for the second service packet.

122. The method according to claim 121, wherein the second service packet comprises:
an outer IP header, a user datagram protocol UDP header, outer GRE encapsulation, the IPv6 header, the SRH, inner GRE encapsulation, and the payload, wherein the payload comprises the first service packet, and the inner GRE encapsulation comprises a VPN identifier of a VPN service carried in the first service packet.

123. The method according to any one of claims 105 to 123, wherein the first site edge accesses the first backbone network ingress device through a software-defined wide area network SD-WAN tunnel or an internet.

124. A communication apparatus, wherein the apparatus comprises:
a transceiver unit and a processing unit, wherein
the transceiver unit is configured to perform the receiving operation and/or the sending operation performed by the first site edge according to any one of claims 87 to 104, and the processing unit is configured to perform the operation other than the receiving operation and/or the sending operation performed by the first site edge according to any one of claims 87 to 104;
or
the transceiver unit is configured to perform the receiving operation and/or the sending operation performed by the first backbone network ingress device according to any one of claims 105 to 123, and the processing unit is configured to perform the operation other than the receiving operation and/or the sending operation performed by the first backbone network ingress device according to any one of claims 105 to 123.

125. A communication apparatus, comprising a processor and a memory, wherein
the memory is configured to store instructions; and
the processor is configured to execute the instructions, to enable the communication apparatus to perform the method according to any one of claims 87 to 123.

126. A communication system, wherein the system comprises:
the first site edge for performing the method according to any one of claims 87 to 104 and the first backbone network ingress device for performing the method according to any one of claims 105 to 123.

127. A computer-readable storage medium, comprising instructions or a computer program, wherein when the instructions or the computer program is run on a processor, the method according to any one of claims 87 to 123 is implemented.

128. A computer program product, comprising a computer program, wherein when the computer program is run on a processor, the method according to any one of claims 1 to 82 or any one of claims 87 to 123 is performed.
